# EUROPEAN PATENT APPLICATION

(11) **EP 4 661 415 A1**
(43) Date of publication of application: **10.12.2025**
(21) Application number: 24750583.7
(22) Date of filing: 01.02.2024
(51) Int. Cl.: H04N 23/68, H04N 23/54, H04N 23/55, G03B 5/04, G03B 5/06

(54) **CAMERA DEVICE AND OPTICAL INSTRUMENT**

(30) Priority: 03.02.2023 KR 20230014777; 03.02.2023 KR 20230014778
(71) Applicant: LG INNOTEK CO. LTD, Gangseo-gu Seoul 07796 (KR)
(72) Inventor: LEE, Sungguk, Seoul 07796 (KR)
(74) Representative: DREISS Patentanwälte PartG mbB
(86) International application number: PCT/KR2024/001519
(87) International publication number: WO 2024/162786

(57) **Abstract**

Disclosed is a camera device including a stationary unit, a moving plate disposed on the stationary unit, a first moving unit disposed on the moving plate, the first moving unit including an image sensor, a second moving unit disposed in the first moving unit, the second moving unit being movable in an optical-axis direction, a ball member disposed between the first moving unit and the second moving unit, the ball member being configured to support the second moving unit, and a first driving unit configured to tilt the first moving unit and the second moving unit about a first axis perpendicular to the optical-axis direction or a second axis perpendicular to the optical-axis direction and the first axis.

## Description

### [Technical Field]

Embodiments relate to a camera device and an optical instrument including the same.

### [Background Art]

Camera devices are devices that take pictures or videos of subjects, and are mounted in portable devices, drones, vehicles, and the like. In order to improve the quality of an image, a camera device may have an image stabilization (IS) function of correcting or preventing shaking of an image caused by movement of a user, e.g., an optical image stabilization (OIS) function, and an autofocus (AF) function.

### [Disclosure]

### [Technical Problem]

Embodiments provide a camera device capable of obtaining 100% image resolution without image distortion and performing hand-tremor compensation or shake compensation at wide angles and an optical instrument including the same.

Further, embodiments provide a camera device capable of performing broadband shake compensation and an optical instrument including the same.

Further, embodiments provide a camera device capable of reducing power consumption when OIS is performed and an optical instrument including the same.

Further, embodiments provide a camera device configured such that the height or length of the camera device in an optical-axis direction is reduced and an optical instrument including the same.

Further, embodiments provide a camera device capable of increasing attraction force or retention force necessary to support an OIS motion unit and an optical instrument including the same.

### [Technical Solution]

A camera device according to an embodiment includes a stationary unit, a moving plate disposed on the stationary unit, a first moving unit disposed on the moving plate, the first moving unit including an image sensor, a second moving unit disposed in the first moving unit, the second moving unit being movable in an optical-axis direction, a ball member disposed between the first moving unit and the second moving unit, the ball member being configured to support the second moving unit, and a first driving unit configured to tilt the first moving unit and the second moving unit about a first axis perpendicular to the optical-axis direction or a second axis perpendicular to the optical-axis direction and the first axis.

The first moving unit may include a holder, the second moving unit may include a bobbin disposed in the holder, and the ball member may be disposed between the holder and the bobbin.

The holder may include a first recess in which at least a part of the ball member is disposed, and the bobbin may include a second recess in which at least another part of the ball member is disposed.

The camera device may include a second driving unit including a magnet disposed on the bobbin and a coil configured to move the bobbin in the optical-axis direction by interaction with the magnet.

The ball member may include a first ball member and a second ball member, and the magnet may be disposed between the first ball member and the second ball member.

The first moving unit may include a sensor base disposed under the holder and a circuit board disposed on the sensor base, and the image sensor may be disposed on the circuit board.

The camera device may include a first rolling member disposed between the sensor base and the moving plate and a second rolling member disposed between the stationary unit and the moving plate.

The camera device may include a magnet disposed on the sensor base and a magnetic material disposed on the stationary unit, the magnetic material being opposite the magnet in the optical-axis direction.

The moving plate may include a through-hole, and at least a part of the magnet may be disposed in the through-hole of the moving plate.

The sensor base may include a protrusion at least partially disposed in the through-hole of the moving plate, and the magnet may be disposed in the protrusion of the sensor base.

The sensor base may include a seating portion depressed from a lower surface thereof, and at least a part of the moving plate may be disposed in the seating portion of the sensor base.

The first rolling member may include first ball members disposed spaced apart from each other in a direction parallel to the first axis, and the second rolling member may include second ball members disposed spaced apart from each other in a direction parallel to the second axis.

The first driving unit may include a first coil unit and a second coil unit disposed on the circuit board and a first magnet unit and a second magnet unit disposed on the stationary unit, the first magnet unit being opposite the first coil unit, the second magnet unit being opposite the second coil unit.

The circuit board may include a first substrate disposed on the sensor base, a second substrate connected to the first substrate, the second substrate being disposed on a side portion of the holder, a third substrate on which a connector is disposed, and a fourth substrate configured to connect the third substrate and the second substrate to each other, and the first coil unit and the second coil unit may be disposed on the second substrate.

The sensor base may include a protrusion protruding from an upper surface thereof, and the holder may include a recess coupled to the protrusion of the sensor base.

A camera device according to another embodiment includes a stationary unit, a moving unit including an image sensor and a lens disposed opposite the image sensor in an optical-axis direction, a moving plate disposed between the stationary unit and the moving unit, and a driving unit including a coil disposed on the stationary unit and a first magnet disposed opposite the coil in the optical-axis direction, wherein the driving unit may tilt the moving unit about a first axis perpendicular to the optical-axis direction or a second axis perpendicular to the optical-axis direction and the first axis by interaction between the coil and the first magnet. The first magnet may include an N pole and an S pole disposed in the optical-axis direction.

The stationary unit may include a housing configured to receive the moving unit, and a seating recess in which the first magnet is disposed may be disposed in a lower portion of the housing.

The camera device may include a second magnet disposed on the stationary unit and a magnetic material disposed on the moving unit, the magnetic material being opposite the second magnet in the optical-axis direction. The magnetic material may be a magnet or a yoke disposed such that attractive force acts between the magnetic material and the second magnet.

The moving plate may include a through-hole, and at least a part of the second magnet may be disposed in the through-hole of the moving plate.

The stationary unit may include a protrusion at least partially disposed in the through-hole of the moving plate, and the second magnet may be disposed in the protrusion of the stationary unit.

The stationary unit may include a seating portion on which at least a part of the moving plate is disposed.

The moving plate may include a first boss projecting toward the moving unit, the first boss being in contact with the moving unit, and a second boss projecting toward the stationary unit, the second boss being in contact with the stationary unit. The first boss may include first bosses disposed spaced apart from each other, and the second boss may include second bosses disposed spaced apart from each other.

The moving unit may include a recess in which at least a part of the first boss is disposed, and the stationary unit may include a recess in which at least a part of the second boss is disposed.

The coil may include a first coil unit and a second coil unit, and the first magnet may include a first magnet unit opposite the first coil unit in the optical-axis direction and a second magnet unit opposite the second coil unit in the optical-axis direction. The moving plate may be tilted about the first axis or the second axis. Attractive force may act between the second magnet and the magnetic material. At least a part of the first magnet unit may overlap the moving plate in a direction parallel to the first axis, and at least a part of the second magnet unit may overlap the moving plate in a direction parallel to the second axis. The second magnet may overlap the moving plate in a direction perpendicular to the optical-axis direction.

### [Advantageous Effects]

As is apparent from the above description, in an embodiment, an OIS motion unit includes a lens module and an image sensor, whereby the lens module and the image sensor may be simultaneously tilted or rotated together when OIS is performed, 100% image resolution without image distortion may be obtained, and hand-tremor compensation or shake compensation at wide angles may be possible.

Also, in the embodiment, since the OIS motion unit including the lens module and the image sensor is tilted or rotated, broadband shake compensation may be possible.

Also, in the embodiment, since distortion-free image compensation is mechanically possible, load during image processing may be low, whereby current consumption may be reduced.

Also, in the embodiment, since a moving plate is used to tilt the OIS motion unit, the OIS motion unit may be stably, precisely, and accurately tilted, when compared to an example using only a ball member or a shaft member, thereby improving the reliability of OIS operation.

Also, in the embodiment, power consumption required to perform OIS may be reduced by a bent portion and a third portion of a fourth substrate, which is a flexible substrate, of a circuit board.

Also, in the embodiment, since the moving plate is disposed in a seating portion of a sensor base and a protrusion of the sensor base overlaps an opening of the moving plate, the height or length of a camera device in an optical-axis direction may be reduced.

Also, in the embodiment, since at least a part of a magnetic material is disposed in the opening of the moving plate, attraction force or retention force necessary to support the OIS motion unit may be increased, whereby stable OIS operation may be performed.

Also, in the embodiment, since a driving magnet for hand-tremor compensation is disposed on a lower portion of a housing rather than on a side portion of the housing, the thickness of the side portion of the housing may be reduced, thereby enabling the camera apparatus to be designed for mounting a large-aperture lens.

Also, in the embodiment, since the driving magnet for hand-tremor compensation is disposed on the lower portion of the housing, the camera device may be designed such that the length of the camera device in the optical-axis direction is reduced without being constrained by the length of the driving magnet in the optical-axis direction.

### [Description of Drawings]

FIG. 1 is a perspective view of a camera device according to an embodiment;
FIG. 2A is a first exploded perspective view of the camera device of FIG. 1;
FIG. 2B is a second exploded perspective view of the camera device of FIG. 1;
FIG. 3 is a perspective view of the camera device excluding a cover member;
FIG. 4A is a sectional view of the camera device in direction AB of FIG. 3;
FIG. 4B is a sectional view of the camera device in direction CD of FIG. 3;
FIG. 4C is a sectional view of the camera device in direction EF of FIG. 3;
FIG. 4D is a sectional view of the camera device in direction GH of FIG. 3;
FIG. 4E is a sectional view showing a boss of the cover member;
FIG. 5 is an exploded perspective view of a bobbin, a rolling member, and a magnet;
FIG. 6 is a separated perspective view of the bobbin, a holder, a circuit board, a sensor base, and a housing;
FIG. 7A is a first separated perspective view of the holder, a filter, the circuit board, and the sensor base;
FIG. 7B is a second separated perspective view of the holder, the filter, the circuit board, and the sensor base;
FIG. 7C is a coupled perspective view of the sensor base and the circuit board;
FIG. 8 is a perspective view of the holder, the rolling member, a coil, a position sensor, the circuit board, and the housing;
FIG. 9A is a front perspective view of a moving plate;
FIG. 9B is a rear perspective view of the moving plate;
FIG. 10A is an isolated perspective view of the housing, magnets, a magnetic material, and a movement inhibition portion;
FIG. 10B is a coupled perspective view of the housing, the rolling member, the magnets, the magnetic material, and the movement inhibition portion;
FIG. 11 is a perspective view of the cover member, the sensor base, the holder, the circuit board, the magnet, the rolling member, the moving plate, and a reinforcement member;
FIG. 12 is a perspective view of the housing, the magnetic material, the magnets, the movement inhibition portion, the moving plate, and the rolling member;
FIG. 13A is a view illustrating electromagnetic force due to interaction between magnet units and coil units and the motion of the moving plate;
FIG. 13B shows the motion of an OIS motion unit due to the electromagnetic force of FIG. 13A;
FIG. 14 is a perspective view of a camera device including a lens module;
FIG. 15A shows a first position of the OIS motion unit;
FIG. 15B shows a second position of the OIS motion unit;
FIG. 16 is a perspective view of a camera device according to another embodiment;
FIG. 17A is a first exploded perspective view of the camera device of FIG. 16;
FIG. 17B is a second exploded perspective view of the camera device of FIG. 16;
FIG. 18 is a perspective view of the camera device of FIG. 16 excluding a cover member;
FIG. 19A is a sectional view of the camera device in direction AB of FIG. 18;
FIG. 19B is a sectional view of the camera device in direction CD of FIG. 18;
FIG. 19C is a sectional view of the camera device in direction EF of FIG. 18;
FIG. 19D is a sectional view of the camera device in direction GH of FIG. 18;
FIG. 20 is an exploded perspective view of a bobbin, a rolling member, and a magnet of FIG. 17A;
FIG. 21 is a separated perspective view of the bobbin, a holder, a sensor base, and a housing of FIG. 17A;
FIG. 22A is a first separated perspective view of the holder, a filter, a circuit board, the sensor base, and a magnetic material of FIG. 17A;
FIG. 22B is a second separated perspective view of the holder, the filter, the circuit board, the sensor base, and the magnetic material of FIG. 17A;
FIG. 22C is a coupled perspective view of the sensor base and the circuit board of FIG. 17A;
FIG. 23 is a perspective view of the holder, the rolling member, a coil, a position sensor, the circuit board, and the sensor base of FIG. 17A;
FIG. 24A is a front perspective view of a moving plate of FIG. 17A;
FIG. 24B is a rear perspective view of the moving plate of FIG. 17A;
FIG. 25A is a separated perspective view of the housing, magnets, and a movement inhibition portion of FIG. 17A;
FIG. 25B is a coupled perspective view of the housing, the magnets, and the movement inhibition portion of FIG. 17A;
FIG. 26 is a perspective view of the cover member, the holder, the sensor base, the circuit board, the magnet, the moving plate, and a reinforcement member of FIG. 17A;
FIG. 27 is a perspective view of the housing, the magnets, the movement inhibition portion, and the moving plate of FIG. 17A;
FIG. 28A is a view illustrating electromagnetic force due to interaction between magnet units and coil units and the motion of the moving plate of FIG. 17A;
FIG. 28B shows the motion of an OIS motion unit due to the electromagnetic force of FIG. 28A;
FIG. 29 is a perspective view of the camera device of FIG. 16 including a lens module;
FIG. 30A shows a first position of the OIS motion unit of FIG. 17A;
FIG. 30B shows a second position of the OIS motion unit of FIG. 17B;
FIG. 31A is a perspective view of an optical instrument according to an embodiment;
FIG. 31B illustrates a perspective view of an optical instrument according to another embodiment; and
FIG. 32 is a block diagram of the optical instrument shown in FIGs. 31A and 31B.

### [Best Mode]

Reference will now be made in detail to embodiments, examples of which are illustrated in the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "includes," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device according to an embodiment and an optical instrument including the same will be described with reference to the accompanying drawings. For convenience of description, a camera device according to an embodiment will be described using the Cartesian coordinate system (x,y,z), to which embodiments are not limited, and may be described using other coordinate systems. In the respective drawings, the X-axis and the Y-axis may be directions perpendicular to the Z-axis, which is an optical-axis (OA) direction. In addition, the Z-axis direction, which is the optical-axis (OA) direction, may be referred to as a "first direction," the X-axis direction may be referred to as a "second direction," and the Y-axis direction may be referred to as a "third direction."

In addition, the X-axis (or the Y-axis) may be referred to as a "first axis," the X-axis (or the Y-axis) direction may be referred to as a "first-axis direction," the Y-axis (or the X-axis) may be referred to as a "second axis," and the Y-axis (or the X-axis) direction may be referred to as a "second-axis direction." For example, the optical-axis direction may be a direction of the optical axis or a direction parallel to the optical axis.

In addition, for example, the optical axis may be an optical axis of a lens mounted in a lens barrel. Alternatively, for example, the optical axis may be an axis perpendicular to an image-capturing area of the image sensor and passing through the center of the image-capturing area. Hereinafter, the term "terminal" may alternatively be referred to as a pad, an electrode, or a conductive layer.

Also, in embodiments, in coupling between a boss and a hole to couple two configurations to each other, one of the configurations may be a coupling boss (or a coupling hole) and the other configuration may be a coupling hole (or a coupling boss) corresponding thereto.

A camera device according to an embodiment may perform a hand-tremor compensation function and an autofocus function. The hand-tremor compensation function may be a function of moving a lens in a direction perpendicular to the optical-axial direction or tilting the lens with respect to the optical axis so as to cancel vibration (or motion) caused by shaking of the user's hand. In addition, the autofocus function may be a function of automatically focusing on a subject by moving a lens in the optical-axis direction according to the distance to the subject such that an image sensor obtains a clear image of the subject. Hereinafter, the "camera device" may alternatively be referred to as a "camera," an "actuator," a "camera module," an "image-capturing device," or a "photographing device."

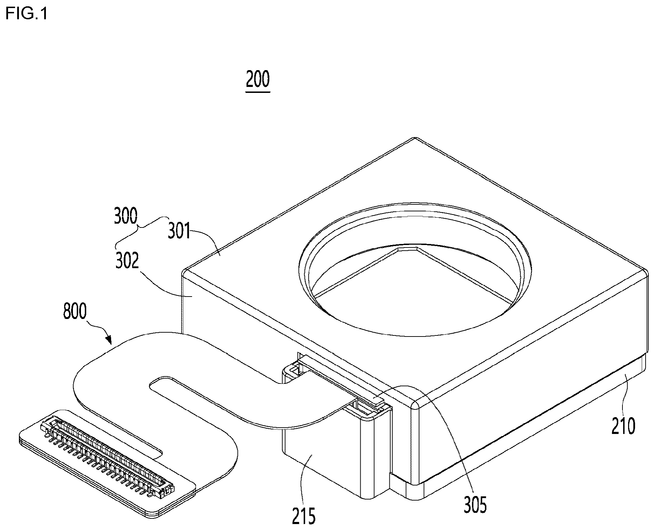

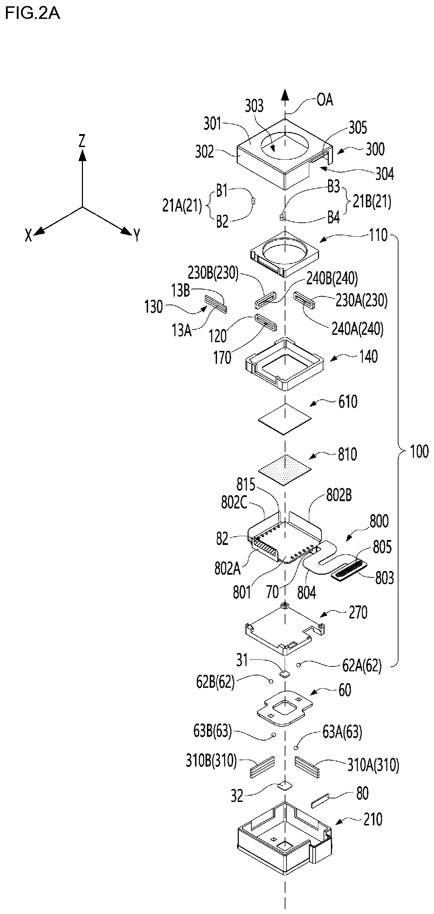

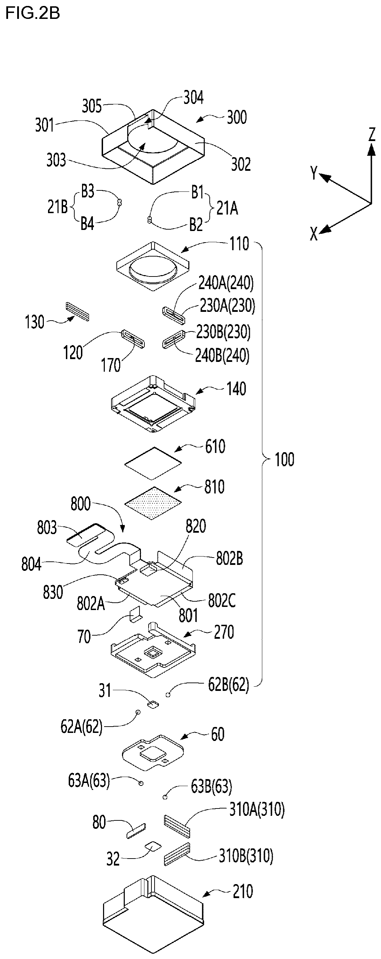

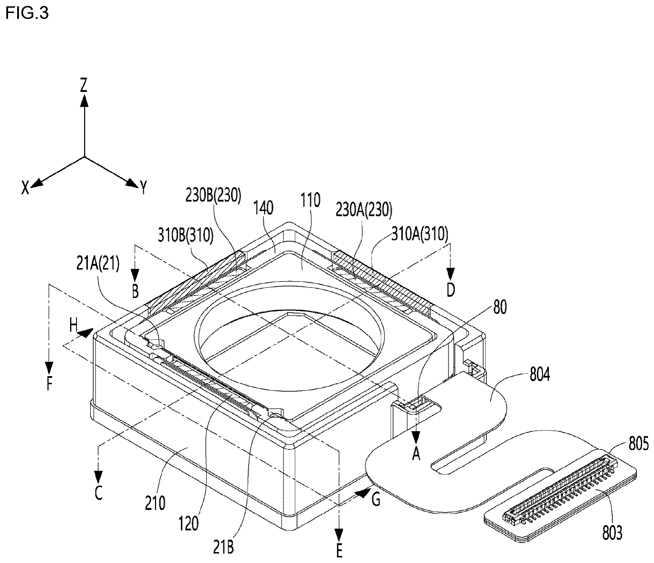

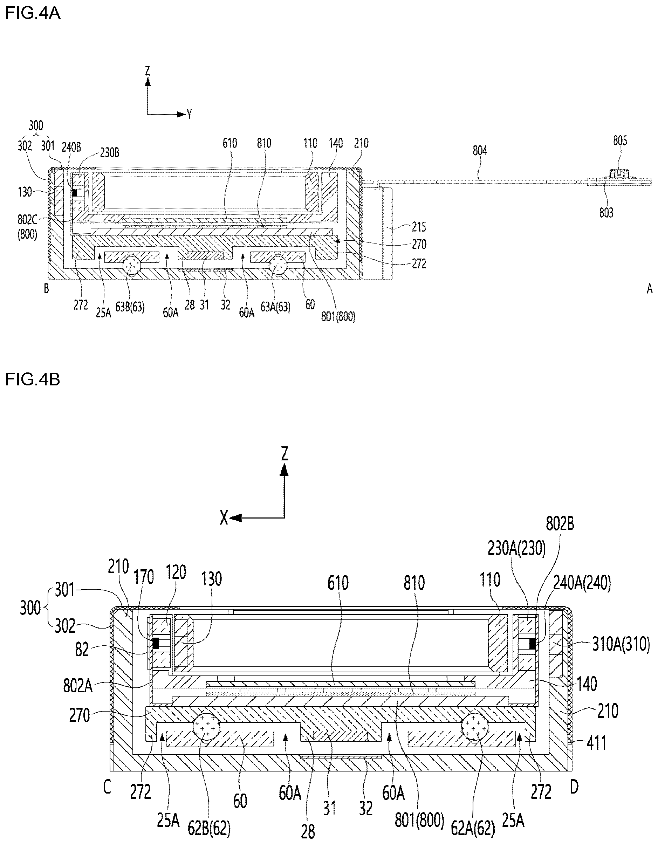

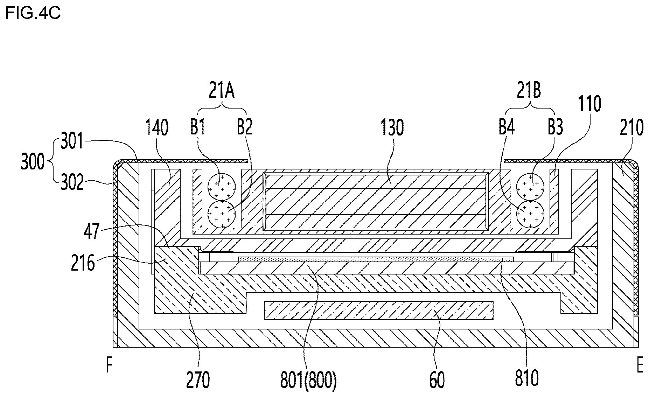

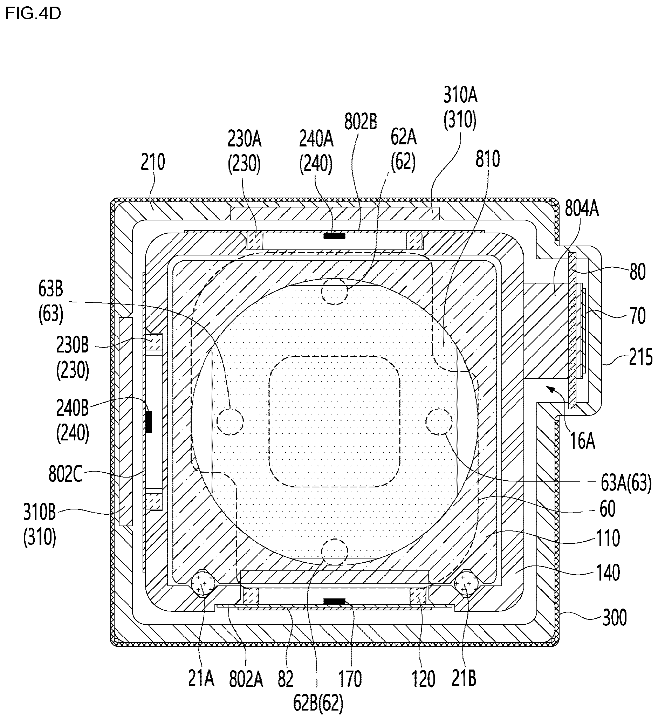

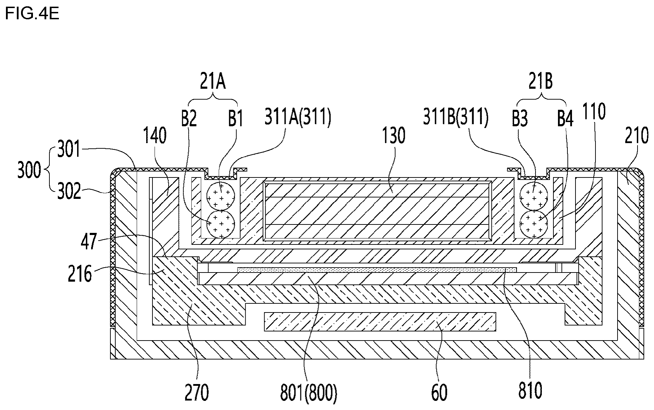

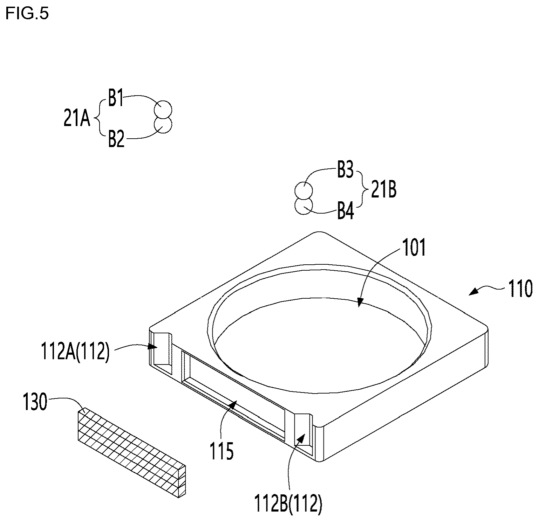

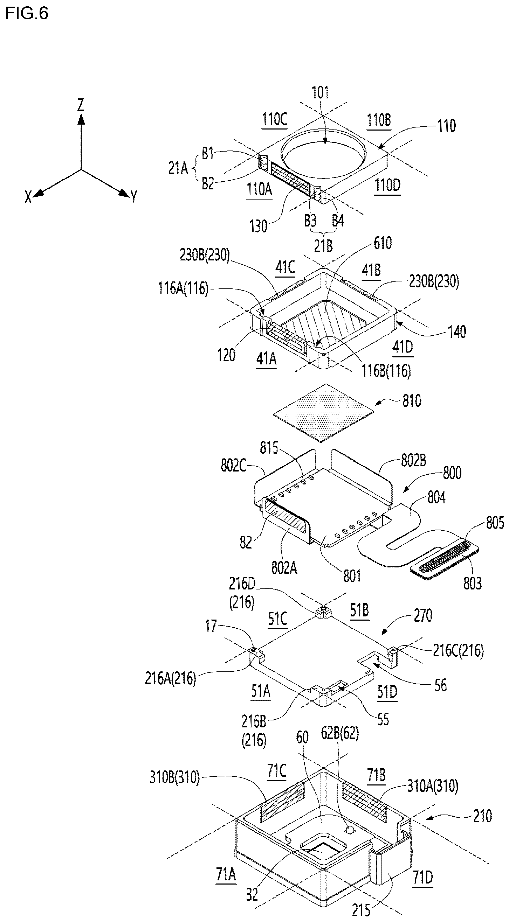

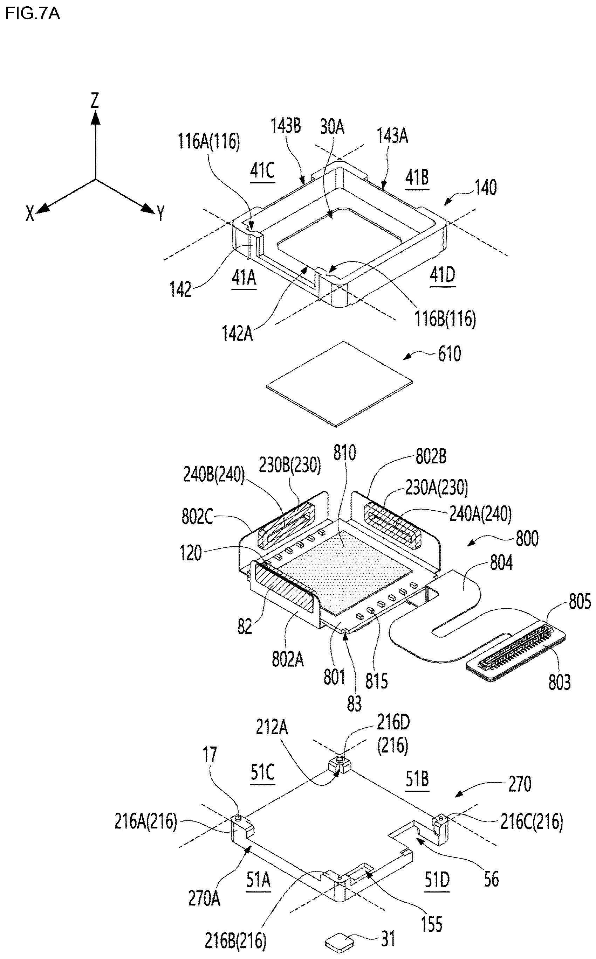

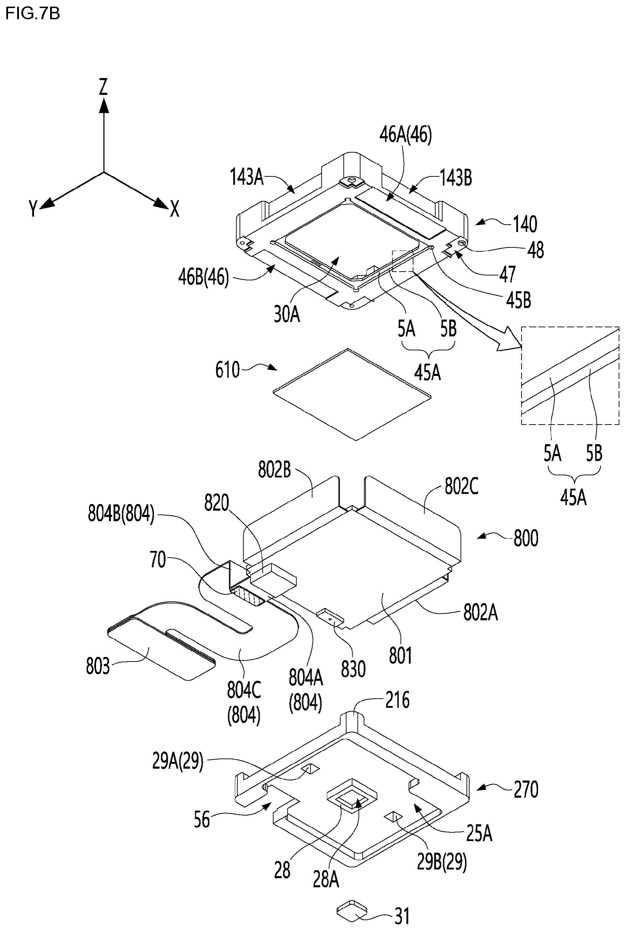

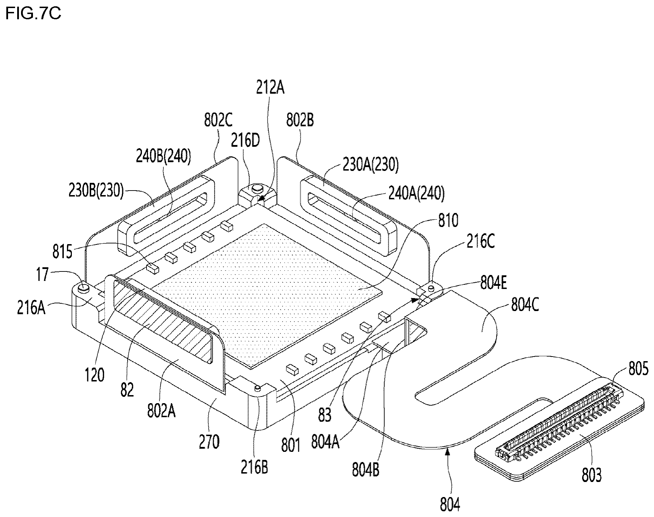

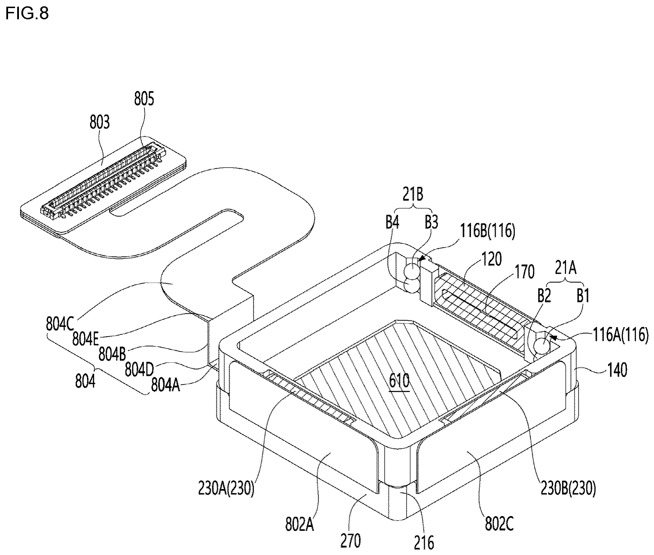

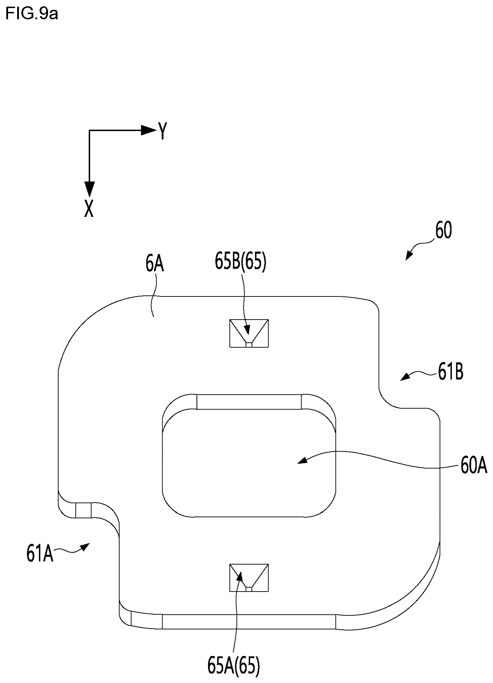

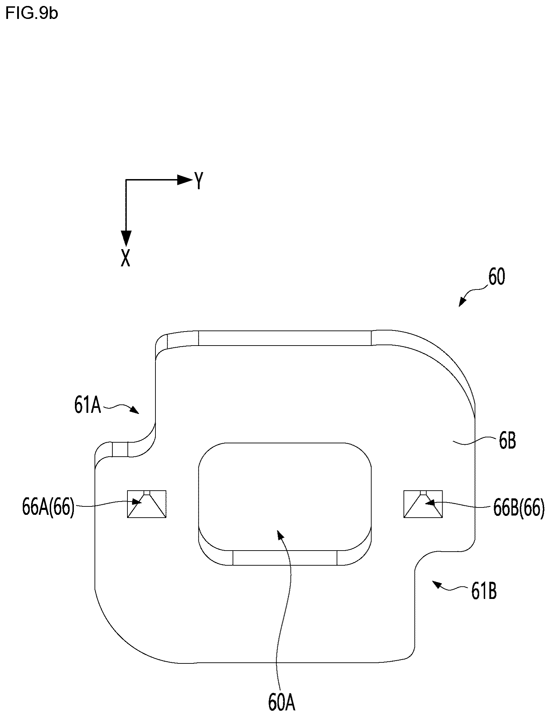

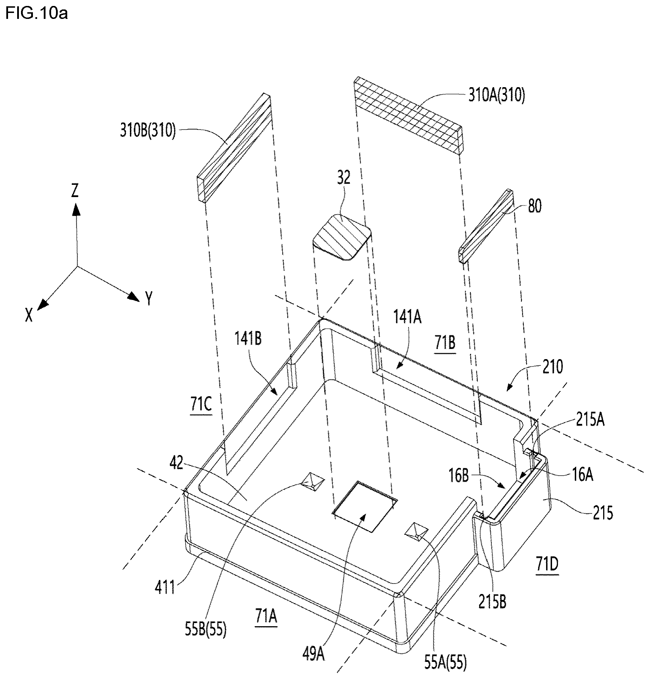

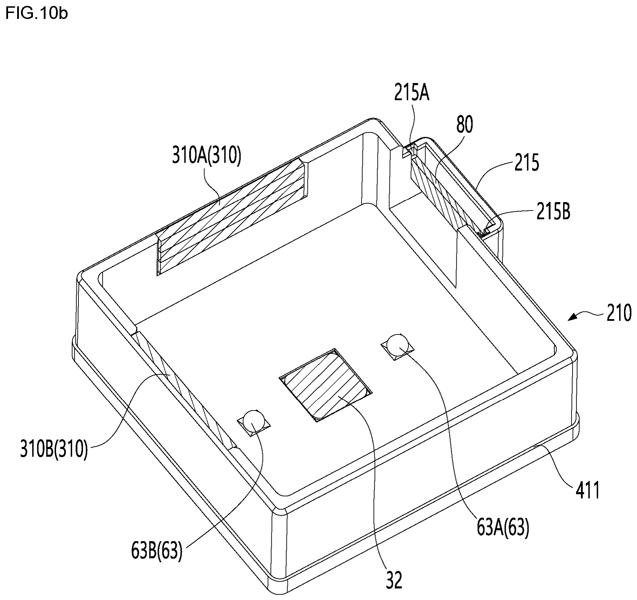

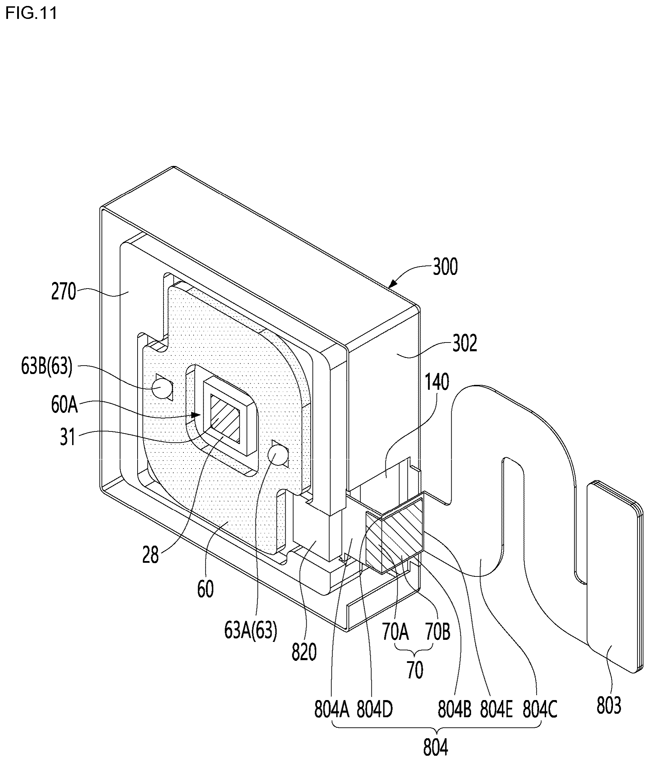

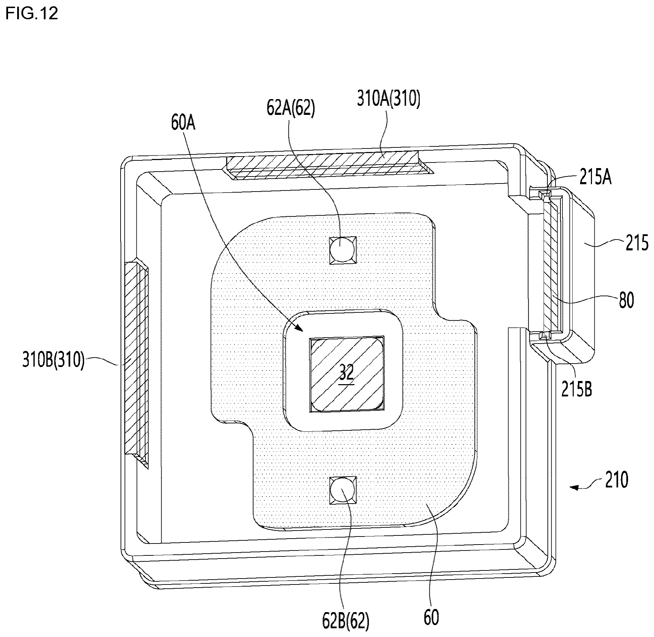

FIG. 1 is a perspective view of a camera device 200 according to an embodiment, FIG. 2A is a first exploded perspective view of the camera device 200 of FIG. 1, FIG. 2B is a second exploded perspective view of the camera device 200 of FIG. 1, FIG. 3 is a perspective view of the camera device 200 excluding a cover member 300, FIG. 4A is a sectional view of the camera device 200 in direction AB of FIG. 3, FIG. 4B is a sectional view of the camera device 200 in direction CD of FIG. 3, FIG. 4C is a sectional view of the camera device 200 in direction EF of FIG. 3, FIG. 4D is a sectional view of the camera device 200 in direction GH of FIG. 3, FIG. 4E is a sectional view showing a boss 311 of the cover member 300, FIG. 5 is an exploded perspective view of a bobbin 110, a rolling member 21, and a magnet 130, FIG. 6 is a separated perspective view of the bobbin 110, a holder 140, a circuit board 800, a sensor base 270, and a housing 210, FIG. 7A is a first separated perspective view of the holder 140, a filter 610, the circuit board 800, and the sensor base 270, FIG. 7B is a second separated perspective view of the holder 140, the filter 610, the circuit board 800, and the sensor base 270, FIG. 7C is a coupled perspective view of the sensor base 270 and the circuit board 800, FIG. 8 is a perspective view of the holder 140, the rolling member 21, a coil 120, a position sensor 170, the circuit board 800, and the housing 210, FIG. 9A is a front perspective view of a moving plate 60, FIG. 9B is a rear perspective view of the moving plate 60, FIG. 10A is an isolated perspective view of the housing 210, magnets 310A and 310B, a magnetic material 32, and a movement inhibition portion 80, FIG. 10B is a coupled perspective view of the housing 210, the rolling member 63, the magnets 310A and 310B, the magnetic material 32, and the movement inhibition portion 80, FIG. 11 is a perspective view of the cover member 300, the sensor base 270, the holder 140, the circuit board 800, the magnet 31, the rolling member 63, the moving plate 60, and a reinforcement member 70, and FIG. 12 is a perspective view of the housing 210, the magnetic material 32, the magnets 310A and 310B, the movement inhibition portion 80, the moving plate 60, and the rolling member 62.

Referring to FIGs. 1 to 12, the camera device 200 may include a stationary unit, an AF moving unit, an OIS motion unit (or a shaking unit) 100, and a support unit. The motion unit 100 may alternatively be referred to as a "moving unit," or a "movement unit."

The stationary unit may be a stationary element. That is, the stationary unit may not be moved in the optical-axis direction. Alternatively, the stationary unit may not be moved or tilted in a direction perpendicular to the optical axis. In addition, a configuration coupled to the stationary unit may be a stationary unit.

The stationary unit may include a housing 210. The stationary unit may include a cover member 300. For example, the stationary unit may include a configuration disposed on or coupled to the housing 210 or the cover member 300. For example, the stationary unit may include at least one of a magnet 310, a magnetic material 32, and a movement inhibition portion 80 disposed on the housing 210.

The AF moving unit may move relative to the stationary unit in the optical-axis direction. For example, the AF moving unit may include a bobbin 110. In another embodiment, the AF moving unit may further include a configuration (e.g., a magnet 130) coupled to the bobbin 110. In another embodiment, the AF moving unit may further include a lens module 400 (see FIG. 4) coupled to the bobbin 110.

The OIS motion unit 100 (see FIG. 2A) may be moved and/or tilted leftward or rightward about the first axis (e.g., the X-axis (e.g., pitch)) perpendicular to the optical axis with respect to the stationary unit. In addition, the OIS motion unit may be moved and/or tilted leftward or rightward about the second axis (e.g., the Y-axis (e.g., yaw)) perpendicular to the optical axis with respect to the stationary unit.

For example, the OIS motion unit may include the AF moving unit. In addition, the OIS motion unit may include an image sensor 810. The OIS motion unit may include a circuit board 800 on which the image sensor 810 is disposed. In addition, the OIS motion unit may include a sensor base 270 on which at least a part of the circuit board 800 is disposed. In addition, the OIS motion unit may include a holder 140 coupled to the sensor base 270. The OIS motion unit may alternatively be referred to as a first moving unit (or a first motion unit), and the AF moving unit may alternatively be referred to as a second moving unit (or a second motion unit). For example, the first moving unit may include a sensor base 270 and a circuit board 800.

For example, the OIS motion unit may include a configuration disposed on or coupled to at least one of the holder 140, the sensor base 270, and the circuit board 800. For example, the OIS motion unit may include a coil 230 and a magnet 130 disposed on the holder 140. For example, the OIS motion unit may include a magnet 31 disposed on the sensor base 270. For example, the OIS motion unit may include at least one of an image sensor 810, sensors 170 and 240, coils 120 and 230, a gyro sensor 820, a circuit element 815, and a controller 830 disposed on the circuit board 800.

The support unit may support the OIS motion unit with respect to the stationary unit. For example, the support unit may include a moving plate 60. For example, the support unit may include rolling members 62 and 63.

The bobbin 110 is configured to receive a lens or a lens barrel and may be disposed in the holder 140. The bobbin 110 may alternatively be referred to as a "lens holder" or a "lens carrier."

The bobbin 110 may move in the optical-axis direction. For example, the bobbin 110 may be moved in the first direction (e.g., the z-axis direction) by electromagnetic interaction between the coil 120 and the magnet 130. The coil 120 and the magnet 130 may be an AF driving unit configured to move or drive the AF moving unit.

In addition, the bobbin 110 may be included in the OIS motion unit, and the bobbin 110 may be tilted about the first axis or the second axis or may be rotated by a predetermined angle.

Referring to FIG. 5, the bobbin 110 may include an opening 101 for coupling to the lens module 400. The shape of the opening 101 of the bobbin 110 may match the shape of the lens module 400, and may be, without being limited to, circular, oval, or polygonal.

Although not shown in FIG. 1, the bobbin 110 may include at least one stopper disposed on at least one of an upper surface and a lower surface thereof. The stopper of the bobbin 110 may protrude from the upper surface (or the lower surface) of the bobbin 110 in the first direction or an upward direction (or a downward direction), and may prevent the upper surface of the bobbin 110 from directly colliding with an inner surface of an upper plate 301 of the cover member 300 or a lower portion of the holder 140.

The bobbin 110 may include a seating portion 115 configured to allow the magnet 130 to be seated or disposed thereon. For example, the seating portion 115 may be a recess depressed from an outer surface of the bobbin 110.

Referring to FIG. 6, the bobbin 110 may include a plurality of side surfaces 110A to 110D or outer surfaces. For example, the bobbin 110 may include a first side surface 110A, a second side surface 110B, a third side surface 110C, and a fourth side surface 110D.

For example, the second side surface 110B may face the first side surface 110A or may be opposite the first side surface 110A with respect to the optical axis OA. The third side surface 110C and the fourth side surface 110D may be located between the first side surface 110A and the second side surface 110B. For example, the fourth side surface 110D may face the third side 110C or may be opposite the third side surface 110C with respect to the optical axis OA. In FIG. 6, the bobbin 110 is shown as including four side surfaces, but in another embodiment, the bobbin may include three side surfaces or five or more side surfaces.

For example, the seating portion 115 may be formed on the first side surface 110A of the bobbin. For example, a lower portion of the seating portion 115 may be closed rather than open to a lower surface of the bobbin 110. In addition, an upper portion of the seating portion 115 may be closed rather than open to the upper surface of the bobbin 110. In another embodiment, for example, the seating portion 115 may include an opening that opens to at least one of the upper surface and the lower surface of the bobbin 110.

The bobbin 110 may include a receiving portion 112 configured to receive at least a part of the rolling member 21. For example, at least a part of the receiving portion 112 may be disposed on the first side surface 110A of the bobbin 110. The receiving portion 112 may be a recess depressed from an outer surface (e.g., the first side surface 110A) of the bobbin 110. The receiving portion 112 may alternatively be referred to as a "receiving recess," a "recess," or a "guide recess." A lubricant (e.g., grease) may be disposed in the receiving portion 112 of the bobbin 110 in order to reduce friction with the rolling member 21.

For example, the bobbin 110 may include a first receiving portion 112A configured to receive a rolling member 21A and a second receiving portion 112B configured to receive a rolling member 21B. For example, the seating portion 115 may be disposed between the first receiving portion 112A and the second receiving portion 112B.

For example, the first receiving portion 112A (or the second receiving portion 112B) may include an opening that opens to the upper surface of the bobbin 110. In another embodiment, upper portions of the receiving portions 112A and 112B may be closed rather than open to the upper surface of the bobbin 110. For example, lower portions of the receiving portions 112A and 112B may be closed rather than open to the lower surface of the bobbin 110.

For example, the receiving portion 112 may be formed so as to extend in the optical-axis direction. For example, the receiving portion 112 may extend in the optical-axis direction so as to be formed between the upper surface and the lower surface of the bobbin 110.

For example, when viewed from above, the shape of the receiving portion 112 may be, without being limited to, triangular, and the shape of the receiving portion may be polygonal (e.g., quadrangular or pentagonal). Alternatively, for example, when viewed from above, the receiving portion 112 may have a "V" or "U" shape.

The magnet 130 may be disposed on, coupled to, or fixed to the bobbin 110. For example, the magnet 130 may be disposed on or coupled to the first side surface 110A of the bobbin 110. For example, the magnet 130 may be disposed in the seating portion 115 of the bobbin 110, or may be coupled to the seating portion 115. For example, the magnet 130 may be disposed between the first rolling member 21A and the second rolling member 21B.

The shape of the magnet 130 may have a shape corresponding to the first side surface 110A of the bobbin 110, such as a cuboidal shape. In another embodiment, for example, at least one of opposite ends of the magnet 130 may be tapered.

For example, the magnet 130 may include a first side surface 13A facing the coil 120 and a second side surface 13B opposite the first side surface 13A. The first side surface 13A of the magnet 130 may be exposed from the first side surface 110A of the bobbin 110.

Also, in order to enhance electromagnetic force, the magnet 130 may be a four-pole magnet. For example, the magnet 130 may include two N poles and two S poles.

For example, the magnet 130 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction.

In another embodiment, the magnet 130 may be a two-pole magnet with two different polarities and an interface naturally formed between the different polarities. For example, in another embodiment, the magnet 130 may include one N pole and one S pole.

For example, the magnet 130 may be a two-pole magnet with an N pole and an S pole separated or disposed in the optical-axis direction. In another embodiment, the magnet 130 may be a magnet with an N pole and an S pole separated or disposed in a direction perpendicular to the optical axis. In another embodiment, the magnet 130 may be a two-pole magnet with an N pole and an S pole separated in a direction perpendicular to the optical axis.

The holder 140 may be disposed in the cover member 300. The holder 140 may include a cavity configured to receive the bobbin 110. The holder 140 may include an opening 30A corresponding to the opening 101 of the bobbin 110. For example, the opening 30A may be a through-hole or a hollow configured to expose at least a part of the bobbin 110 (or the lens module 400). In addition, for example, the opening 30A of the holder 140 may expose an image-capturing area of the image sensor 810. The holder 140 may alternatively be referred to as a "housing."

For example, the opening 30A may be located in the center or a central region of the holder 140. For example, the opening 30A of the holder 140 may be a through-hole or a hollow formed through the holder 140 in the optical-axis direction. The opening 30A of the holder 140 may have a shape corresponding to the shape of the bobbin 110, such as, but not limited to, a polygonal shape (e.g., a quadrangular shape or an octagonal shape) or a circular shape (or an oval shape), and may have a variety of shapes.

The holder 140 may include a plurality of side portions 41A to 41D. The holder 140 may include a corner located between two adjacent side portions and connecting the two adjacent side portions to each other.

The holder 140 may include a first side portion 41A corresponding to or opposite the first side surface 110A of the bobbin 110, a second side portion 41B corresponding to or opposite a second side surface 110B of the bobbin 110, a third side portion 41C corresponding to or opposite a third side surface 110C of the bobbin 110, and a fourth side portion 41D corresponding to or opposite a fourth side surface 110D of the bobbin 110.

The first side portion 41A (or a first side surface or a first outer surface) of the holder 140 may be located opposite the second side portion 41B (or a second side surface or a second outer surface) of the holder 140 with respect to the optical axis, and the third side portion 41C (or a third side surface or a third outer surface) of the holder 140 may be located opposite the fourth side portion 41D (or a fourth side surface or a fourth outer surface) of the holder 140 with respect to the optical axis.

Each of the first to fourth side portions 41A to 41D of the holder 140 may be disposed parallel to a corresponding one of side plates 302 of the cover member 300.

Referring to FIGs. 7A and 7B, the holder 140 may include a seating portion 142A on which the coil 120 is disposed. For example, the seating portion 142A may be disposed or formed on the first side portion 41A of the holder 140. For example, the seating portion 142A may be a through-hole formed through the first side portion 41A of the holder 140. Since the seating portion 142A is a through-hole, a part of the holder 140 may not be interposed between the coil 120 and the magnet 130, which may increase electromagnetic force between the magnet 130 and the coil 120. In addition, since a part of the holder 140 may not be interposed between the position sensor 170 and the magnet 130, the output of the position sensor 170 may be increased, and sensitivity of the position sensor 170 may be improved.

In another embodiment, the seating portion 142A may be a recess depressed from an outer surface (or an inner surface) of the first side portion 41A of the holder 140.

The holder 140 may include seating portions 143A and 143B on which the coil 230 is disposed. For example, the holder 140 may include a first seating portion 143A on which a first coil unit 230A is disposed and a second seating portion 143B on which a second coil unit 230B is disposed.

For example, the first seating portion 143A may be disposed or formed on the second side portion 41B of the holder 140. For example, the first seating portion 143A may be a through-hole formed through the second side portion 41B of the holder 140.

For example, the second seating portion 143B may be disposed or formed on the third side portion 41C of the holder 140. For example, the second seating portion 143B may be a through-hole formed through the third side portion 41C of the holder 140.

Since the seating portions 143A and 143B are through-holes, a part of the holder 140 may not be interposed between the coil 230 and the magnet 310, which may increase electromagnetic force between the magnet 310 and the coil 230. In addition, since a part of the holder 140 may not be interposed between the position sensor 240 and the magnet 310, the output of the position sensor 240 may be increased, and sensitivity of the position sensor 240 may be improved.

In another embodiment, the first seating portion 143A may be a recess depressed from an outer surface (or an inner surface) of the second side portion 41B of the holder 140, and the second seating portion 143B may be a recess depressed from an outer surface (or an inner surface) of the third side portion 41C of the holder 140.

For example, the holder 140 may include a recess 142 in which at least a part of a first extension portion 802A of the circuit board 800 is disposed. Since at least a part of the first extension portion 802A is disposed in the recess 142 of the holder 140, the first extension portion 802A and a magnetic material 82 may not protrude from the outer surface of the first side portion 41A of the holder 140, or may not protrude excessively from the outer surface of the first side portion 41A.

That is, the first extension portion 802A and the magnetic material 82 may protrude less than the sum of the thickness of the first extension portion 802A and the thickness of the magnetic material 82 with respect to the outer surface of the first side portion 41A of the holder 140. This may prevent an increase in the size of the camera device 200 in a direction perpendicular to the optical axis.

Referring to FIGs. 7A and 7B, the holder 140 may include a receiving portion 116 configured to allow at least another part of the rolling member 21 to be disposed or received therein. For example, at least a part of the receiving portion 116 may be disposed on the first side portion 41A of the holder 140. The receiving portion 116 may be a recess depressed from the inner surface of the holder 140 (e.g., the inner surface of the first side portion 41A). The receiving portion 116 may alternatively be referred to as a "receiving recess," a "recess," or a "guide recess."

At least a part of the receiving portion 116 of the holder 140 may correspond to, may be opposite, or may overlap the receiving portion 112 of the bobbin 110.

For example, the holder 140 may include a first receiving portion 116A configured to receive at least another part of a first rolling member B1 and B2 and a second receiving portion 116B configured to receive at least another part of a second rolling member B3 and B4. For example, the seating portion 142A of the holder 140 may be disposed between the first receiving portion 116A and the second receiving portion 116B of the holder 140.

For example, the first receiving portion 116A (or the second receiving portion 116B) may include an opening that opens to the upper surface of the holder 140. In another embodiment, an upper portion of the receiving portion 116 may be closed rather than open to the upper surface of the holder 140. For example, a lower portion of the receiving portion 116 may be closed rather than open to the lower surface of the holder 140.

For example, the receiving portion 116 may be formed so as to extend in the optical-axis direction. For example, the receiving portion 116 may extend in the optical-axis direction so as to be formed between the upper surface and the lower surface of the holder 140.

For example, when viewed from above, the shape of the receiving portion 116 of the holder 140 may be, without being limited to, triangular, and the shape of the receiving portion may be polygonal (e.g., quadrangular or pentagonal). Alternatively, for example, when viewed from above, the receiving portion 116 may have a "V" or "U" shape.

For example, when viewed in the optical-axis direction or from above, the receiving portion 116 may be opposite or may overlap the upper plate 301 of the cover member 300. For example, at least a part of the upper plate 301 of the cover member 300 may cover the receiving portion 116.

The camera device 200 may include a rolling member 21 disposed between the bobbin 110 and the holder 140. The rolling member 21 may alternatively referred to as a "ball member," a "ball," or a "ball bearing."

At least a part of the rolling member 21 may contact the bobbin 110 and the holder 140, and may be rolled or rotated between the bobbin 110 and the holder 140 to support movement of the bobbin 110 in the optical-axis direction. When the bobbin 110 is moved in the optical-axis direction, the rolling member 21 may reduce friction between the bobbin 110 and the holder 140. Due to rolling or rotation of the rolling member 21, the bobbin 110 may slide in the optical-axis direction in contact with the rolling member 21.

For example, the rolling member 21 may be made of, but not limited to, a metal material, a plastic material, or a resin material. The rolling member 21 may have a circular shape, and may have a diameter of sufficient size to support the movement of the bobbin 110 in the optical-axis direction.

For example, the rolling member 21 may be disposed between the outer surface of the bobbin 110 and the inner surface of the holder 140. For example, the rolling member 21 may be disposed between the first side surface 110A of the bobbin 110 and the first side portion 41A of the holder 140. For example, the rolling member 21 may be disposed between the receiving portion 112 of the bobbin 110 and the receiving portion 116 of the holder 140.

For example, at least a part of the rolling member 21 may be in contact with the receiving portion 112 of the bobbin 110, and at least another part of the rolling member 21 may be in contact with the receiving portion 116 of the holder 140.

The rolling member 21 may include at least one ball member. For example, the rolling member 21 may include two or more ball members B1 to B4.

For example, the rolling member 21 may include a first rolling member 21A disposed between the first receiving portion 112A of the bobbin 110 and the first receiving portion 116A of the holder 140 and a second rolling member 21B disposed between the second receiving portion 112B of the bobbin 110 and the second receiving portion 116B of the holder 140. For example, the first rolling member 21A may include at least one ball. For example, the first rolling member 21A may include a plurality of balls B1 and B2.

The second rolling member 21B may include at least one ball. For example, the second rolling member 21B may include a plurality of balls B3 and B4. In another embodiment, each of the first rolling member 21A and the second rolling member 21B may include one ball.

For example, each of the first rolling member 21A and the second rolling member 21B may include three or more balls. For example, each of the first rolling member 21A and the second rolling member 21B may include a top ball located at the uppermost side, a bottom ball located at the lowermost side, and at least one intermediate ball located between the top ball and the bottom ball. For example, the diameter of the top ball may be greater than the diameter of the intermediate ball, and the diameter of the bottom ball may be greater than the diameter of the intermediate ball. In addition, for example, the diameter of the top ball and the diameter of the bottom ball may be equal to each other. In another embodiment, the diameter of the top ball, the diameter of the bottom ball, and the diameter of the intermediate ball may be equal to each other.

For example, each of the first rolling member 21A and the second rolling member 21B may include a first ball (a top ball), a second ball (a bottom ball), and a third ball (an intermediate ball) disposed in the optical-axis direction, wherein the diameter of the first ball may be greater than the diameter of the third ball. In addition, the diameter of the second ball may be greater than the diameter of the third ball. For example, the diameter of the first ball and the diameter of the third ball may be equal to each other. In another embodiment, the diameter of the first ball may be greater than the diameter of the second ball. In another embodiment, the diameter of the first ball may be less than the diameter of the second ball. In another embodiment, the diameter of the first ball, the diameter of the second ball, and the diameter of the third ball may be equal to each other.

For example, each of the diameter of the first ball and the diameter of the second ball may be 0.85 mm to 0.95 mm, and the diameter of the third ball may be 0.75 mm to 0.85 mm.

In another embodiment, each of the first rolling member 21A and the second rolling member 21B may include four balls, wherein each of the diameter of the top ball and the diameter of the bottom ball may be 0.85 mm to 0.95 mm, and the diameter of each of the two intermediate balls may be 0.75 mm to 0.85 mm.

When viewed from above, the coil 120 and the magnet 130 may be located between the first rolling member 21A and the second rolling member 21B. This serves to improve the reliability of autofocus by ensuring that, when the bobbin 110 moves in the optical-axis direction, the rolling member 21 stably supports the bobbin 110 without causing the bobbin 110 to be tilted and moved.

The camera device 200 may include a magnetic material 82 configured such that attractive force acts between the magnet 130 and the magnetic material 82. For example, attractive force may act between the magnetic material 82 and the magnet 130 in a direction perpendicular to the optical axis (or the second direction). For example, the magnetic material 82 may be disposed on the holder 140. In another embodiment, the magnetic material 82 may be disposed on the housing 210.

The magnetic material 82 may be made of a material that sticks to a magnet. For example, the magnetic material 82 may be a metal material that sticks to a magnet. Alternatively, the magnetic material 82 may be made of a metal material that is magnetic. Alternatively, for example, the magnetic material 82 may be a magnet. The magnetic material 82 may alternatively be referred to as a "yoke." The magnetic material 82 may serve to enhance or increase electromagnetic force between the magnet 130 and the coil 120.

Since the magnet 130 is disposed on the bobbin 110 and the magnetic material 82 is disposed on the holder 140, the bobbin 110 may be pulled in a direction toward the holder 140 on which the magnetic material 82 is disposed by attractive force acting between the magnetic material 82 and the magnet 130. Due to attractive force between the magnetic material 82 and the magnet 130, the bobbin 110 and the holder 140 may press the rolling member 21, and the bobbin 110 may be stably supported.

The magnetic material 82 and the magnet 130 may be a "pressing unit" or a "pressing member." When the bobbin 110 is moved in the optical-axis direction by the pressing unit, contact between the bobbin 110 and the rolling member 21 and between the holder 140 and the rolling member 21 may be maintained. That is, the rolling member 21 may stably support the bobbin 110 against the holder 140 due to attractive force between the magnet 130 and the magnetic material 82.

In another embodiment, the magnet 130 may be disposed on the holder 140, and the coil 120 may be disposed on the bobbin 110. For example, the magnetic material 82 may be disposed on the holder 140 along with the magnet 130. For example, the magnet 130 may be disposed between the magnetic material 82 and the coil 120. In another embodiment, the magnetic material 82 may be disposed on the bobbin 110 along with the coil 120 while being opposite the magnet 130 disposed on the holder 140. In addition, the camera device 200 may further include an energizing member, such as a conductive member, configured to conductively connect the coil 120 disposed on the bobbin 110 and a second substrate 802 of the circuit board 800 to each other.

Referring to FIG. 7B, the holder 140 may include a seating portion 45A on which the filter 610 is seated or disposed. The seating portion 45A may be disposed or formed on the lower surface of the holder 140. For example, the seating portion 45A may be a recess depressed from the lower surface of the holder 140. For example, the seating portion 45A may include a bottom surface 5A having a step formed from the lower surface of the holder 140 in the optical-axis direction and a side surface 5B connecting the lower surface of the holder 140 and the bottom surface 5A of the seating portion 45A to each other. For example, the opening 30A may be formed through the bottom surface 5A of the seating portion 45A.

The holder 140 may include a depressed portion 45B disposed or formed on a corner region of an inner surface of the seating portion 45A. The depressed portion 45B may have a structure depressed in a direction from the optical axis toward the corner region of the inner surface of the seating portion 45A. The depressed portion 45B may prevent an adhesive (e.g., UV epoxy) configured to attach or couple the filter 610 to the seating portion 45A from overflowing out of the seating portion 45A.

The holder 140 may include an escape recess 46 configured to avoid spatial interference with the circuit element 815. For example, the escape recess 46 may be disposed or formed on the lower surface of the holder 140. For example, the escape recess 46 may be depressed from the lower surface of the holder 140.

The escape recess 46 may correspond to, may be opposite, or may overlap the circuit element 815 in the optical-axis direction. For example, the escape recess 46 may be located between the seating portion 45A and a side of the lower surface of the holder 140. For example, the escape recess 46 may include a first escape recess 46A and a second escape recess 46B located opposite each other with respect to the seating portion 45A or the filter 610. In another embodiment, the escape recess 46 may include four escape recesses disposed between the opening 30A and four sides of the holder 140.

The holder 140 may include a recess 47 corresponding to a protrusion 216 of the sensor base 270. The protrusion 216 of the sensor base 270 and the recess 47 of the holder 140 may serve as a guide configured to facilitate assembly of the sensor base 270 and the holder 140, and may increase the coupling area between the sensor base 270 and the holder 140 to improve coupling force between the sensor base 270 and the holder 140.

For example, the recess 47 may be depressed from the lower surface of the holder 140. For example, the recess 47 may be disposed or formed on the corner or the corner region of the lower surface of the holder 140. The recess 47 of the holder 140 may have a shape corresponding to the protrusion 216 of the sensor base 270. In addition, the holder 140 may include a recess 48 or a hole corresponding to a boss 17 of the sensor base 270. For example, the boss 17 of the sensor base 270 may be inserted into or coupled to the recess 48 of the holder 140. For example, the recess 48 may be disposed or formed on a bottom surface of the recess 47 of the holder 140. For example, the recess 48 may be depressed from the bottom surface of the recess 47 of the holder 140.

In another embodiment, the holder 140 may include a protrusion protruding from the lower surface of the holder 140 instead of the recess 47, and the sensor base 270 may include a recess depressed from an upper surface of the sensor base 270 and coupled to the protrusion of the holder 140 instead of the protrusion 216. In another embodiment, the boss 17 may be formed on the holder 140, and the recess 48 may be formed on the sensor base 270.

The camera device 200 may include a filter 610 disposed on or coupled to the holder 140. For example, the filter 610 may be disposed under the holder 140. For example, the filter 610 may be coupled to the lower surface of the holder 140. For example, the filter 610 may be disposed on the seating portion 45A of the holder 140.

The filter 610 may serve to block a specific frequency band component of light passing through the lens module 400 from being incident on the image sensor 810. For example, the filter 610 may be an infrared cutoff filter. For example, the filter 610 may be disposed parallel to a plane perpendicular to the optical axis OA.

The filter 610 may be coupled to the holder 140 (or the seating portion 45A) via an adhesive (not shown). For example, an edge region of the filter 610 may be coupled to the bottom surface of the seating portion 45A.

For example, the adhesive may be epoxy, a thermohardening adhesive, or a UV hardening adhesive. For example, at least a part of the filter 610 may correspond to, may be opposite, or may overlap the lens module 400 and/or the image sensor 810 in the optical-axis direction.

The sensor base 270 may be disposed under the holder 140. The sensor base 270 may be coupled to the holder 140. The sensor base 270 may alternatively be referred to as a "holder." In addition, the holder 140 may be referred to as a "first housing" (or a "first holder"), and the sensor base 270 may be referred to as a "second housing" (or a "second holder"). Alternatively, the holder 140 and the sensor base 270 may not be represented separately and may alternatively be referred to by a single term, e.g., a "housing," a "holder," or a "sensor base." In another embodiment, the sensor base 270 and the holder 140 may be integrally formed.

For example, the sensor base 270 may include a protrusion 216 protruding from the upper surface thereof. The protrusion 216 may alternatively be referred to as a "pillar portion."

For example, the protrusion 216 may correspond to, may be opposite, or may overlap the recess 47 of the holder 140 in the optical-axis direction. At least a part of the protrusion 216 of the sensor base 270 may be inserted into the recess 47 of the holder 140. For example, at least a part of the protrusion 216 may be coupled to the recess 47 of the holder 140. For example, at least a part of the protrusion 216 may be coupled to the recess 47 of the holder 140 via an adhesive.

For example, the sensor base 270 may include a body 270A and a protrusion 216 protruding from an upper surface of the body 270A. For example, the body 270A may have a shape corresponding to a first substrate 801 of the circuit board 800. For example, the body 270A may have a polyhedral shape, such as a hexahedral shape. For example, the protrusion 216 may be disposed on a corner region of the upper surface of the body 270A. For example, the protrusion 216 may include four protrusions 216A to 216D disposed on four corner regions of the upper surface of the body 270A. In addition, for example, the holder 140 may include four recesses 47 corresponding to the four protrusions 216A to 216D. In another embodiment, the housing 210 may include at least one protrusion disposed on at least one of the four corner regions of the upper surface of the body 270A, and the holder 140 may include at least one recess 48 corresponding to the at least one protrusion of the housing 210.

The sensor base 270 or the body 270A may include side portions 51A to 51D corresponding to, opposite, or overlapping the side portions 41A to 41D of the holder 140.

The sensor base 270 may include a receiving portion 56 configured to allow the gyro sensor 820 to be disposed therein or to avoid spatial interference with the gyro sensor 820. For example, the receiving portion 56 may be formed through the sensor base 270 in the optical-axis direction. For example, the receiving portion 56 may be formed through the body 270A in the optical-axis direction. In another embodiment, the receiving portion 56 may be a recess depressed from the upper surface of the body 270A. The receiving portion 56 may include an opening that opens to an outer surface of the sensor base 270.

The sensor base 270 may include a receiving portion 155 in which the controller 830 is disposed or received. The receiving portion 155 may be a recess depressed from a lower surface of the sensor base 270 or a lower surface of the body 270A. In another embodiment, the receiving portion 155 may be a through-hole formed through the sensor base 270 or the body 270A in the optical-axis direction.

The sensor base 270 may include a receiving portion 28A configured to receive the magnet 31. The receiving portion 28A may be disposed or formed in a lower portion or a lower surface of the sensor base 270. For example, the receiving portion 28A may be a recess depressed from the lower portion or the lower surface of the sensor base 270. For example, the receiving portion 28A may be disposed or formed in the lower surface of the body 270A. For example, the receiving portion 28A may have a shape corresponding to the magnet 31.

In an embodiment in which the positions of the magnetic material 32 and the magnet 31 are reversed, the magnetic material 32 may be disposed in the receiving portion 28A of the sensor base 270, and the magnet 31 may be disposed in a receiving portion 49A of the housing 210.

The sensor base 270 may include a seating portion 25A configured to allow at least a part of the moving plate 60 to be disposed thereon or to receive at least a part of the moving plate 60. For example, the seating portion 25A may be a recess depressed from the lower surface of the sensor base 270. For example, the seating portion 25A may have a shape that corresponds to or coincides with the shape of the moving plate 60. For example, the seating portion 25A may include a bottom surface having a step formed from the lower surface of the sensor base 270 in the optical-axis direction and a side surface connecting the bottom surface and the lower surface of the sensor base 270 to each other. For example, the bottom surface of the seating portion 25A may be located higher than the lower surface of the sensor base 270.

Referring to FIGs. 4A and 4B, since the sensor base 270 is provided at the lower surface thereof with a seating portion 25A into which at least a part of the moving plate 60 is inserted or on which at least a part of the moving plate 60 is disposed, the sensor base 270 may include a partition wall 272 (or a guide portion) disposed on the lower surface thereof while being disposed around the moving plate 60. The moving plate 60 may be spaced apart from the partition wall 272, and the partition wall 272 may be disposed so as to surround the moving plate 60. The partition wall 272 may prevent the moving plate 60 from being separated or dislodged from the sensor base 270.

The sensor base 270 may include a protrusion 28 (or a boss) protruding from the lower portion or the lower surface of the sensor base 270. For example, the protrusion 28 may protrude from the bottom surface of the seating portion 25A of the sensor base 270. For example, the protruding length of the protrusion 28 may be greater than the depth of the seating portion 25A. For example, the protruding length of the protrusion 28 may be the distance (or the shortest distance) from the bottom surface of the seating portion 25A to a lower surface (or the lowermost end) of the protrusion 28. In addition, the depth of the seating portion 25A may be the distance (or the shortest distance) from the lower surface of the sensor base 270 to the bottom surface of the seating portion 25A. In another embodiment, for example, the protruding length of the protrusion 28 may be less than or equal to the depth of the seating portion 25A. For example, the protrusion 28 may have a shape that corresponds to or coincides with an opening 60A of the moving plate 60.

For example, the protrusion 28 of the sensor base 270 may correspond to, may be opposite, or may overlap the opening 60A of the moving plate 60 in the optical-axis direction. For example, at least a part of the protrusion 28 of the sensor base 270 may be disposed in the opening 60A of the moving plate 60.

For example, the receiving portion 28A may be disposed or formed in the protrusion 28 of the sensor base 270. For example, the receiving portion 28A may be a recess depressed from the lower surface of the protrusion 28 of the sensor base 270.

For example, the protrusion 28 may be disposed between ball members 62A and 62B. For example, the protrusion 28 (or the magnet 31) may overlap the ball members 62A and 62B in a direction perpendicular to the optical axis, e.g., the second direction.

The sensor base 270 may include a recess 29 in which the rolling member 62 is disposed or received. The recess 29 may be formed in the lower surface of the sensor base 270. For example, the recess 29 may be depressed from the lower surface of the sensor base 270. The number of the recesses 29 may be the same as the number of the rolling members 62.

For example, the recess 29 may include two recesses 29A and 29B spaced apart from each other. For example, the two recesses 29A and 29B may be disposed spaced apart from each other in the X-axis direction. For example, the protrusion 28 of the sensor base 270 may be disposed between the two recesses 29A and 29B of the sensor base 270.

The recess 29 may contact the rolling member 62 at at least one point. For example, the recess 29 may include a bottom surface and at least one side surface connected to the bottom surface. The at least one side surface may be an inclined surface. For example, the recess 29 may include a bottom surface and a plurality of inclined surfaces. The inclined surfaces of the recess 29 may have the same shape. In another embodiment, at least one of the inclined surfaces of the recess 29 may have a different shape from the others.

Referring to FIG. 7C, the protrusion 216 of the sensor base 270 may have a recess 212A in which at least a part of the first substrate 801 of the circuit board 800 is inserted or disposed. For example, a corner of the first substrate 801 may be inserted into or coupled to the recess 212A of the protrusion 216 of the sensor base 270. For example, the recess 212A may be formed in the side surface of the protrusion 216 opposite the corner of the circuit board 800. In addition, at least one corner of the circuit board 800 may have a recess 83 configured to be inserted into or be coupled to the recess 212A of the protrusion 216. The recess 212A of the protrusion 216 of the sensor base 270 may serve as a coupling guide for coupling between the first substrate 801 and the sensor base 270, and may serve to inhibit the first substrate 801 from being rotated and/or separated from the sensor base 270.

The circuit board 800 may be disposed on, coupled to, or fixed to the sensor base 270. For example, the circuit board 800 may be coupled to the sensor base 270 via an adhesive or a fixing member.

The circuit board 800 may be disposed on, coupled to, or fixed to the body 270A of the sensor base 270. The circuit board 800 may include at least one of a rigid printed circuit board (rigid PCB), a flexible printed circuit board (flexible PCB), and a rigid-flexible printed circuit board (rigid-flexible PCB). For example, the circuit board 800 can include a rigid printed circuit board and a flexible printed circuit board. The circuit board 800 may alternatively be referred to as a "substrate unit," a "substrate," or a "printed circuit board."

For example, the circuit board 800 may include a first substrate 801 (or a "first region") disposed on, coupled to, or fixed to sensor base 270. For example, the first substrate 801 may be disposed on, coupled to, or fixed to the body 270A of the sensor base 270. For example, a lower side of the first substrate 801 may be coupled to the upper surface of the sensor base 270 or the upper surface of the body 270A. For example, the lower surface of the first substrate 801 may be coupled to the upper surface of the sensor base 270 or the upper surface of the body 270A via an adhesive.

The circuit board 800 may include a second substrate 802 (or a "second region") connected to first substrate 801 and disposed on a side portion of the holder 140. The second substrate 802 may include a plurality of portions 802A to 802C (or "extension portions").

For example, the second substrate 802 may include a first extension portion 802A disposed on, coupled to, or fixed to the first side portion 41A of the holder 140. In addition, the second substrate 802 may include a second extension portion 802B disposed on, coupled to, or fixed to the second side portion 41B of the holder 140. In addition, the second substrate 802 may include a third extension portion 802C disposed on, coupled to, or fixed to the third side portion 41C of the holder 140.

For example, the first extension portion 802A may be connected to a first side surface of the first substrate 801, the second extension portion 802B may be connected to a second side surface of the first substrate 801 located opposite the first side surface, and the third extension portion 802C may be connected to a third side surface of the first substrate 801 located between the first and second side surfaces. For example, each of the first to third extension portions 802A to 802C may be bent from a corresponding one of the first to third side surfaces of the first substrate 801. Each of the first to third extension portions 802A to 802C may extend upward from the first substrate 801.

The circuit board 800 may include a third substrate 803 on which a connector 805 is disposed or provided and a fourth substrate 804 connecting the first substrate 802 and the third substrate 803 to each other.

For example, the first substrate 801 may be a rigid printed circuit board. For example, the second substrate 802 may be a flexible printed circuit board. For example, the third substrate 803 may be a rigid printed circuit board. For example, the fourth substrate 804 may be a flexible printed circuit board.

For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 810 may be disposed on the first substrate 801. The image sensor 810 may be disposed so as to correspond to, to be opposite, or to overlap the lens module 400 and/or the filter 610 in the optical-axis direction.

The image sensor 810 may include an image-capturing area configured to detect light. Here, the image-capturing area may alternatively be referred to as an effective area, a light receiving area, or an active area. For example, the image-capturing area may include a plurality of pixels from which an image is formed. The image sensor 810 may be conductively connected to the first substrate 801. The image-capturing area may correspond to, may be opposite, or may overlap the lens module 400 and/or the filter 610 in the optical-axis direction.

The camera device 200 may include a circuit element 815 disposed on the first substrate 801. For example, the circuit element 815 may include at least one of a passive element (e.g., a capacitor or a resistor), an active element (e.g., a sensor, a memory, or a driver IC), or a circuit pattern. For example, in order to avoid spatial interference with the image sensor 810, the circuit element 815 may be disposed between the image sensor 810 and an edge (e.g., a side) of the first substrate 801.

The camera device 200 may include a controller 830 disposed on the circuit board 800. For example, the controller 830 may be a driver IC. For example, the controller 830 may be disposed on the first substrate 801. For example, the controller 830 may be disposed under the first substrate 801. For example, the controller 830 may be disposed on, coupled to, or fixed to the lower surface of the first substrate 801. For example, the controller 830 may be conductively connected to the first substrate 801.

For example, the controller 830 may be conductively coupled to the coil 120, and may supply a drive signal to the first coil 120. The controller 830 may be conductively connected to the coil units 230A and 230B, may supply a first drive signal to the first coil unit 230A, and may supply a second drive signal to the second coil unit 230B.

The controller 830 may be conductively connected to the position sensor 170. In addition, the controller 830 may be conductively connected to the position sensor 240.

For example, the controller 830 may receive an output signal from the position sensor 170, and may control a drive signal (e.g., drive current) that is supplied to the coil 120 using the output signal from the position sensor 170.

For example, the controller 830 may receive an output signal from the position sensor 240, and may control a drive signal (e.g., drive current) that is supplied to the coil 230 using the output signal from the position sensor 240. For example, the controller 830 may receive an output signal from the first sensor 240A, and may control a first drive signal (e.g., first drive current) that is supplied to the first coil unit 230A using the output signal from the first sensor 240A. In addition, the controller 830 may receive an output signal from the second sensor 240B, and may control a second drive signal (e.g., second drive current) that is supplied to the second coil unit 230B using the output signal from the second sensor 240B.

The camera device 200 may include a gyro sensor 820 disposed on the circuit board 800. For example, the gyro sensor 820 outputs rotational angular velocity information due to motion of the camera device 200. For example, the gyro sensor 820 may be implemented by a 2-axis or 3-axis gyro sensor or an angular velocity sensor.

For example, the gyro sensor 820 may be disposed on the first substrate 801. For example, the gyro sensor 820 may be disposed under the first substrate 801. For example, the gyro sensor 820 may be disposed on, coupled to, or fixed to the lower surface of the first substrate 801. For example, the gyro sensor 820 may be conductively connected to the first substrate 801.

For example, at least one of the gyro sensor 820 and the controller 830 may be disposed close to the third substrate 803. For example, at least one of the gyro sensor 820 and the controller 830 may be disposed close to a first side surface of the first substrate 801 that is adjacent to or connected to the third substrate 803. The gyro sensor 820 and the controller 830 may be disposed closer to the first side surface of the first substrate 801 than a second side surface of the first substrate 801, and the second side surface of the first substrate 801 may be located opposite the first side surface of the first substrate 801.

The coils 120 and 230 may be disposed on, coupled to, or fixed to the circuit board 800 (e.g., the second substrate 802). For example, the coils 120 and 230 may be conductively connected to the circuit board 800 (e.g., the second substrate 802). For example, the coils 120 and 230 may be conductively connected to the circuit board 800 (e.g., the second substrate 802) via a conductive adhesive or a solder.

For example, the coil 120 may be disposed or coupled to the first extension portion 802A of the second substrate 802, and may be conductively connected to the first extension portion 802A. The first coil unit 230A may be disposed on or coupled to the second extension portion 802B of the second substrate 802, and may be conductively connected to the second extension portion 802B. The second coil unit 230B may be disposed on or coupled to the third extension portion 802C of the second substrate 802, and may be conductively connected to the third extension portion 802C.

The coil 120 may move the AF moving unit (e.g., the bobbin) in the optical-axis direction by interaction with the magnet 130. The coil 120 may be disposed on the holder 140.

The coil 120 may be disposed so as to correspond to, to be opposite, or to overlap the magnet 130 in a direction perpendicular to the optical axis. For example, the coil 120 may be disposed on the holder 140 so as to correspond to, to be opposite, or to overlap the magnet 130 in the second direction (e.g., the X-axis direction) or in a direction from the first side portion 41A to the second side portion 41B of the holder 140. For example, the coil 120 may be disposed on the first side portion 41A of the holder 140. The coil 120 may be disposed in the seating portion 142A of the holder 140.

For example, the coil 120 may include a hollow or a hole. For example, the coil 120 may have a ring shape or a closed curved shape. For example, the coil 120 may have a ring shape wound around a straight line perpendicular to the optical axis OA and perpendicular to the outer surface of the first side portion 41A of the holder 140 as an axis. For example, the coil 120 may have a ring shape configured such that the length thereof in a transverse direction (or the third direction) is greater than the length thereof in a longitudinal direction (or the optical-axis direction).

A drive signal may be applied to the coil 120 in order to generate electromagnetic force by electromagnetic interaction with the magnet 130. For example, a drive signal from the circuit board 800 or the controller 830 may be applied to the coil 120. The drive signal supplied to the coil 120 may be direct current, and may be in the form of voltage or current. Alternatively, in another embodiment, for example, the drive signal provided to the coil 120 may include at least one of a direct current signal and an alternating current signal.

The coil 120, to which the drive signal has been provided, may electromagnetically interact with the magnet 130 disposed on the bobbin 110, and the AF moving unit may be moved in the first direction by electromagnetic force due to electromagnetic interaction between the coil 120 and the magnet 130. The magnitude and/or the direction of the drive signal (e.g., drive current) may be adjusted by the controller 830, whereby movement of the AF moving unit in the first direction may be controlled, and therefore the autofocus function may be performed.

For AF feedback driving, the camera device 200 may include a position sensor 170. The position sensor 170 may detect the position or displacement of the bobbin 110 in the optical-axis direction. For example, the position sensor 170 may detect the magnet 130 disposed on the bobbin 110. In another embodiment, a sensing magnet separate from the magnet 130 and opposite the position sensor 170 may be disposed on the bobbin, and the position sensor 170 may detect the sensing magnet or a magnetic field of the sensing magnet to detect the displacement of the bobbin.

For example, the position sensor 170 may be disposed on the holder 140. For example, the position sensor 170 may be disposed on the first side portion 41A of the holder 140. For example, the position sensor 170 may be disposed in the seating portion 142A of the holder 140. For example, the position sensor 170 may be disposed in a hollow of the coil 120. In another embodiment, the position sensor 170 may be disposed outside the hollow of the coil 120.

For example, the position sensor 170 may be coupled to the circuit board 800. For example, the position sensor 170 may be coupled to the circuit board 800 via a conductive adhesive or a solder. For example, the position sensor 170 may be conductively connected to the first extension portion 802A of the second substrate 802. For example, the position sensor 170 may be conductively connected to the first extension portion 802A via a conductive adhesive or a solder.

For example, the position sensor 170 may be disposed on, coupled to, or fixed to a first surface of the first extension portion 802A. For example, the position sensor 170 may correspond to, may be opposite, or may overlap the magnet 130 in a direction perpendicular to the optical axis or in the second direction.

The position sensor 170 may detect the displacement of the bobbin 110 in the optical-axis direction.

For example, the position sensor 170 may detect a magnetic field of the magnet 130 mounted on the bobbin 110 or the intensity of the magnetic field based on movement of the bobbin 110, and may output an output signal.

For example, the position sensor 170 may be a Hall sensor. In this case, the position sensor 170 may include two input terminals to which a drive signal is applied and two output terminals from which an output signal is output. The circuit board 800 may be conductively connected to the two input terminals and two output terminals of the position sensor 170. The circuit board 800 or the controller 830 may supply a drive signal to the two input terminals of the position sensor 170, and an output signal from the two output terminals of the position sensor 170 may be transmitted to the circuit board 800 or the controller 830.

In another embodiment, the position sensor 170 may be implemented in the form of a driver IC including a Hall sensor. For example, when the position sensor 170 is a driver IC including a Hall sensor, the position sensor 170 may transmit and receive data to and from the outside through data communication using a protocol, such as I2C communication.

For example, when the position sensor 170 is a driver IC including a Hall sensor, the position sensor 170 may include first and second terminals to which power or a drive signal is input, a third terminal for a clock signal, and a fourth terminal for a data signal, and fifth and sixth terminals configured to supply a drive signal to the coil 120. The first to sixth terminals of the position sensor 170 may be conductively connected to the circuit board 800.

The coil 230 may tilt the OIS motion unit about the first axis (e.g., the X-axis) or the second axis (e.g., the Y-axis), or may rotate the OIS motion unit by a predetermined angle, due to interaction with the magnet 310 disposed on the housing 210, which is a stationary unit.

The coil 230 may include a first coil unit 230A corresponding to, opposite, or overlapping the first magnet unit 310A and a second coil unit 230B corresponding to, opposite, or overlapping the second magnet unit 310B.

For example, the first coil unit 230A may correspond to, may be opposite, or may overlap the first magnet unit 310A in the second direction, and the second coil unit 230B may correspond to, may be opposite, or may overlap the second magnet unit 310B in the third direction. For example, the first coil unit 230A may be opposite or may overlap the coil 120 in the second direction.

For example, the first coil unit 230A may be disposed on the second side portion 41B of the holder 140, and the second coil unit 230B may be disposed on the third side portion 41C of the holder 140.

For example, each of the first and second coil units 230A and 230B may include a hollow or a hole. For example, each of the first and second coil units 230A and 230B may have a ring shape or a closed curved shape. For example, the first coil unit 230A may have a ring shape wound around a straight line perpendicular to the optical axis OA and perpendicular to the outer surface of the second side portion 41B of the holder 140 as an axis, and the second coil unit 230A may have a ring shape wound around a straight line perpendicular to the optical axis OA and perpendicular to the outer surface of the third side portion 41C of the holder 140 as an axis. For example, each of the first and second coil units 230A and 230B may have a ring shape configured such that the length thereof in the transverse direction (or the third direction) is greater than the length thereof in the longitudinal direction (or the optical-axis direction).

For OIS feedback driving, the camera device 200 may include a position sensor 240. The position sensor 240 may detect displacement or angular displacement of the OIS motion unit due to tilting or rotation of the OIS motion unit.

For example, the position sensor 240 may include a first sensor 240A and a second sensor 240B. For example, the first sensor 240A may correspond to, may be opposite, or may overlap the first magnet unit 310A, and the second sensor 240B may correspond to, may be opposite, or may overlap the second magnet unit 310B. For example, at least a part of the first sensor 240A may correspond to, may be opposite, or may overlap at least a part of the first magnet unit 310A in the second direction. For example, the center of the first sensor 240A may overlap the first magnet unit 310A in the second direction. At least a part of the second sensor 240B may correspond to, may be opposite, or may overlap at least a part of the second magnet unit 310B in the third direction. For example, the center of the second sensor 240A may overlap the second magnet unit 310B in the third direction.

For example, the first sensor 240A may detect the first magnet unit 310A or a magnetic field of the first magnet unit 310A). For example, the second sensor 240B may detect the second magnet unit 310B or a magnetic field of the second magnet unit 310B.

For example, the first sensor 240A may be disposed on, coupled to, or fixed to the second extension portion 802B of the circuit board 800, and the second sensor 240B may be disposed on, coupled to, or fixed to the third extension portion 802C of the circuit board 800. For example, the first sensor 240A may be conductively connected to the second extension portion 802B, and the second sensor 240B may be conductively connected to the third extension portion 802C.

For example, the first sensor 240A may be disposed in the hollow (or the hole) of the first coil unit 230A, and the second sensor 240B may be disposed in the hollow (or the hole) of the second coil unit 230B. In another embodiment, the first sensor 240A may be disposed outside the hollow (or the hole) of the first coil unit 230A, and the second sensor 240B may be disposed outside the hollow (or the hole) of the second coil unit 230B.

For example, each of the first sensor 240A and the second sensor 240B may be a Hall sensor including first and second input terminals and first and second output terminals. For example, the first and second input terminals and the first and second output terminals of the first sensor 240A may be conductively connected to the second extension portion 802B, and the first and second input terminals and the first and second output terminals of the second sensor 240B may be conductively connected to the third extension portion 802C.

For example, the second extension portion 802B or the controller 830 may supply or apply a first drive signal to the first and second input terminals of the first sensor 240A. The first sensor 240A may output a first output signal, and the first output signal may be transmitted to the second extension portion 802B or the controller 830. The first output signal may be output to the first and second output terminals of the first sensor 240A.

For example, the third extension portion 802C or the controller 830 may supply or apply a second drive signal to the first and second input terminals of the second sensor 240B. The second sensor 240B may output a second output signal, and the second output signal may be transmitted to the third extension portion 802C or the controller 830. The second output signal may be output to the first and second output terminals of the second sensor 240B.

In another embodiment, each of the first sensor 240A and the second sensor 240B may be a driver IC including a Hall sensor. A description of an embodiment in which the position sensor 170 is a driver IC including a Hall sensor may be applied or analogically applied to an embodiment in which each of the first and second sensors 240A and 240B is a driver IC including a Hall sensor.

The camera device 200 may include a magnetic material 82 disposed opposite the coil 120 and the magnet 130. For example, the magnetic material 82 may be disposed on the holder 140 or on the second substrate 802 of the circuit board 800. For example, the magnetic material 82 may be disposed so as to correspond to, to be opposite, or to overlap the magnet 130 in the second direction. In addition, for example, the magnetic material 82 may be disposed so as to correspond to, to be opposite, or to overlap the coil 120 in the second direction. For example, the magnetic material 82 may be disposed on the first extension portion 802A of the second substrate 802. For example, the coil 120 may be disposed on the first surface of the first extension portion 802A that faces the magnet 130, and the magnetic material 82 may be disposed on a second surface of the first extension portion 802A that is opposite the first surface of the first extension portion 802A. The magnetic material 82 may be coupled, attached, or fixed to the first extension portion 802A via an adhesive.

Referring to FIGs. 10A and 10B, the housing 210 may include a cavity configured to receive the OIS motion unit. For example, the housing 210 may have a shape corresponding to the OIS motion unit, e.g., the holder 140 or the sensor base 270, such as, but not limited to, a polygonal shape (e.g., a quadrangular shape or an octagonal shape) or a circular shape (or an oval shape), and may have a variety of shapes. The housing 210 may alternatively be referred to as a "base."

The housing 210 may include a plurality of side portions 71A to 71D corresponding to the side portions 41A to 41D of the holder 140 or the side portions 51A to 51D of the sensor base 270. The housing 210 may include a corner located between two adjacent side portions.

In addition, the housing 210 may include a lower portion 42 (or a lower plate) located under the side portions 71A to 71D. The lower portion 42 may be connected to a lower side of each of the side portions 71A to 71D. For example, the lower portion 42 may alternatively be referred to as a "bottom portion," a "bottom surface," or a "body." For example, the side portions 71A to 71D may protrude upward from the lower portion 42.

The housing 210 has a first side portion 71A corresponding to, opposite, or overlapping the first side portion 41A of the holder 140, a second side portion 71B corresponding to, opposite, or overlapping the second side portion 41B of the holder 140, a third side portion 71C corresponding to, opposite, or overlapping the third side portion 41C of the holder 140, and a fourth side portion 71D corresponding to, opposite, or overlapping the fourth side portion 41D of the holder 140.

The first side portion 71A (or a first side surface or a first outer surface) of the housing 210 may be located opposite the second side portion 71B (or a second side surface or a second outer surface) of the housing 210, and the third side portion 71C (or a third side surface or a third outer surface) of the housing 210 may be located opposite the fourth side portion 71D (or a fourth side surface or a fourth outer surface) of the housing 210.

For example, each of the first to fourth side portions 71A to 71D of the housing 210 may be disposed parallel to a corresponding one of the side plates 302 of the cover member 300.

The housing 210 may include a step 411 disposed on a lower portion of at least one of the side portions 71A to 71D. For example, the step 411 may protrude from an outer surface of each of the side portions 71A to 71D of the housing 210 in a direction perpendicular to the optical axis. For example, the step 411 may be opposite or may overlap the side plate 302 of the cover member 300 in the optical-axis direction. For example, the step 411 may be coupled to the side plate 302 of the cover member 300 via an adhesive.

The housing 210 may include seating portions 141A and 141B on which the magnet 310 is disposed. For example, each of the seating portions 141A and 141B may be a recess formed in the side portion of the housing 210. In another embodiment, each of the seating portions 141A and 141B may be a through-hole formed through the side portion of the housing 210.

The housing 210 may include a first seating portion 141A on which the first magnet unit 310A is disposed and a second seating portion 141B on which the second magnet unit 310B is disposed. For example, the first seating portion 141A may be disposed or formed on the second side portion 71B of the housing 210, and the second seating portion 141B may be disposed or formed on the third side portion 71C of the housing 210. For example, the first seating portion 141A may be disposed or formed on an inner surface of the second side portion 71B of the housing 210, and the second seating portion 141B may be disposed or formed on an inner surface of the third side portion 71C of the housing 210.

The magnet 310 may include a first magnet unit 310A disposed on the second side portion 71B of the housing 210 and a second magnet unit 310B disposed on the third side portion 71B of the housing 210.

For example, the first magnet unit 310A and the second magnet unit 310B may be disposed so as to be misaligned with each other in the second direction or the third direction. For example, the first magnet unit 310A and the second magnet unit 310B may be disposed on the housing 210 so as not to overlap each other in the second direction or the third direction. For example, the first magnet unit 310A and the second magnet unit 310B may be disposed on two different side portions of the housing 210 so as not to overlap each other in the second direction or the third direction.

In another embodiment, the magnet 310 may be disposed on the holder 140, and the coil 230 may be disposed on the housing 210. For example, in FIG. 3, the magnet 310 and the coil 230 may be disposed such that the positions thereof are reversed. In this case, the camera device 200 may include a separate energizing portion configured to conductively connect the second coil 230 and the circuit board 800 to each other, such as a circuit board, a circuit member, or a conductive member.

Each of the first magnet unit 310A and the second magnet unit 310B may be a two-pole magnet including one N pole and one S pole. For example, each of the first magnet unit 310A and the second magnet unit 310B may be a two-pole magnet with an N pole and an S pole separated or disposed in the optical-axis direction. For example, the N pole (or the S pole) of each of the first magnet unit 310A and the second magnet unit 310B may be located higher than the S pole (or the N pole) thereof.

In another embodiment, each of the first magnet unit 310A and the second magnet unit 310B may be a two-pole magnet with an N pole and an S pole separated or disposed in a direction perpendicular to the optical-axis direction. In another embodiment, each of the first magnet unit 310A and the second magnet unit 310B may be a four-pole magnet including two N poles and two S poles.

The housing 210 may include a receiving portion 49A configured to receive the magnetic material 32. The receiving portion 49A may be disposed or formed in the lower portion 42 of the housing 210. The receiving portion 49A may be disposed or formed in an upper surface of the lower portion 42 of the housing 210. For example, the receiving portion 49A may be a recess depressed from the upper surface of the lower portion 42 of the housing 210. The receiving portion 49A may have a shape corresponding to the magnetic material 32, such as a quadrangular shape or a circular shape. For example, the receiving portion 49A of the housing 210 may correspond to, may be opposite, or may overlap the receiving portion 28A of the sensor base 270 in the optical-axis direction.

Although not shown in FIG. 10A, the housing 210 may include a recess in which at least another part of the moving plate 60 is disposed or received.

The housing 210 may include a recess 55 in which the rolling member 63 is disposed or received. The recess 55 may be formed in the upper surface of the lower portion 42 of the housing 210. For example, the recess 55 may be depressed from the upper surface of the lower portion 42 of the housing 210. The number of the recesses 55 of the housing 210 may be equal to the number of the rolling members 63.

For example, the recess 55 may include two recesses 55A and 55B spaced apart from each other. For example, the two recesses 55A and 55B may be disposed spaced apart from each other in the Y-axis direction. For example, the direction in which the recesses 55A and 55B of the housing 210 are spaced apart from each other and the direction in which the two recesses 29A and 29B of the sensor base 270 are spaced apart from each other may be perpendicular to each other. For example, the receiving portion 49A may be disposed between the two recesses 55A and 55B of the housing 210.

The recess 55 of the housing 210 may contact the rolling member 63 at at least one point. For example, the recess 55 may include a bottom surface and at least one side surface connected to the bottom surface. The at least one side surface of the recess 55 may be an inclined surface. For example, the recess 55 may include a bottom surface and a plurality of inclined surfaces. The inclined surfaces of the recess 55 may have the same shape. In another embodiment, at least one of the inclined surfaces of the recess 55 may have a different shape from the others.

The housing 210 may include a protrusion 215 protruding in a direction perpendicular to the optical axis. For example, the protrusion 215 may protrude from the side portion of the housing 210.

For example, the protrusion 215 may protrude from an outer surface of the fourth side portion 71D of the housing 210. For example, the protrusion 215 may be formed by at least a part of the fourth side portion 71D protruding in a direction parallel to a straight line that passes through the optical axis and is perpendicular to the optical axis. For example, the protrusion 215 may include a recess 16A (or a cavity) in which at least a part of the fourth substrate 804 is disposed or received. For example, the recess 16A of the protrusion 215 may include an opening that opens upward.

Referring to FIG. 10A, the recess 16A of the protrusion 215 may be provided with coupling recesses 215A and 215B for insertion, coupling, or fixing of the movement inhibition portion 80. For example, the coupling recesses 215A and 215B may be formed in two facing inner surfaces of the recess 16A of the protrusion 215. For example, the coupling recesses 215A and 215B may extend in the optical-axis direction. For example, for easy insertion or coupling of the movement inhibition portion 80 from above, each of the coupling recesses 215A and 215B may include an opening that opens to an upper surface of the protrusion 215.

The maximum length of the protrusion 215 in the optical-axis direction may be less than the maximum length of the housing 210 in the optical-axis direction. In this configuration, space for the circuit board 800 to extend outward may be easily secured, and a compact camera device may be implemented.

The camera device 200 may include a movement inhibition portion 80 coupled to at least a part of the housing 210. The movement inhibition portion 80 may inhibit movement or motion of at least a part of the fourth substrate 804 to inhibit deformation of the shape of at least a part of the fourth substrate 804.

Referring to FIGs. 7C, 8, and 11, the fourth substrate 804 of the circuit board 800 may include a first portion 804A (or a "first region") connected to the first substrate 801, a second portion 804B connected to the first portion 804A and bent from the first portion 804A, and a third portion 804C connected to the second portion 804B and bent from the second portion 804B. In another embodiment, at least one of the first portion 804A and the second portion 804B may be omitted.

For example, the first portion 804B may extend in a direction parallel to the first substrate 801. For example, the second portion 804B may be bent from the first portion 804B and may extend from the first portion 804B in the upward direction. For example, the third portion 804C may extend from the second portion 804B in a direction opposite the first portion 804A.

For example, the fourth substrate 804 may include a first bent portion 804D connecting the first portion 804A and the second portion 804B to each other. In addition, the fourth substrate 804 may include a second bent portion 804E connecting the second portion 804B and the third portion 804C to each other. The first bent portion 804D and the second bent portion 804E may be angled, and for example, the first portion 804A and the second portion 804B may be perpendicular to each other. In another embodiment, the first bent portion 804D and the second bent portion 804E may be rounded. In another embodiment, the interior angle between the first portion 804A and the second portion 804B may be an acute angle or an obtuse angle.

The first bent portion 804D and the second bent portion 804E may prevent an increase in the length of the camera device 200 in a direction perpendicular to the optical-axis direction. In addition, since the first bent portion 804D and the second bent portion 804E are located between the upper surface of the camera device 200 (e.g., the upper surface of the cover member 300) and the lower surface of the camera device 200 (e.g., the lower surface of the housing 210), an increase in the length of the camera device 200 in the optical-axis direction may be prevented, whereby it is possible to implement miniaturization of the camera device.

For example, the third portion 804C may be in the form of a plate or plane perpendicular to the optical axis. For example, the third portion 804C may include a meandering shape or a serpentine shape. For example, the third portion 804C may include at least one bent or curved region. For example, the bent or curved region of the third portion 804C may be bent in the second direction or the third direction, which is perpendicular to the optical axis. Alternatively, the bent or curved region of the third portion 804C may extend in a direction perpendicular to the optical axis. For example, when viewed from above, the third portion 804C may include a region having a U shape or a V shape.

For example, the third portion 804C may be spaced apart from the housing 210. For example, the third portion 804C may be spaced apart from the protrusion 215 of the housing 210. In another embodiment, for example, at least a part of the third portion 804C may be in contact with the protrusion 215 of the housing 210.

At least a part of the second portion 804B of the fourth substrate 804 may be disposed in the protrusion 215 of the housing 210. At least a part of the second portion 804B of the fourth substrate 804 may be disposed in the recess 16A of the protrusion 215 of the housing 210. For example, at least a part of the first portion 804A of the fourth substrate 804 may be disposed in the recess 16A of the protrusion 215. The third portion 804C of the fourth substrate 804 may be located outside the protrusion 215 of the housing 210. For example, the third portion 804C of the fourth substrate 804 may be located higher than the protrusion 215 of the housing 210. A lower surface of the third portion 804C of the fourth substrate 804 may be located higher than the upper surface of the protrusion 215 of the housing 210.

The connector 805 may be coupled or connected to another external connector of the camera device 200 or to an external device. The connector 805 connected to the other external connector may correspond to a stationary unit that does not move when OIS is performed. Since the third portion 804C of the fourth substrate 804 includes at least one bent or curved region, it is possible to flexibly support the camera device 200 or the OIS motion unit and to cushion external impact. That is, the third portion 804C of the fourth substrate 804 may serve as a spring configured to cushion impact. In addition, since the third portion 804C of the fourth substrate 804 may serve to flexibly support the OIS motion unit, it is possible to reduce drive force or drive power required to perform OIS.

The camera device 200 may include a reinforcement member 70 disposed on, coupled to, or attached to at least a part of the fourth substrate 804. The reinforcement member 70 may be disposed on, coupled to, or attached to at least one of the first portion 804A and the second portion 804B of the fourth substrate 804. For example, the reinforcement member 70 may be disposed on, coupled to, or attached to at least a part of the first portion 804A of the fourth substrate 804 and at least a part of the second portion 804B of the fourth substrate 804.

Referring to FIG. 11, for example, the reinforcement member 70 may be disposed on, coupled to, or attached to a lower surface of the first portion 804A of the fourth substrate 804 and a lower surface of the second portion 804B of the fourth substrate 804. For example, the reinforcement member 70 may include a first region 70A disposed on, coupled to, or attached to the first portion 804A and a second region 70B disposed on, coupled to, or attached to the second portion 804B. The second region 70B may be bent upward from the first region 70A. For example, a bent portion may be formed between the first region 70A and the second region 70B.

For example, the area of the second region 70B may be greater than the area of the first region 70A. In another embodiment, both may be equal, or the area of the former 70B may be less than the area of the latter 70A.

For example, the reinforcement member 70 may be spaced apart from the third portion 804C of the fourth substrate 804. For example, the second region 70B of the reinforcement member 70 may be spaced apart from the third portion 804C of the fourth substrate 804. In another embodiment, at least a part of the second region 70B of the reinforcement member 70 may be in contact with the third portion 804C of the fourth substrate 804.

In another embodiment, the reinforcement member 70 may be disposed on, coupled to, or attached to an upper surface of the first portion 804A of the fourth substrate 804 and an upper surface of the second portion 804B of the fourth substrate 804. For example, in another embodiment, the reinforcement member 70 may include a first region disposed on the upper surface of the first portion 804A of the fourth substrate 804 and a second region disposed on the upper surface of the second portion 804B of the fourth substrate 804.

In another embodiment, the reinforcement member 70 may be disposed on, coupled to, or attached to at least a part of the second portion 804B of the fourth substrate 804 and at least a part of the third portion 804C of the fourth substrate 804. For example, in another embodiment, the reinforcement member 70 may be disposed on, coupled to, or attached to the second portion 804B and the third portion 804C of the fourth substrate 804. For example, the reinforcement member 70 may include a first region disposed on, coupled to, or attached to the second portion 804B of the fourth substrate 804 and a second region disposed on, coupled to, or attached to the third portion 804C, and a bent portion may be formed between the first region and the second region. The first region of the reinforcement member 70 may be disposed on the lower surface (or the upper surface) of the second portion 804B, and the second region of the reinforcement member 70 may be disposed on the lower surface (or the upper surface) of the third portion 804C.

The reinforcement member 70 may prevent the fourth substrate 804 from being damaged, deformed, or broken by impact or external force. In addition, the reinforcement member 70 may serve to inhibit deformation and restoration of the shape of the fourth substrate 804 as the fourth substrate 804 is forced by tilting of the OIS motion unit 100. For example, the reinforcement member 70 may include at least one of a metal material and an injection molded material.

For example, the reinforcement member 70 may be disposed in the recess 16A of the protrusion 215 of the housing 210. For example, at least a part of the reinforcement member 70 may be in contact with the recess 16A of the protrusion 215 of the housing 210. For example, the reinforcement member 70 may not be coupled to the housing 210 (e.g., the protrusion 215). In another embodiment, for example, the reinforcement member 70 may be coupled to the housing 210 (e.g., the protrusion 215) via an adhesive.

Referring to FIGs. 1, 10A, and 10B, the movement inhibition portion 80 may be coupled to the protrusion 215 of the housing 210. For example, the movement inhibition portion 80 may be coupled to the coupling recesses 215A and 215B of the protrusion 215 of the housing 210.

Referring to FIG. 3, at least a part of the second portion 804B of the fourth substrate 804 may be disposed between the movement inhibition portion 80 and an inner surface of the protrusion 215 of the housing 210. For example, at least a part of the reinforcement member 70 may be disposed between the movement inhibition portion 80 and the inner surface of the protrusion 215 of the housing 210.

The movement inhibition portion 80 may be spaced apart from the circuit board 800 in the second direction (the X-axis direction) or the third direction (the Y-axis direction). For example, the movement inhibition portion 80 may be disposed spaced apart from the circuit board 800 in the optical-axis direction or in a direction perpendicular to the optical-axis direction. That is, the movement inhibition portion 80 may serve to maintain the shape of the bent portions 804D and 804E of the fourth substrate 804, which is a flexible substrate. For example, the movement inhibition portion 80 may be formed by injection-molding a non-magnetic material or a resin. In another embodiment, the movement inhibition portion 80 may be in contact with at least a part of the fourth substrate 804 of the circuit board 800.

Movement or motion of at least a part of the second portion 804B of the fourth substrate 804 disposed in the recess 16A of the protrusion 215 may be restricted by the movement inhibition portion 80, and the second portion 804B may be inhibited or prevented from moving out of the recess 16A of the protrusion 215. This may inhibit or prevent the OIS motion unit from being affected by restoring force of the fourth substrate 804 when OIS is performed, thereby enabling OIS to be accurately performed and improving reliability of OIS operation. The movement inhibition portion 80 may alternatively be referred to as a "clamp."

The cover member 300 may form a receiving space with the housing 210, and the OIS motion unit may be disposed in the receiving space. For example, the cover member 300 may be in the form of a box having an open lower portion. For example, the cover member 300 may include an upper plate 301 and a side plate 302 connected to the upper plate 301.

A lower end of the side plate 302 of the cover member 300 may be coupled to the housing 210. The shape of the upper plate 301 of the cover member 300 may be polygonal (e.g., quadrangular or octagonal) or circular. The upper plate 301 of the cover member 300 may include an opening 303 configured to expose the lens (not shown) to external light. The opening 303 may be a through-hole formed through the upper plate 301 of the cover member 300 in the optical-axis direction. For example, the cover member 300 may include a plurality of side plates. The material of the cover member 300 may be a non-magnetic material. In another embodiment, the cover member 300 may be made of a magnetic material. For example, the material of the cover member 300 may be an injection-molded material, such as a resin, or a metal material.

Referring to FIGs. 1 and 2A, the cover member 300 may include an opening 304 disposed or formed in the side plate 302 to avoid spatial interference with the protrusion 215 of the housing 210. For example, the protrusion 215 of the housing 210 may extend through the opening 304 of the cover member 300 and may protrude from the side plate 302 of the cover member 300.

The cover member 300 may include a protrusion 305 disposed above the opening 304 and protruding from the side plate 302. The protrusion 305 may be in the shape of a plate. For example, the protrusion 305 of the cover member 300 may be disposed on the protrusion 215 of the housing 210. For example, the protrusion 305 may be disposed on an upper portion of the recess 16A of the protrusion 215 of the housing 210. For example, the protrusion 305 may be disposed on an upper side of the movement inhibition portion 80. For example, the protrusion 305 may overlap the movement inhibition portion 80 in the optical-axis direction. In addition, for example, the protrusion 305 may overlap the first portion 804A of the fourth substrate 804 in the optical-axis direction. The protrusion 305 may inhibit or prevent separation of the movement inhibition portion 80, and may protect the movement inhibition portion 80 and the fourth substrate 804 from impact.

Referring to FIG. 4E, the cover member 300 may include a boss 311 projecting from the upper plate 301. For example, the boss 311 may project from an inner surface of the upper plate 301 of the cover member 300 toward the bobbin 110 or the rolling member 21. For example, the boss 311 may be opposite or may overlap the receiving portion 116 of the bobbin 110 in the optical-axis direction. At least a part of the boss 311 may be inserted or disposed in the receiving portion 116 of the bobbin 110. The boss 311 may be disposed on the rolling member 21.

For example, the cover member 300 may include a first boss 311A corresponding to, opposite, or overlapping the first rolling member 21A or the first receiving portion 116A of the bobbin 110. For example, the cover member 300 may include a second boss 311B corresponding to, opposite, or overlapping the second rolling member 21B or the second receiving portion 116B of the bobbin 110. For example, the boss 311 may include a recess depressed from the upper surface of the upper plate 301 of the cover member 330. In another embodiment, the boss 311 may include no recess.

As the cover member 300 is provided with the boss 311, the embodiment may prevent the rolling member 21 from being separated from the receiving portion 116 of the bobbin 110. In addition, the boss 311 may serve as a stopper configured to prevent further movement of the bobbin 110 within a limited range in the upward direction.

Next, the support unit will be described.

The support unit may be disposed between the sensor base 270 and the housing 210, and may support the sensor base 270 with respect to the housing 210. The support unit may include a moving plate 60 disposed between the sensor base 270 and the housing 210. In addition, the support may include a rolling member 62 disposed between the moving plate 60 and the sensor base 270. In addition, the support unit may include a rolling member 63 disposed between the moving plate 60 and the housing 210. The moving plate 60 may alternatively be referred to as a "driving plate," a "mover," a "mover plate," a "drive plate," a "plate," a "rotating plate," a "tilting plate," a "moving plate," or a "support plate."

The moving plate 60 may be tiltable about the first axis or the second axis or rotatable by a predetermined angle.

For example, the moving plate 60 may be disposed between the lower portion (or the lower surface) of the sensor base 270 and the lower portion 42 of the housing 210. For example, at least a part of the moving plate 60 may be disposed in the seating portion 25A of the sensor base 270. Since the moving plate 60 is disposed in the seating portion 25A, the length or height of the camera device 200 in the optical-axis direction may be reduced.

Referring to FIGs. 4B, 9A, and 12, the moving plate 60 may be in the form of a plate. For example, the length of the moving plate 60 in a horizontal direction perpendicular to the optical axis (e.g., in the transverse direction or the longitudinal direction) may be greater than the length of the moving plate 60 in the optical-axis direction.

Referring to FIG. 9A, the moving plate 60 may include a recess 65 in which at least a part of the rolling member 62 is disposed. The recess 65 may be disposed or formed in a first surface 6A of the moving plate 60. The first surface 6A may be a surface opposite or facing the holder 260. The recess 65 may be depressed from the first surface 6A of the moving plate 60.

For example, the moving plate 60 may include a first recess 65A in which at least a part of the first ball member 62A is disposed and a second recess 65B in which at least a part of the second ball member 62B is disposed.

For example, the recesses 65A and 65B may be disposed spaced apart from each other in the second direction (e.g., the X-axis direction). For example, the ball members 62A and 62B may be disposed spaced apart from each other in the second direction (e.g., the X-axis direction).

In another embodiment, the recesses of the moving plate 60 in which the ball members 62A and 62B are disposed may be disposed spaced apart from each other in the third direction (e.g., the Y-axis direction). That is, in another embodiment, the ball members of the rolling member 62 may be disposed spaced apart from each other in the third direction.

The recess 65 may contact the rolling member 62 at at least one point. For example, the recess 65 may include a bottom surface and at least one side surface connected to the bottom surface. The at least one side surface of the recess 65 may be an inclined surface. For example, the recess 65 may include a bottom surface and a plurality of inclined surfaces. The inclined surfaces of the recess 65 may have the same shape. In another embodiment, at least one of the inclined surfaces of the recess 65 may have a different shape from the others.

Referring to FIG. 9B, the moving plate 60 may include a recess 66 in which at least a part of the rolling member 63 is disposed. The recess 66 may be disposed or formed in a second surface 6B of the moving plate 60. The second surface 6B may be a surface opposite or facing the housing 120. In addition, the second surface 6B may be a surface opposite the first surface 6A of the moving plate 60. The recess 66 may be depressed from the second surface 6B of the moving plate 60.

For example, the moving plate 60 may include a first recess 66A in which at least a part of the first ball member 63A is disposed and a second recess 66B in which at least a part of the second ball member 63B is disposed. For example, the recesses 66A and 66B may be disposed spaced apart from each other in the third direction (e.g., the Y-axis direction). For example, the ball members 63A and 63B may be disposed spaced apart from each other in the third direction (e.g., the y-axis direction).

In another embodiment, the recesses of the moving plate 60 in which the ball members 63A and 63B are disposed may be disposed spaced apart from each other in the second direction (e.g., the X-axis direction). That is, in another embodiment, the ball members of the rolling member 63 may be disposed spaced apart from each other in the second direction.

The recess 66 may contact the rolling member 63 at at least one point. For example, the recess 66 may include a bottom surface and at least one side surface connected to the bottom surface. The at least one side surface of the recess 66 may be an inclined surface. For example, the recess 66 may include a bottom surface and a plurality of inclined surfaces. The inclined surfaces of the recess 66 may have the same shape. In another embodiment, at least one of the inclined surfaces of the recess 66 may have a different shape from the others.

The moving plate 60 may include a first escape portion 61A configured to avoid spatial interference with the gyro sensor 820. In addition, the moving plate 60 may include a second escape portion 61B provided at a position corresponding or symmetrical to the first escape portion 61A. The second escape portion 61B may be weight-balanced with the first escape portion 61A to balance tilting or rotation of the moving plate 60, thereby improving reliability of the OIS operation.

For example, the first escape portion 61A may be a recess depressed from one region of the outer surface of the moving plate 60. The second escape portion 61B may be a recess depressed from another region of the outer surface of the moving plate 60. For example, the moving plate 60 may include four corner portions (or corner regions), wherein the first escape portion 61A may be formed at a first corner portion of the moving plate 60, and the second escape portion 61B may be formed at a second corner portion located opposite the first corner portion. The third corner portion and the fourth corner portion of the moving plate 60 may be rounded, but in another embodiment, at least one of the first to fourth corner portions may be right-angled.

The moving plate 60 may include an opening 60A corresponding to, opposite, or overlapping the magnet 31 and/or the magnetic material 32. For example, the opening 60A may correspond to, may be opposite, or may overlap the protrusion 28 of the sensor base 270. The weight of the moving plate 60 may be reduced by the opening 60A, which may result in a lighter camera device 200.

For example, the opening 60A of the moving plate 60 may be disposed at a position corresponding to the protrusion 28 of the sensor base 270in order to avoid spatial interference with the protrusion 28 of the sensor base 270. In addition, the opening 60A may be formed to avoid spatial interference with the magnet 31 and the protrusion 28 of the sensor base 270.

For example, the opening 60A of the moving plate 60 may be a through-hole. For example, the opening 60A may be formed through the moving plate 60 in the first direction (the Z-axis direction) or the optical-axis direction. For example, at least a part of the opening 60A of the moving plate 60 may include a shape corresponding to the protrusion 28 of the sensor base 270. For example, the opening 60A may include a circular shape, an oval shape, and a polygonal shape, such as a quadrangular shape.

For example, the transverse length of the opening 60A may be greater than the transverse length of the protrusion 28 of the sensor base 270. In another embodiment, the transverse length of the opening 60A may be equal to the transverse length of the protrusion 28 of the sensor base 270. The longitudinal length of the opening 60A may be greater than the longitudinal length of the protrusion 28 of the sensor base 270. In another embodiment, the longitudinal length of the opening 60A may be equal to the longitudinal length of the protrusion 28 of the sensor base 270.

At least a part of the protrusion 28 of the sensor base 270 may be disposed in the opening 60A of the moving plate 60. For example, the protrusion 28 of the sensor base 270 may overlap the opening 60A of the moving plate 60 in the optical-axis direction. In addition, for example, the protrusion 28 of the sensor base 270 may overlap the moving plate 60 in a direction perpendicular to the optical-axis direction. This may reduce the length or height of the camera device 200 in the optical-axis direction.

For example, the opening 60A may be disposed between the recesses 65A and 65B of the moving plate 60. In addition, the opening 60A may be disposed between the recesses 66A and 66B of the moving plate 60.

For example, the moving plate 60 may be made of an injection-molded material. For example, the moving plate 60 may be made of a plastic, resin, or ceramic material. In another embodiment, the moving plate 60 may include a metal, such as SUS. In addition, the moving plate 60 may be made of a non-magnetic material. In another embodiment, the moving plate 60 may be made of a magnetic material.

The rolling member 62 and the rolling member 63 may be disposed side by side in the direction in which the rolling member 62 and the rolling member 63 intersect or are perpendicular to each other. The OIS motion unit may be rotated, pivoted, or tilted relative to one of the second and third directions by the rolling member 62. The OIS motion unit may be rotated, pivoted, or tilted relative to the other of the second and third directions by the rolling member 63.

The rolling member 62 may be disposed between the sensor base 270 and the moving plate 60. The rolling member 62 may include one or more ball members. In FIG. 2A, the rolling member 62 is shown as including two ball members, but in another embodiment, the rolling member 62 may include three or more ball members.

For example, the rolling member 62 may be disposed between the lower portion (or the lower surface) of the sensor base 270 and the first surface 6A of the moving plate 60. For example, the rolling member 62 may be disposed between the recess 29 of the sensor base 270 and the recess 65 of the moving plate 60. A lubricant may be disposed in at least one of the recess 29 of the sensor base 270 and the recess 65 of the moving plate 60 in order to reduce frictional force.

The rolling member 63 may be disposed between the moving plate 60 and the housing 210.

The rolling member 63 may include one or more ball members. In FIG. 2A, the rolling member 63 is shown as including two ball members, but in another embodiment, the rolling member 63 may include three or more ball members.

For example, the rolling member 63 may be disposed between the second surface 6B of the moving plate 60 and the lower portion 42 of the housing 210. For example, the rolling member 63 may be disposed between the recess 66 of the moving plate 60 and the recess 55 of the housing 210. A lubricant may be disposed in at least one of the recess 66 of the moving plate 60 and the recess 55 of the housing 210 in order to reduce frictional force.

The rolling members 62 and 63 may be members configured to perform rolling motion. For example, each of the rolling members 62 and 63 may be a "ball," a "ball member," or a "ball bearing." The number of each of the rolling members 62 and 63 is shown as two, but may be one or three or more in another embodiment. Since the rolling members 62 and 63 perform rolling or sliding motion, frictional force therebetween may be relatively reduced, which may reduce current consumption or power consumption necessary for OIS operation.

Referring to FIG. 4D, the rolling member 21 may not overlap the moving plate 60 in the optical-axis direction. For example, as shown in FIG. 4C, the rolling member 21 may not overlap the moving plate 60 in a direction perpendicular to the optical axis.

For example, the direction in which the first rolling member 21A and the second rolling member 21B are spaced apart from each other may be perpendicular to or may intersect the direction in which the ball member 62A and the ball member 62B are spaced apart from each other. In another embodiment, the former and the latter may be parallel to each other.

For example, the direction in which the first rolling member 21A and the second rolling member 21B are spaced apart from each other may be parallel to or may intersect the direction in which the ball member 63A and the ball member 63B are spaced apart from each other. In another embodiment, the former and the latter may be perpendicular to each other.

For example, when viewed from above, the distance between the ball member 63A and the ball member 63B may be less than the distance between the first rolling member 21A and the second rolling member 21B. In another embodiment, the distance between the ball member 63A and the ball member 63B may be equal to or greater than the distance between the first rolling member 21A and the second rolling member 21B.

For example, when viewed from above, the distance between the ball member 62A and the ball member 62B may be less than the distance between the first rolling member 21A and the second rolling member 21B. In another embodiment, the distance between the ball member 62A and the ball member 62B may be equal to or greater than the distance between the first rolling member 21A and the second rolling member 21B.

The support unit may include a magnet 31 disposed on the OIS motion unit (e.g., the sensor base 270) and a magnetic material 32 disposed on the stationary unit (e.g., the housing 210). In another embodiment, the magnet 31 may be disposed on the stationary unit (e.g., the housing 210), and the magnetic material 32 may be disposed on the OIS motion unit (e.g., the sensor base 270). The magnet 31 may alternatively be referred to as a "magnetic material," a "yoke," or a "holding magnet."

For example, the magnet 31 may be disposed in or coupled to the recess 28A of the protrusion 28 of the sensor base 270. At least a part of the magnet 31 may be disposed in the opening 60A of the moving plate 60. For example, the magnet 31 may be opposite or may overlap the opening 60A of the moving plate 60 in the optical-axis direction. For example, the magnet 31 may not overlap the moving plate 60 in the optical-axis direction. In addition, for example, at least a part of the magnet 31 may overlap the moving plate 60 in a direction perpendicular to the optical axis.

The magnet 31 may correspond to, may be opposite, or may overlap the magnetic material 32 in the optical-axis direction. The magnet 31 may be a two-pole magnet including an N pole and an S pole. For example, the magnet 31 may be a two-pole magnet with an N pole and an S pole separated or disposed in the optical-axis direction. In another embodiment, the magnet 31 may be a two-pole magnet with an N pole and an S pole separated or disposed in a direction perpendicular to the optical-axis direction. In another embodiment, the magnet 31 may be a four-pole magnet including two N poles and two S poles.

The magnetic material 32 may be disposed under the magnet 31. The magnetic material 32 may be disposed in the recess 46 of the housing 210. For example, the magnetic material 32 may be coupled to the recess 46 of the housing 210.

The magnetic material 32 may overlap the opening 60A of the moving plate 60 in the optical-axis direction. The magnetic material 32 may not overlap the moving plate 60 in the optical-axis direction. The magnetic material 32 may not overlap the moving plate 60 in a direction perpendicular to the optical axis. In another embodiment, the magnetic material 32 may overlap the moving plate 60 in a direction perpendicular to the optical axis.

When viewed from above, the area of the opening 60A of the moving plate 60 may be greater than the area of the upper surface (or the lower surface) of the magnet 31. In addition, when viewed from above, the area of the opening 60A of the moving plate 60 may be greater than the area of the upper surface (or the lower surface) of the magnetic material 32.

For example, attractive force may act between the magnetic material 32 and the magnet 31 in the optical-axis direction (or the first direction). The magnetic material 32 may be made of a material that sticks to the magnet 31. For example, the magnetic material 32 may be a metal material that sticks to a magnet. Alternatively, the magnetic material 32 may be made of a metal material that is magnetic. Alternatively, for example, the magnetic material 32 may be a magnet. The magnetic material 32 may alternatively be referred to as a "yoke."

The attractive force between the magnetic material 32 and the magnet 31 may cause the sensor base 270 and the housing 210 to press the moving plate 60, and the moving plate 60 and the rolling members 62 and 63 may be brought into tight contact with the sensor base 270 and/or the housing 210. The moving plate 60 and the rolling members 62 and 63 may stably support the OIS motion unit with respect to the stationary unit due to the attractive force between the magnetic material 32 and the magnet 31, whereby stable OIS operation may be performed.

In addition, since at least a part of the magnet 31 is disposed in the opening 60A of the moving plate 60, the distance between the magnet 31 and the magnetic material 32 may be reduced, which may increase the attractive force between the magnet 31 and the magnetic material 32, and the OIS motion unit may be stably supported with respect to the stationary unit.

In addition, since the magnet 31 is disposed on a central region of the lower surface of the sensor base 270 and the magnetic material 32 is disposed on the center of the lower portion 42 of the housing 210, the attractive force between the magnet 31 and the magnetic material 32 may be concentrated on the center of the sensor base 270 and the center of the housing 210, which may efficiently and reliably support the OIS motion unit.

In another embodiment, the protrusion of the sensor base 270 may be omitted, the magnet 31 may be disposed on the lower surface of the sensor base 270, the housing 210 may include a protrusion disposed on the lower portion 42 of the housing 210 so as to correspond to, to be opposite, or to overlap the opening 60A of the moving plate 60, and the magnetic material 32 may be disposed on the protrusion of the housing 210. In this case, the seating portion 25A of the sensor base 270 may be omitted, a seating portion corresponding to or identical to the seating portion 25A of the sensor base 270 may be formed on the upper surface of the lower portion 42 of the housing 210, the moving plate 60 may be disposed in the seating portion of the housing 210, the protrusion may protrude from the bottom surface of the seating portion of the housing 210, a recess in which the magnetic material 32 is disposed may be formed in the protrusion of the housing 210, and a recess in which the magnet 31 is disposed may be formed in the lower surface of the sensor base 270. In another embodiment, at least a part of the protrusion of the housing 210 may be disposed in the opening 60A of the moving plate 60, and may overlap the moving plate 60 in a direction perpendicular to the optical axis. Also, in another embodiment, the magnet 31 may be disposed on the protrusion of the housing 210 (or in the recess of the protrusion), and the magnetic material 32 may be disposed on the sensor base 270 (or in the recess of the sensor base 270).

In another embodiment, the rolling members 62 and 63 may be omitted, and the moving plate may include first bosses disposed or formed at the positions of the recesses 65A and 65B and second bosses disposed or formed at the positions of the recesses 66A and 66B. In this case, the first bosses may project from the first surface 6A of the moving plate 60, and the second bosses may project from the second surface 6B of the moving plate 60. For example, each of the first bosses may be hemispherical or dome-shaped, and each of the second bosses may be hemispherical, semicircular, semi-elliptical, or dome-shaped. That is, in another embodiment, the rolling member may be integral with the moving plate.

In another embodiment, the moving plate 60 may be omitted, and the support unit may include a rolling member, such as a ball member, disposed between the sensor base 270 and the housing 210. In this case, the rolling member may include two first ball members disposed in a direction parallel to the first axis and two second ball members disposed in a direction parallel to the second axis, and the OIS motion unit may be tilted about the first ball members as an axis or may be rotated by a predetermined angle, and may be tilted about the second ball members as an axis or may be rotated by a predetermined angle, whereby a hand-tremor compensation operation may be performed.

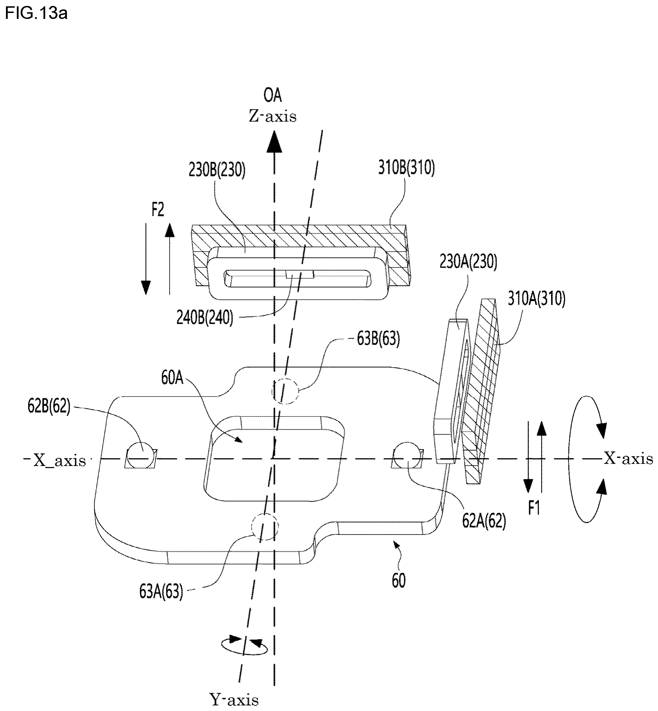

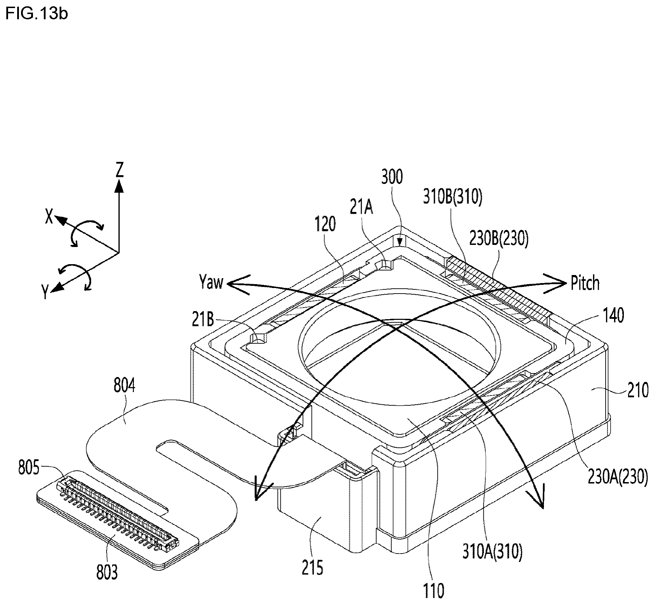

FIG. 13A is a view illustrating electromagnetic forces F1 and F2 due to interaction between the magnet units 310A and 310B and the coil units 230A and 230B and the motion of the moving plate 60, and FIG. 13B shows the motion of the OIS motion unit 100 due to the electromagnetic forces of FIG. 13A.

The motion of the OIS motion unit by an OIS operation unit will be described with reference to FIGs. 13A and 13B. The OIS operation unit may include a coil 230 and a magnet 310. In addition, the OIS operation unit may include a position sensor 240.

First electromagnetic force F1 may be generated by interaction between the first magnet unit 310A and the first coil unit 230A. For example, the first electromagnetic force F1 may be exerted in the optical-axis direction, such as the upward direction or the downward direction.

The OIS motion unit may be tilted about the second axis (e.g., the Y-axis) (or the ball member 63) by the first electromagnetic force F1. For example, the OIS motion unit may be second-axis tilted by the first electromagnetic force F1. Here, second-axis (Y-axis) tilting means that the OIS motion unit is tilted about the second axis (the Y-axis) or the OIS motion unit is rotated leftward and rightward about the second axis (the Y-axis) by a predetermined angle.

For example, the moving plate 60 may be tilted about the second axis (e.g., the Y-axis) (or the ball member 63) by the first electromagnetic force F1. For example, the moving plate 60 may be second-axis tilted by the first electromagnetic force F1.

Referring to FIG. 4B, a gap or space may be present between the moving plate 60 and the OIS motion unit (e.g., the sensor base 270) by the first ball members 62A and 62B in order for the OIS motion unit to be tilted about the second axis (or the ball member 63). For example, a gap or space in which the moving plate 60 is movable may be present between the upper surface 6A of the moving plate 60 and the OIS motion unit (e.g., the sensor base 270). For example, the upper surface 6A of the moving plate 60 may be spaced apart from the OIS motion unit (e.g., the sensor base 270) or the lower surface of the sensor base 270.

Second electromagnetic force F2 may be generated by interaction between the second magnet unit 310B and the second coil unit 230B. For example, the second electromagnetic force F2 may be exerted in the upward direction or the downward direction.

The OIS motion unit may be tilted about the first axis (e.g., the X-axis) (or the ball member 62) by the second electromagnetic force F2. For example, the OIS motion unit may be first-axis tilted by the second electromagnetic force F2. Here, first-axis (X-axis) tilting means that the OIS motion unit is tilted about the first axis (the X-axis) or the OIS motion unit is rotated leftward and rightward about the first axis (the X-axis) by a predetermined angle.

For example, the moving plate 60 may be tilted about the first axis (e.g., the X-axis) (or the ball member 62) by the second electromagnetic force F2. For example, the moving plate 60 may be first-axis tilted by the second electromagnetic force F2.

Referring to FIG. 4A, a gap or space may be present between the moving plate 60 and the moving unit (e.g., the sensor base 270) by the ball member 62 in order for the OIS motion unit to be tilted about the first axis (or the ball member 62).

For example, a gap or space in which the moving plate 60 is movable may be present between the upper surface 6A of the moving plate 60 and the moving unit (e.g., the sensor base 270). For example, the upper surface 6A of the moving plate 60 may be spaced apart from the moving unit (e.g., the sensor base 270) or the lower surface of the sensor base 270.

For example, the moving plate 60 may be brought into contact with the moving unit (e.g., the sensor base 270) or the stationary unit (e.g., the housing 210) by first-axis or second-axis tilting. At this time, the stationary unit or the moving unit may serve as a stopper configured to inhibit tilting of the OIS motion unit.

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS operation unit may tilt the OIS motion unit about the first axis or the second axis or may rotate the OIS motion unit within a predetermined angular range. In the embodiment, since the OIS motion unit includes a lens module 400 and an image sensor 810, the tilting direction (or the rotating direction) and the tilting angle (or the rotating angle) of the lens module 400 (e.g., a lens or a lens barrel) (or the bobbin 110) may be the same or nearly the same as the tilting direction (or the rotating direction) and the tilting angle (or the rotating angle) of the image sensor 810 when OIS is performed.

In the embodiment, the lens module 400 (or the bobbin 110) and the image sensor 810 may be simultaneously tilted or rotated together when OIS is performed, 100% image resolution without image distortion may be obtained, and hand-tremor compensation or shake compensation at wide angles may be possible.

Also, in the embodiment, the OIS motion unit including the lens module 400 (or the bobbin 110) and the image sensor 810 is tilted or rotated, broadband shake compensation may be possible. Also, in the embodiment, since distortion-free image compensation is mechanically possible, load during image processing is low, whereby current consumption may be reduced, when compared to Comparative Example 1 and Comparative Example 2.

Also, in the embodiment, since the moving plate 60 is used to tilt the OIS motion unit, the OIS motion unit may be stably, precisely, and accurately tilted, when compared to an example using only a ball member or a shaft member, thereby improving the reliability of OIS operation.

Also, in the embodiment, power consumption required to perform OIS may be reduced by the bent portions 804D and 804E and the third portion 804C of the fourth substrate 804, which is a flexible substrate, of the circuit board 800.

Also, in the embodiment, since the moving plate 60 is disposed in the seating portion 25A of the sensor base 270 and the protrusion 28 of the sensor base 270 overlaps the opening 60A of the moving plate 60, the height or length of the camera device 200 in the optical-axis direction may be reduced.

Also, in the embodiment, since at least a part of the magnet 31 is disposed in the opening 60A of the moving plate 60, the distance between the magnet 31 and the magnetic material 32 may be reduced, which may increase attraction force or retention force necessary to support the OIS motion unit, whereby stable OIS operation may be performed.

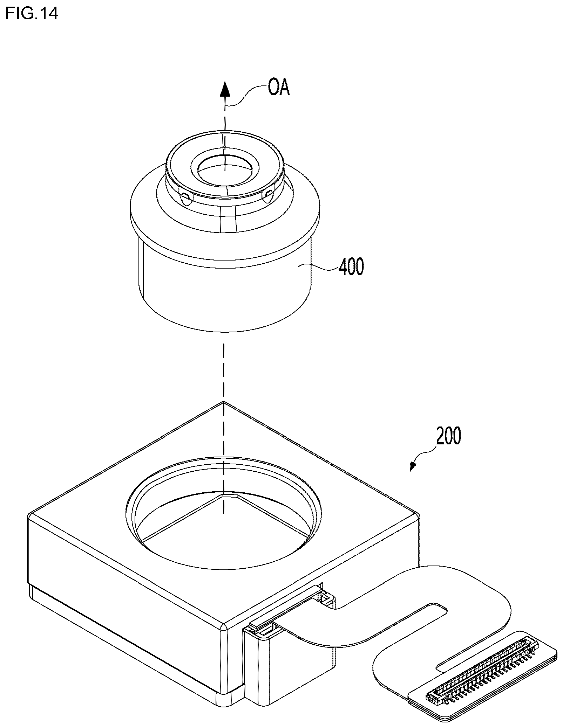

FIG. 14 is a perspective view of the camera device 200 including the lens module 400.

Referring to FIG. 14, the lens module 400 may be coupled to the bobbin 100, and may be moved with the bobbin 110 in the optical-axis direction. For example, the lens module 400 may include at least one of a lens and a lens barrel.

In the embodiment, the lens module 400 and image sensor 810 may be simultaneously X-axis tilted or Y-axis tilted in the same direction and by the same angle during hand-tremor compensation or shake compensation.

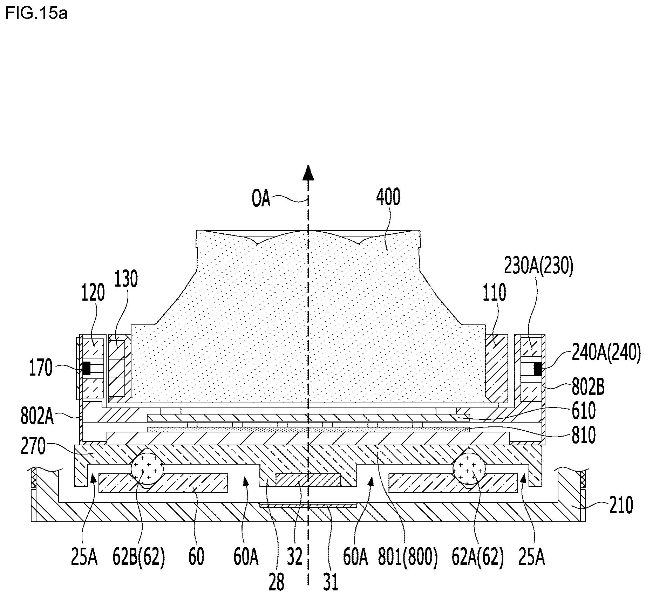

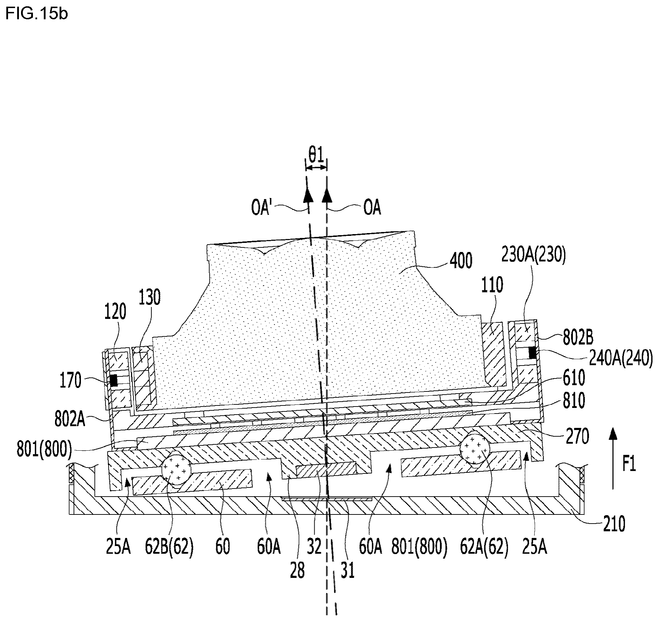

FIG. 15A shows a first position of the OIS motion unit 100, and FIG. 15B shows a second position of the OIS motion unit 100.

Referring to FIGs. 14, 15A, and 15B, the OIS motion unit 100 may be tilted by a predetermined angle θ1 by force F1 due to interaction between the first magnet unit 310A and the first coil unit 230A. For example, the AF moving unit and the OIS motion unit may be tilted by the predetermined angle θ1 together by the force F1.

That is, when the OIS motion unit 100 is moved from the first position to the second position, both the image sensor 810 and the lens module 400 may be tilted simultaneously by the predetermined angle θ1. In addition, when the OIS motion unit 100 is moved from the first position to the second position, the moving plate 60 may be tilted by the predetermined angle θ1 together with the image sensor 810 and the lens module 400.

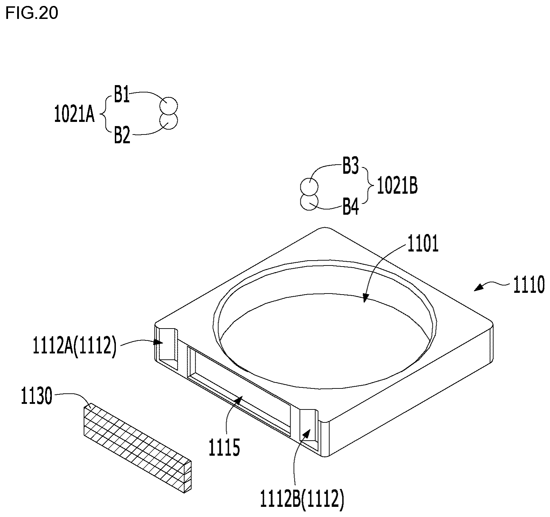

As a result, in the embodiment, it is possible to obtain 100% image resolution without image distortion and to perform hand-tremor compensation or shake compensation at wide angles. A description of FIGs. 20A and 20B may be applied or analogically applied to X-axis tilting of the OIS motion unit 100.

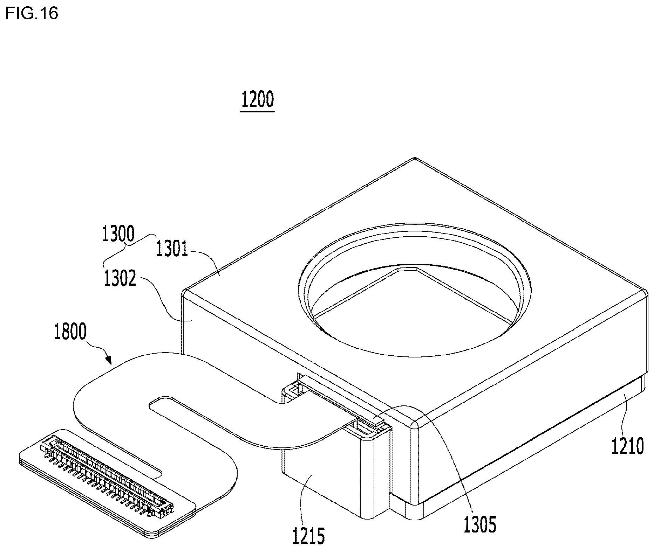

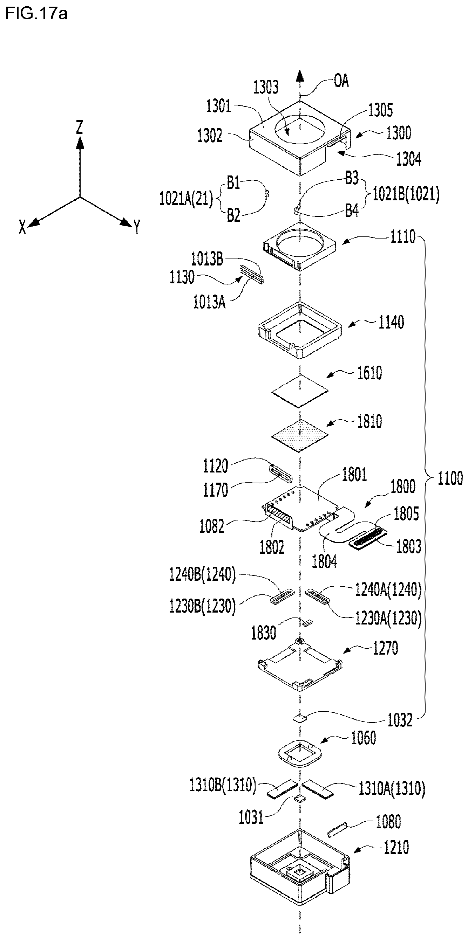

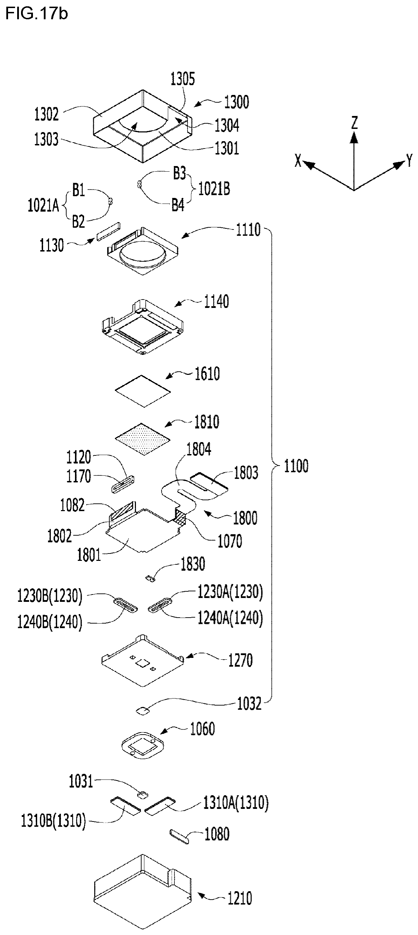

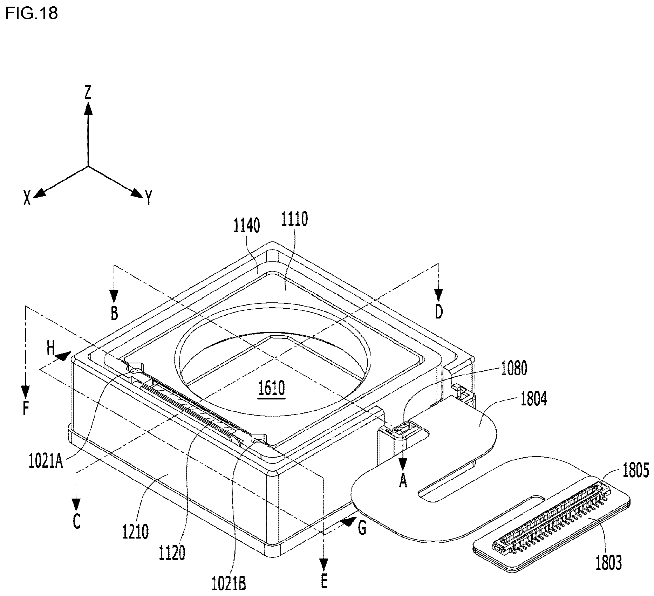

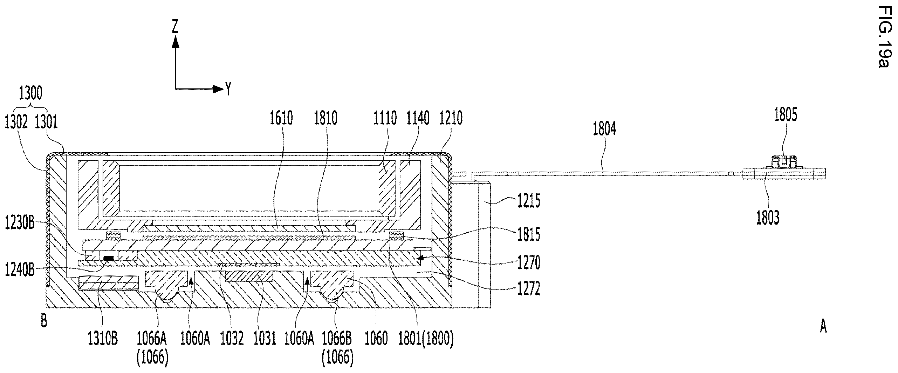

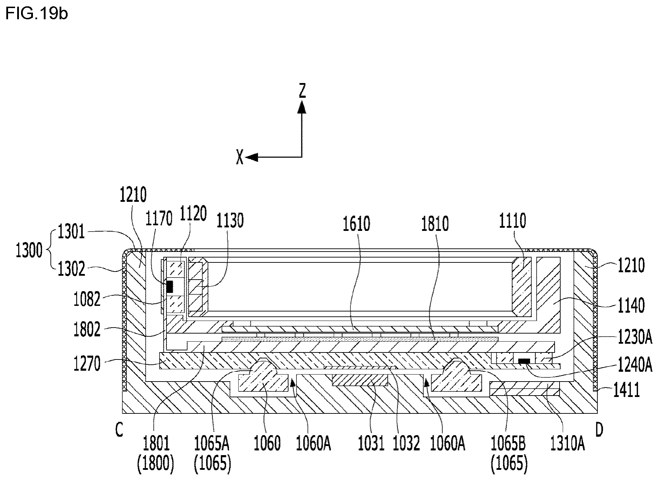

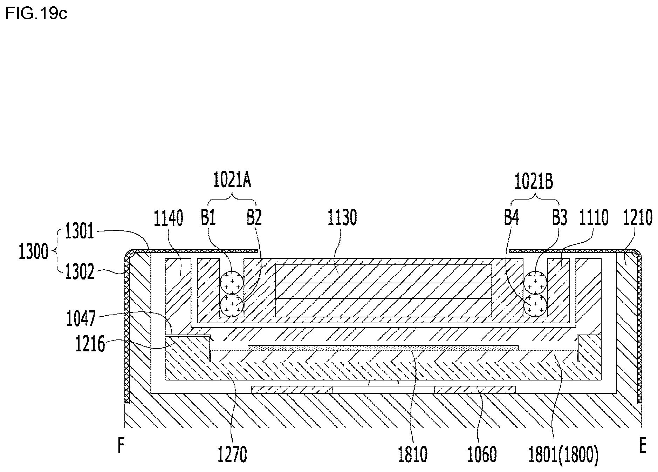

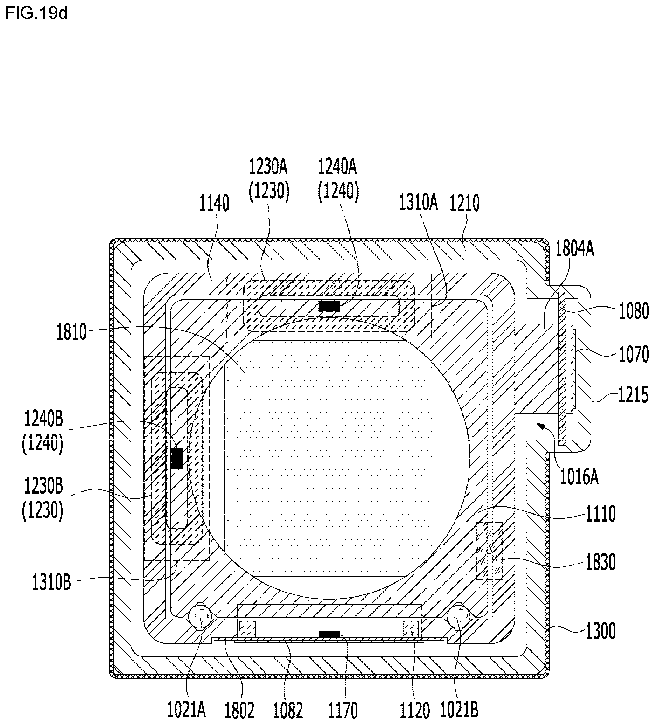

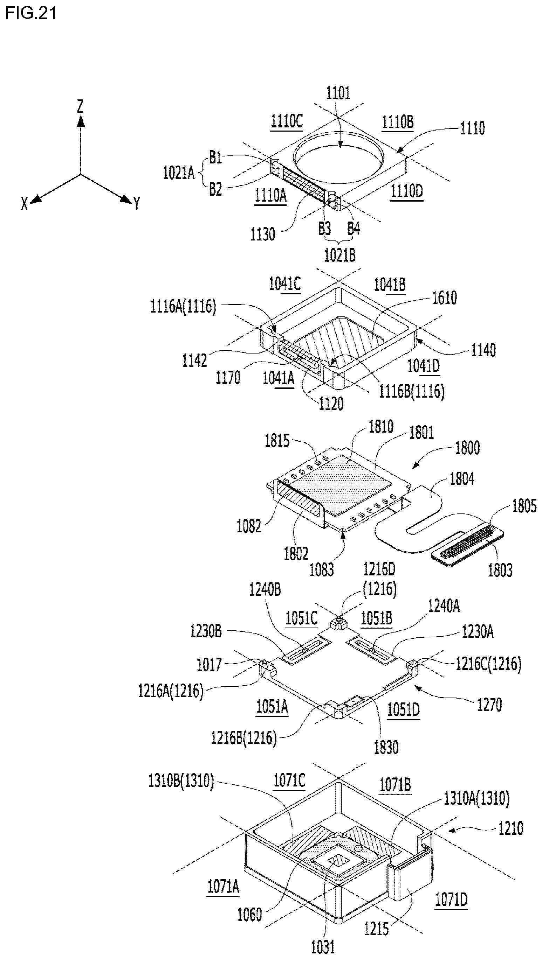

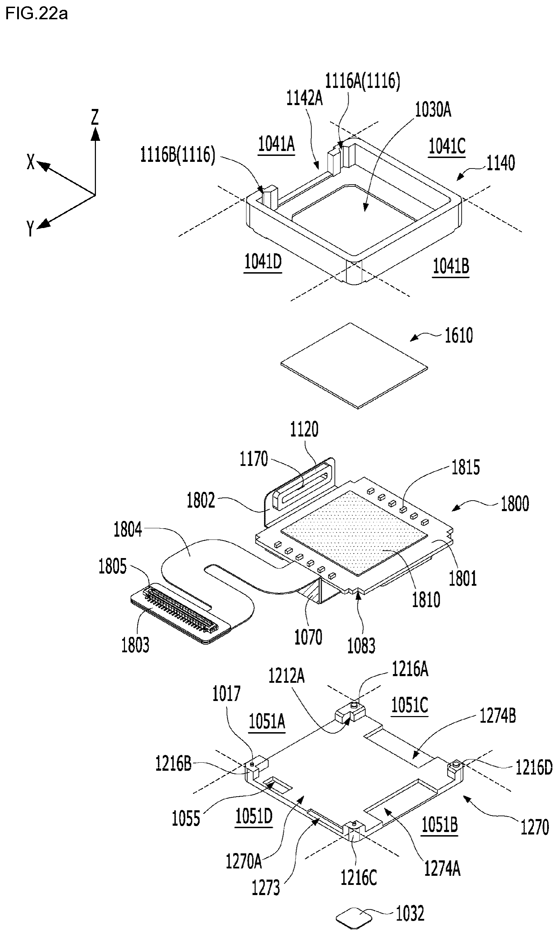

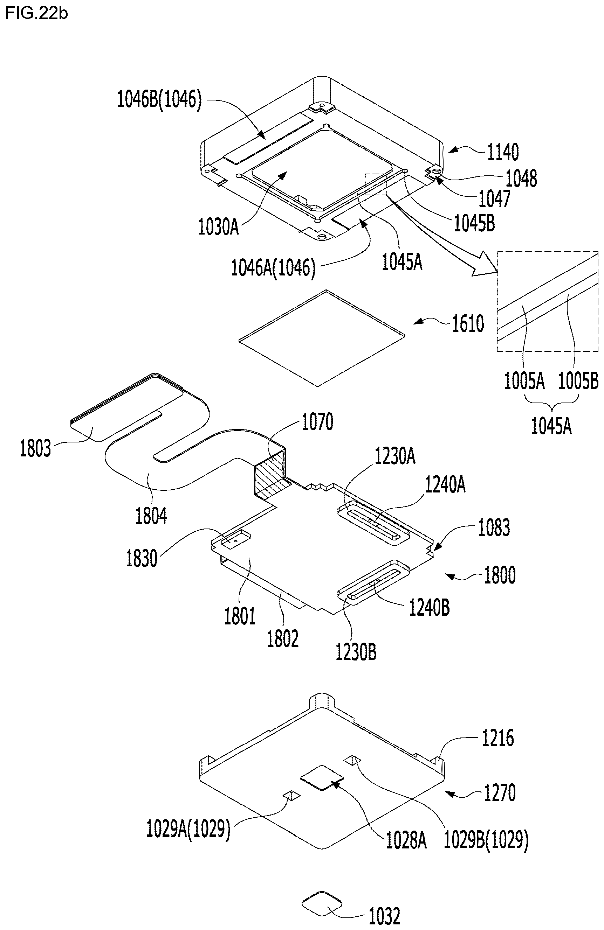

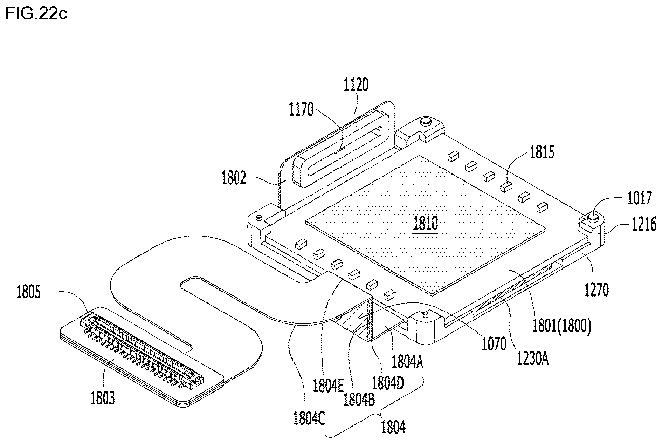

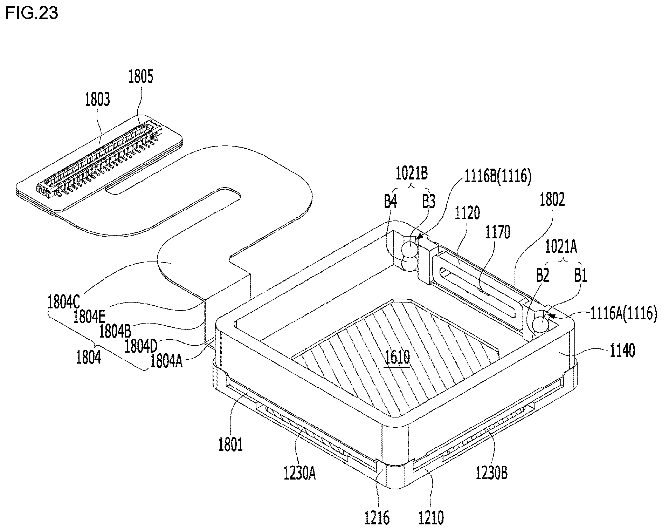

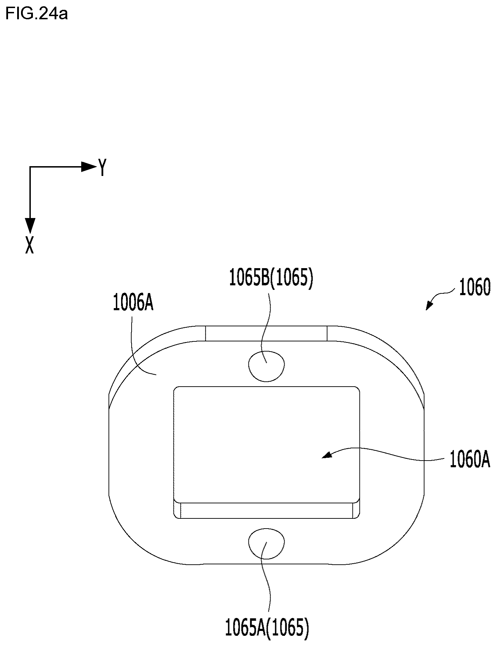

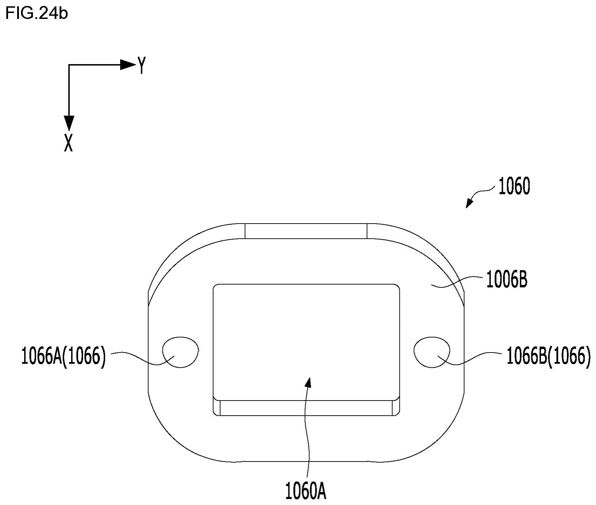

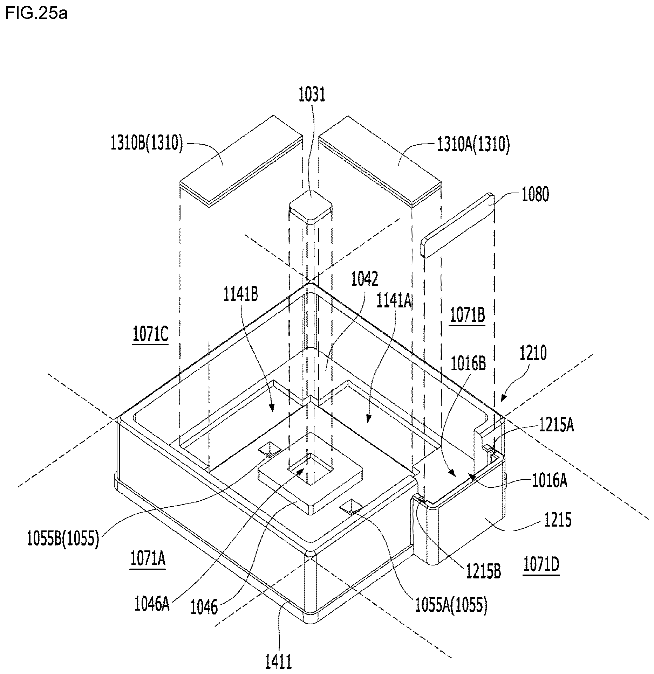

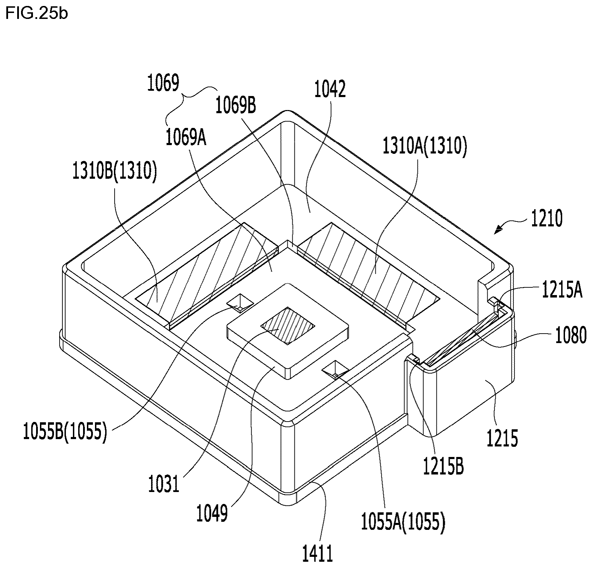

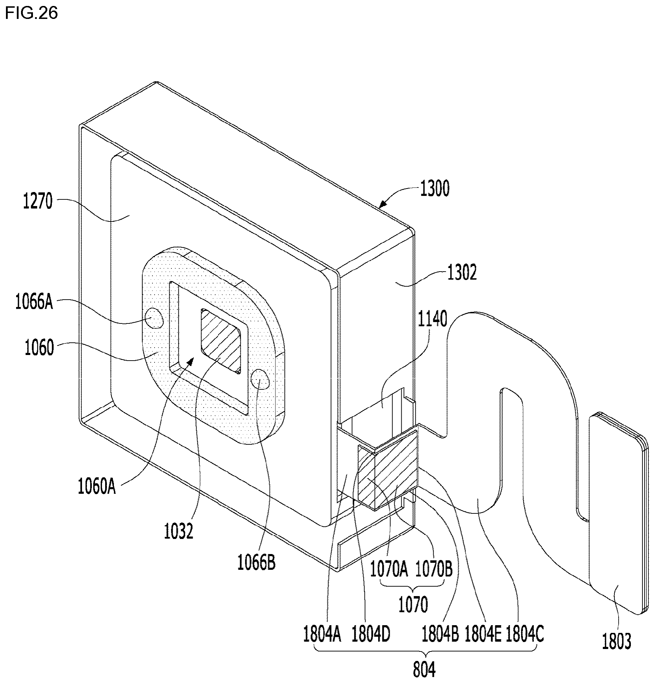

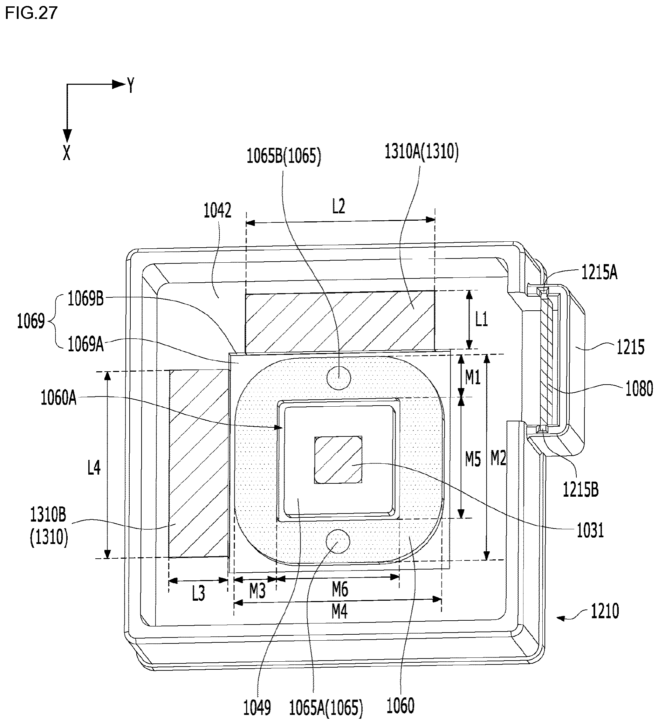

FIG. 16 is a perspective view of a camera device 1200 according to another embodiment, FIG. 17A is a first exploded perspective view of the camera device 1200 of FIG. 16, FIG. 17B is a second exploded perspective view of the camera device 1200 of FIG. 16, FIG. 18 is a perspective view of the camera device 1200 16 excluding a cover member 1300, FIG. 19A is a sectional view of the camera device 1200 in direction AB of FIG. 18, FIG. 19B is a sectional view of the camera device 1200 in direction CD of FIG. 18, FIG. 19C is a sectional view of the camera device 1200 in direction EF of FIG. 18, FIG. 19D is a sectional view of the camera device 1200 in direction GH of FIG. 18, FIG. 20 is an exploded perspective view of a bobbin 1110, a rolling member 1021, and a magnet 1130, FIG. 21 is a separated perspective view of the bobbin 1110, a holder 1140, a sensor base 1270, and a housing 1210, FIG. 22A is a first separated perspective view of the holder 1140, a filter 1610, a circuit board 1800, the sensor base 1270, and a magnetic material 1032, FIG. 22B is a second separated perspective view of the holder 1140, the filter 1610, the circuit board 1800, the sensor base 1270, and the magnetic material 1032, FIG. 22C is a coupled perspective view of the sensor base 1270 and the circuit board 1800, FIG. 23 is a perspective view of the holder 1140, the rolling member 1021, a coil 1120, a position sensor 1170, the circuit board 1800, and the sensor base 1270, FIG. 24A is a front perspective view of a moving plate 1060, FIG. 24B is a rear perspective view of the moving plate 1060, FIG. 25A is a separated perspective view of the housing 1210, magnets 1310A, 1310B, and 1031, and a movement inhibition portion 1080, FIG. 25B is a coupled perspective view of the housing 1210, the magnets 1310A, 1310B, and 1031, and the movement inhibition portion 1080, FIG. 26 is a perspective view of the cover member 1300, the holder 1140, the sensor base 1270, the circuit board 1800, the magnet 1031, the moving plate 1060, and a reinforcement member 1070, and FIG. 27 is a perspective view of the housing 1210, the magnets 1310A, 1310B, and 1031, the movement inhibition portion 1080, and the moving plate 1060.

Referring to FIGs. 16 to 27, the camera device 1200 may include a stationary unit, an AF moving unit, an OIS motion unit (or a shaking unit) 1100, and a support unit. The motion unit 1100 may alternatively be referred to as a "moving unit," or a "movement unit."

The stationary unit may be a stationary element. That is, the stationary unit may not be moved in the optical-axis direction. Alternatively, the stationary unit may not be moved or tilted in a direction perpendicular to the optical axis. In addition, a configuration coupled to the stationary unit may be a stationary unit.

The stationary unit may include a housing 1210. The stationary unit may include a cover member 1300. For example, the stationary unit may include a configuration disposed on or coupled to the housing 1210 or the cover member 1300. For example, the stationary unit may include at least one of a magnet 1310, a magnet 1031, and a movement inhibition portion 1080 disposed on the housing 1210.

The AF moving unit may move relative to the stationary unit in the optical-axis direction. For example, the AF moving unit may include a bobbin 1110. In another embodiment, the AF moving unit may further comprise a configuration (e.g., a magnet 1130) coupled to the bobbin 1110. In another embodiment, the AF moving unit may further include a lens module 1400 (see FIG. 19) coupled to the bobbin 1110.

The OIS motion unit 1100 (see FIG. 17A) may be moved and/or tilted leftward or rightward about the first axis (e.g., the X-axis (e.g., pitch)) perpendicular to the optical axis with respect to the stationary unit. In addition, the OIS motion unit may be moved and/or tilted leftward or rightward about the second axis (e.g., the Y-axis (e.g., yaw)) perpendicular to the optical axis with respect to the stationary unit.

For example, the OIS motion unit may include the AF moving unit. In addition, the OIS motion unit may include an image sensor 1810. The OIS motion unit may include a circuit board 1800 on which the image sensor 1810 is disposed. In addition, the OIS motion unit may include a sensor base 1270 on which at least a part of the circuit board 1800 is disposed. In addition, the OIS motion unit may include a holder 1140 coupled to the sensor base 1270.

The OIS motion unit may alternatively be referred to as a first moving unit (or a first motion unit), and the AF moving unit may alternatively be referred to as a second moving unit (or a second motion unit). For example, the first moving unit may include a sensor base 1270 and a circuit board 1800.

In addition, for example, the OIS motion unit may include a configuration disposed on or coupled to at least one of the holder 1140, the sensor base 1270, and the circuit board 1800. For example, the OIS motion unit may include a coil 1230 and a magnet 1130 disposed on the holder 1140. For example, the OIS motion unit may include a magnetic material 1032 disposed on the sensor base 1270. For example, the OIS motion unit may include at least one of an image sensor 1810, sensors 1170 and 1240, coils 1120 and 1230, a gyro sensor 820, a circuit element 1815, and a controller 1830 disposed on the circuit board 1800.

The support unit may support the OIS motion unit with respect to the stationary unit. For example, the support unit may include a moving plate 1060. In another embodiment, for example, the support unit may further include a rolling member (e.g., a ball member) or a sliding member (e.g., a shaft).

The bobbin 1110 is configured to receive a lens or a lens barrel and may be disposed in the holder 1140. The bobbin 1110 may alternatively be referred to as a "lens holder" or a "lens carrier."

The bobbin 1110 may move in the optical-axis direction. For example, the bobbin 1110 may be moved in the first direction (e.g., the z-axis direction) by electromagnetic interaction between the coil 1120 and the magnet 1130. The coil 1120 and the magnet 1130 may be an AF driving unit configured to move or drive the AF moving unit.

In addition, the bobbin 1110 may be included in the OIS motion unit, and the bobbin 1110 may be tilted about the first axis or the second axis or may be rotated by a predetermined angle.

Referring to FIG. 20, the bobbin 1110 may include an opening 1101 for coupling to the lens module 1400. The shape of the opening 1101 of the bobbin 1110 may match the shape of the lens module 1400, and may be, without being limited to, circular, oval, or polygonal.

Although not shown in FIG. 16, the bobbin 1110 may include at least one stopper disposed on at least one of an upper surface and a lower surface thereof. The stopper of the bobbin 1110 may protrude from the upper surface (or the lower surface) of the bobbin 1110 in the first direction or an upward direction (or a downward direction), and may prevent the upper surface of the bobbin 1110 from directly colliding with an inner surface of an upper plate 1301 of the cover member 1300 or a lower portion of the holder 1140.

The bobbin 1110 may include a seating portion 1115 configured to allow the magnet 1130 to be seated or disposed thereon. For example, the seating portion 1115 may be a recess depressed from an outer surface of the bobbin 1110.

Referring to FIG. 21, the bobbin 1110 may include a plurality of side surfaces 11110A to 11110D or outer surfaces. For example, the bobbin 1110 may include a first side surface 1110A, a second side surface 1110B, a third side surface 1110C, and a fourth side surface 1110D.

For example, the second side surface 1110B may face the first side surface 1110A or may be opposite the first side surface 1110A with respect to the optical axis OA. The third side surface 1110C and the fourth side surface 1110D may be located between the first side surface 1110A and the second side surface 1110B. For example, the fourth side surface 1110D may face the third side 1110C or may be opposite the third side surface 1110C with respect to the optical axis OA. In FIG. 21, the bobbin 1110 is shown as including four side surfaces, but in another embodiment, the bobbin may include three side surfaces or five or more side surfaces.

For example, the seating portion 1115 may be formed on the first side surface 1110A of the bobbin. For example, a lower portion of the seating portion 1115 may be closed rather than open to a lower surface of the bobbin 1110. In addition, an upper portion of the seating portion 1115 may be closed rather than open to the upper surface of the bobbin 1110. In another embodiment, for example, the seating portion 1115 may include an opening that opens to at least one of the upper surface and the lower surface of the bobbin 1110.

The bobbin 1110 may include a receiving portion 1112 configured to receive at least a part of the rolling member 1021. For example, at least a part of the receiving portion 1112 may be disposed on the first side surface 1110A of the bobbin 1110. The receiving portion 1112 may be a recess depressed from an outer surface (e.g., the first side surface 1110A) of the bobbin 1110. The receiving portion 1112 may alternatively be referred to as a "receiving recess," a "recess," or a "guide recess." A lubricant (e.g., grease) may be disposed in the receiving portion 1112 of the bobbin 1110 in order to reduce friction with the rolling member 1021.

For example, the bobbin 1110 may include a first receiving portion 1112A configured to receive a rolling member 1021A and a second receiving portion 1112B configured to receive a rolling member 1021B. For example, the seating portion 1115 may be disposed between the first receiving portion 1112A and the second receiving portion 1112B.

For example, the first receiving portion 1112A (or the second receiving portion 1112B) may include an opening that opens to the upper surface of the bobbin 1110. In another embodiment, upper portions of the receiving portions 1112A and 1112B may be closed rather than open to the upper surface of the bobbin 1110. For example, lower portions of the receiving portions 1112A and 1112B may be closed rather than open to the lower surface of the bobbin 1110.

For example, the receiving portion 1112 may be formed so as to extend in the optical-axis direction. For example, the receiving portion 1112 may extend in the optical-axis direction so as to be formed between the upper surface and the lower surface of the bobbin 1110.

For example, when viewed from above, the shape of the receiving portion 1112 may be, without being limited to, triangular, and the shape of the receiving portion may be polygonal (e.g., quadrangular or pentagonal). Alternatively, for example, when viewed from above, the receiving portion 1112 may have a "V" or "U" shape.

The magnet 1130 may be disposed on, coupled to, or fixed to the bobbin 1110. For example, the magnet 1130 may be disposed on or coupled to the first side surface 1110A of the bobbin 1110. For example, the magnet 1130 may be disposed in the seating portion 1115 of the bobbin 1110, or may be coupled to the seating portion 1115. For example, the magnet 1130 may be disposed between the first rolling member 1021A and the second rolling member 1021B.

The shape of the magnet 1130 may have a shape corresponding to the first side surface 1110A of the bobbin 1110, such as a cuboidal shape. In another embodiment, for example, at least one of opposite ends of the magnet 1130 may be tapered.

For example, the magnet 1130 may include a first side surface 1013A facing the coil 1120 and a second side surface 1013B opposite the first side surface 1013A. The first side surface 1013A of the magnet 1130 may be exposed from the first side surface 1110A of the bobbin 1110.

Also, in order to enhance electromagnetic force, the magnet 1130 may be a four-pole magnet. For example, the magnet 1130 may include two N poles and two S poles. For example, the magnet 1130 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction.

In another embodiment, the magnet 1130 may be a two-pole magnet with two different polarities and an interface naturally formed between the different polarities. For example, in another embodiment, the magnet 1130 may include one N pole and one S pole. For example, the magnet 1130 may be a magnet with an N pole and an S pole separated or disposed in the optical-axis direction. In another embodiment, the magnet 1130 may be a two-pole magnet with an N pole and an S pole separated in a direction perpendicular to the optical axis.

The holder 1140 may be disposed in the cover member 1300. The holder 1140 may include a cavity configured to receive the bobbin 1110. The holder 1140 may include an opening 1030A corresponding to the opening 1101 of the bobbin 1110. For example, the opening 1030A may be a through-hole or a hollow configured to expose at least a part of the bobbin 1110 (or the lens module 1400). In addition, for example, the opening 1030A of the holder 1140 may expose an image-capturing area of the image sensor 1810. The holder 1140 may alternatively be referred to as a "housing."

For example, the opening 1030A may be located in the center or a central region of the holder 1140. For example, the opening 1030A of the holder 1140 may be a through-hole or a hollow formed through the holder 1140 in the optical-axis direction. The opening 1030A of the holder 1140 may have a shape corresponding to the shape of the bobbin 1110, such as, but not limited to, a polygonal shape (e.g., a quadrangular shape or an octagonal shape) or a circular shape (or an oval shape), and may have a variety of shapes.

The holder 1140 may include a plurality of side portions 1041A to 1041D. The holder 1140 may include a corner located between two adjacent side portions and connecting the two adjacent side portions to each other.

The holder 1140 may include a first side portion 1041A corresponding to or opposite the first side surface 1110A of the bobbin 1110, a second side portion 1041B corresponding to or opposite a second side surface 1110B of the bobbin 1110, a third side portion 1041C corresponding to or opposite a third side surface 1110C of the bobbin 1110, and a fourth side portion 1041D corresponding to or opposite a fourth side surface 1110D of the bobbin 1110.

The first side portion 1041A (or a first side surface or a first outer surface) of the holder 1140 may be located opposite the second side portion 1041B (or a second side surface or a second outer surface) of the holder 1140 with respect to the optical axis, and the third side portion 1041C (or a third side surface or a third outer surface) of the holder 1140 may be located opposite the fourth side portion 1041D (or a fourth side surface or a fourth outer surface) of the holder 1140 with respect to the optical axis.

Each of the first to fourth side portions 1041A to 1041D of the holder 1140 may be disposed parallel to a corresponding one of side plates 1302 of the cover member 1300.

Referring to FIGs. 22A and 22B, the holder 1140 may include a seating portion 1142A on which the coil 1120 is disposed. For example, the seating portion 1142A may be disposed or formed on the first side portion 1041A of the holder 1140. For example, the seating portion 1142A may be a through-hole formed through the first side portion 1041A of the holder 1140. Since the seating portion 1142A is a through-hole, a part of the holder 1140 may not be interposed between the coil 1120 and the magnet 1130, which may increase electromagnetic force between the magnet 1130 and the coil 1120. In addition, since a part of the holder 1140 may not be interposed between the position sensor 1170 and the magnet 1130, the output of the position sensor 1170 may be increased, and sensitivity of the position sensor 1170 may be improved.

In another embodiment, the seating portion 1142A may be a recess depressed from an outer surface (or an inner surface) of the first side portion 1041A of the holder 1140.

The holder 1140 may include a recess 1142 in which at least a part of the circuit board 1800, e.g., at least a part of a second substrate 1802, is disposed. Since at least a part of the second substrate 1802 is disposed in the recess 1142 of the holder 1140, the second substrate 1802 and a magnetic material 1082 may not protrude from the outer surface of the first side portion 1041A of the holder 1140, or may not protrude excessively from the outer surface of the first side portion 1041A. That is, the second substrate 1802 and the magnetic material 1082 may protrude less than the sum of the thickness of the second substrate 1802 and the thickness of the magnetic material 1082 with respect to the outer surface of the first side portion 1041A of the holder 1140. This may prevent an increase in the size of the camera device 1200 in a direction perpendicular to the optical axis.

Referring to FIGs. 22A and 22B, the holder 1140 may include a receiving portion 1116 configured to allow at least another part of the rolling member 1021 to be disposed or received therein. For example, at least a part of the receiving portion 1116 may be disposed on the first side portion 1041A of the holder 1140. The receiving portion 1116 may be a recess depressed from the inner surface of the holder 1140 (e.g., the inner surface of the first side portion 1041A). The receiving portion 1116 may alternatively be referred to as a "receiving recess," a "recess," or a "guide recess."

At least a part of the receiving portion 1116 of the holder 1140 may correspond to, may be opposite, or may overlap the receiving portion 1112 of the bobbin 1110.

For example, the holder 1140 may include a first receiving portion 1116A configured to receive at least another part of a first rolling member B1 and B2 and a second receiving portion 1116B configured to receive at least another part of a second rolling member B3 and B4. For example, the seating portion 1142A of the holder 1140 may be disposed between the first receiving portion 1116A and the second receiving portion 1116B of the holder 1140.

For example, the first receiving portion 1116A (or the second receiving portion 1116B) may include an opening that opens to the upper surface of the holder 1140. In another embodiment, an upper portion of the receiving portion 1116 may be closed rather than open to the upper surface of the holder 1140. For example, a lower portion of the receiving portion 1116 may be closed rather than open to the lower surface of the holder 1140.

For example, the receiving portion 1116 may be formed so as to extend in the optical-axis direction. For example, the receiving portion 1116 may extend in the optical-axis direction so as to be formed between the upper surface and the lower surface of the holder 1140.

For example, when viewed from above, the shape of the receiving portion 1116 of the holder 1140 may be, without being limited to, triangular, and the shape of the receiving portion may be polygonal (e.g., quadrangular or pentagonal). Alternatively, for example, when viewed from above, the receiving portion 1116 may have a "V" or "U" shape.

For example, when viewed in the optical-axis direction or from above, the receiving portion 1116 may be opposite or may overlap the upper plate 1301 of the cover member 1300. For example, at least a part of the upper plate 1301 of the cover member 1300 may cover the receiving portion 1116.

The camera device 1200 may include a rolling member 1021 disposed between the bobbin 1110 and the holder 1140. The rolling member 1021 may alternatively referred to as a "ball member," a "ball," or a "ball bearing."

At least a part of the rolling member 1021 may contact the bobbin 1110 and the holder 1140, and may be rolled or rotated between the bobbin 1110 and the holder 1140 to support movement of the bobbin 1110 in the optical-axis direction. When the bobbin 1110 is moved in the optical-axis direction, the rolling member 1021 may reduce friction between the bobbin 1110 and the holder 1140. Due to rolling or rotation of the rolling member 1021, the bobbin 1110 may slide in the optical-axis direction in contact with the rolling member 1021.

For example, the rolling member 1021 may be made of, but not limited to, a metal material, a plastic material, or a resin material. The rolling member 1021 may have a circular shape, and may have a diameter of sufficient size to support the movement of the bobbin 1110 in the optical-axis direction.

For example, the rolling member 1021 may be disposed between the outer surface of the bobbin 1110 and the inner surface of the holder 1140. For example, the rolling member 1021 may be disposed between the first side surface 1110A of the bobbin 1110 and the first side portion 1041A of the holder 1140. For example, the rolling member 1021 may be disposed between the receiving portion 1112 of the bobbin 1110 and the receiving portion 1116 of the holder 1140.

For example, at least a part of the rolling member 1021 may be in contact with the receiving portion 1112 of the bobbin 1110, and at least another part of the rolling member 1021 may be in contact with the receiving portion 1116 of the holder 1140.

The rolling member 1021 may include at least one ball member. For example, the rolling member 1021 may include two or more ball members B1 to B4.

For example, the rolling member 1021 may include a first rolling member 1021A disposed between the first receiving portion 1112A of the bobbin 1110 and the first receiving portion 1116A of the holder 1140 and a second rolling member 1021B disposed between the second receiving portion 1112B of the bobbin 1110 and the second receiving portion 1116B of the holder 1140. For example, the first rolling member 1021A may include at least one ball. For example, the first rolling member 1021A may include a plurality of balls B1 and B2.

The second rolling member 1021B may include at least one ball. For example, the second rolling member 1021B may include a plurality of balls B3 and B4. In another embodiment, each of the first rolling member 1021A and the second rolling member 1021B may include one ball.

For example, each of the first rolling member 1021A and the second rolling member 1021B may include three or more balls. For example, each of the first rolling member 1021A and the second rolling member 1021B may include a top ball located at the uppermost side, a bottom ball located at the lowermost side, and at least one intermediate ball located between the top ball and the bottom ball. For example, the diameter of the top ball may be greater than the diameter of the intermediate ball, and the diameter of the bottom ball may be greater than the diameter of the intermediate ball. In addition, for example, the diameter of the top ball and the diameter of the bottom ball may be equal to each other. In another embodiment, the diameter of the top ball, the diameter of the bottom ball, and the diameter of the intermediate ball may be equal to each other.

For example, each of the first rolling member 1021A and the second rolling member 1021B may include a first ball (a top ball), a second ball (a bottom ball), and a third ball (an intermediate ball) disposed in the optical-axis direction, wherein the diameter of the first ball may be greater than the diameter of the third ball. In addition, the diameter of the second ball may be greater than the diameter of the third ball. For example, the diameter of the first ball and the diameter of the third ball may be equal to each other. In another embodiment, the diameter of the first ball may be greater than the diameter of the second ball. In another embodiment, the diameter of the first ball may be less than the diameter of the second ball. In another embodiment, the diameter of the first ball, the diameter of the second ball, and the diameter of the third ball may be equal to each other.

For example, each of the diameter of the first ball and the diameter of the second ball may be 0.85 mm to 0.95 mm, and the diameter of the third ball may be 0.75 mm to 0.85 mm.

In another embodiment, each of the first rolling member 1021A and the second rolling member 1021B may include four balls, wherein each of the diameter of the top ball and the diameter of the bottom ball may be 0.85 mm to 0.95 mm, and the diameter of each of the two intermediate balls may be 0.75 mm to 0.85 mm.

When viewed from above, the coil 1120 and the magnet 1130 may be located between the first rolling member 1021A and the second rolling member 1021B. This serves to improve the reliability of autofocus by ensuring that, when the bobbin 1110 moves in the optical-axis direction, the rolling member 1021 stably supports the bobbin 1110 without causing the bobbin 1110 to be tilted and moved.

In another embodiment, each of the first rolling member 1021A and the second rolling member 1021B may be in the form of a shaft or a roller. In another embodiment, sliding members (e.g., shafts) or rollers may be included instead of the ball members 1021A and 1021B.

The camera device 1200 may include a magnetic material 1082 configured such that attractive force acts between the magnet 1130 and the magnetic material 1082. For example, attractive force may act between the magnetic material 1082 and the magnet 1130 in a direction perpendicular to the optical axis (or the second direction). For example, the magnetic material 1082 may be disposed on the holder 1140. In another embodiment, the magnetic material 1082 may be disposed on the housing 1210.

The magnetic material 1082 may be made of a material that sticks to a magnet. For example, the magnetic material 1082 may be a metal material that sticks to a magnet. Alternatively, the magnetic material 1082 may be made of a metal material that is magnetic. Alternatively, for example, the magnetic material 1082 may be a magnet. The magnetic material 1082 may alternatively be referred to as a "yoke." The magnetic material 1082 may serve to enhance or increase electromagnetic force between the magnet 1130 and the coil 1120.

Since the magnet 1130 is disposed on the bobbin 1110 and the magnetic material 1082 is disposed on the holder 1140, the bobbin 1110 may be pulled in a direction toward the holder 1140 on which the magnetic material 1082 is disposed by attractive force acting between the magnetic material 1082 and the magnet 1130. Due to attractive force between the magnetic material 1082 and the magnet 1130, the bobbin 1110 and the holder 1140 may press the rolling member 1021, and the bobbin 1110 may be stably supported. The magnetic material 1082 and the magnet 1130 may be a "pressing unit" or a "pressing member." When the bobbin 1110 is moved in the optical-axis direction by the pressing unit, contact between the bobbin 1110 and the rolling member 1021 and between the holder 1140 and the rolling member 1021 may be maintained. That is, the rolling member 1021 may stably support the bobbin 1110 against the holder 1140 due to attractive force between the magnet 1130 and the magnetic material 1082.

In another embodiment, the magnet 1130 may be disposed on the holder 1140, and the coil 1120 may be disposed on the bobbin 1110. For example, the magnetic material 1082 may be disposed on the holder 1140 along with the magnet 1130. For example, the magnet 1130 may be disposed between the magnetic material 1082 and the coil 1120. In another embodiment, the magnetic material 1082 may be disposed on the bobbin 1110 along with the coil 1120 while being opposite the magnet 1130 disposed on the holder 1140. In addition, the camera device 1200 may further include an energizing member, such as a conductive member, configured to conductively connect the coil 1120 disposed on the bobbin 1110 and the second substrate 1802 of the circuit board 1800 to each other.

Referring to FIG. 22B, the holder 1140 may include a seating portion 1045A on which the filter 1610 is seated or disposed. The seating portion 1045A may be disposed or formed on the lower surface of the holder 1140. For example, the seating portion 1045A may be a recess depressed from the lower surface of the holder 1140. For example, the seating portion 1045A may include a bottom surface 1005A having a step formed from the lower surface of the holder 1140 in the optical-axis direction and a side surface 1005B connecting the lower surface of the holder 1140 and the bottom surface 1005A of the seating portion 1045A to each other. For example, the opening 1030A may be formed through the bottom surface 1005A of the seating portion 1045A.

The holder 1140 may include a depressed portion 1045B disposed or formed on a corner region of an inner surface of the seating portion 1045A. The depressed portion 1045B may have a structure depressed in a direction from the optical axis toward the corner region of the inner surface of the seating portion 1045A. The depressed portion 1045B may prevent an adhesive (e.g., UV epoxy) configured to attach or couple the filter 1610 to the seating portion 1045A from overflowing out of the seating portion 1045A.

The holder 1140 may include an escape recess 1046 configured to avoid spatial interference with the circuit element 1815. For example, the escape recess 1046 may be disposed or formed on the lower surface of the holder 1140. For example, the escape recess 1046 may be depressed from the lower surface of the holder 1140.

The escape recess 1046 may correspond to, may be opposite, or may overlap the circuit element 1815 in the optical-axis direction. For example, the escape recess 1046 may be located between the seating portion 1045A and a side of the lower surface of the holder 1140. For example, the escape recess 1046 may include a first escape recess 1046A and a second escape recess 1046B located opposite each other with respect to the seating portion 1045A or the filter 1610. In another embodiment, the escape recess 1046 may include four escape recesses disposed between the opening 1030A and four sides of the holder 1140.

The holder 1140 may include a recess 1047 corresponding to a protrusion 1216 of the sensor base 1270. The protrusion 1216 of the sensor base 1270 and the recess 1047 of the holder 1140 may serve as a guide configured to facilitate assembly of the sensor base 1270 and the holder 1140, and may increase the coupling area between the sensor base 1270 and the holder 1140 to improve coupling force between the sensor base 1270 and the holder 1140.

For example, the recess 1047 may be depressed from the lower surface of the holder 1140. For example, the recess 1047 may be disposed or formed on the corner or the corner region of the lower surface of the holder 1140. The recess 1047 of the holder 1140 may have a shape corresponding to the protrusion 1216 of the sensor base 1270. In addition, the holder 1140 may include a recess 1048 or a hole corresponding to a boss 1017 of the sensor base 1270. For example, the boss 1017 of the sensor base 1270 may be inserted into or coupled to the recess 1048 of the holder 1140. For example, the recess 1048 may be disposed or formed on a bottom surface of the recess 1047 of the holder 1140. For example, the recess 1048 may be depressed from the bottom surface of the recess 1047 of the holder 1140.

In another embodiment, the holder 1140 may include a protrusion protruding from the lower surface of the holder 1140 instead of the recess 1047, and the sensor base 1270 may include a recess depressed from an upper surface of the sensor base 1270 and coupled to the protrusion of the holder 1140 instead of the protrusion 1216. In another embodiment, the boss 1017 may be formed on the holder 1140, and the recess 1048 may be formed on the sensor base 1270.

The camera device 1200 may include a filter 1610 disposed on or coupled to the holder 1140. For example, the filter 1610 may be disposed under the holder 1140. For example, the filter 1610 may be coupled to the lower surface of the holder 1140. For example, the filter 1610 may be disposed on the seating portion 1045A of the holder 1140.

The filter 1610 may serve to block a specific frequency band component of light passing through the lens module 1400 from being incident on the image sensor 1810. For example, the filter 1610 may be an infrared cutoff filter. For example, the filter 1610 may be disposed parallel to a plane perpendicular to the optical axis OA.

The filter 1610 may be coupled to the holder 1140 (or the seating portion 1045A) via an adhesive (not shown). For example, an edge region of the filter 1610 may be coupled to the bottom surface of the seating portion 1045A.

For example, the adhesive may be epoxy, a thermohardening adhesive, or a UV hardening adhesive. For example, at least a part of the filter 1610 may correspond to, may be opposite, or may overlap the lens module 1400 and/or the image sensor 1810 in the optical-axis direction.

The sensor base 1270 may be disposed under the holder 1140. The sensor base 1270 may be coupled to the holder 1140. The sensor base 1270 may alternatively be referred to as a "holder." In addition, the holder 1140 may be referred to as a "first housing" (or a "first holder"), and the sensor base 1270 may be referred to as a "second housing" (or a "second holder"). Alternatively, the holder 1140 and the sensor base 1270 may not be represented separately and may alternatively be referred to by a single term, e.g., a "housing" (or a "holder"). In another embodiment, the sensor base 1270 and the holder 1140 may be integrally formed.

For example, the sensor base 1270 may include a protrusion 1216 protruding from the upper surface thereof. The protrusion 1216 may alternatively be referred to as a "pillar portion."

For example, the protrusion 1216 may correspond to, may be opposite, or may overlap the recess 1047 of the holder 1140 in the optical-axis direction. At least a part of the protrusion 1216 of the sensor base 1270 may be inserted into the recess 1047 of the holder 1140. For example, at least a part of the protrusion 1216 may be coupled to the recess 1047 of the holder 1140. For example, at least a part of the protrusion 1216 may be coupled to the recess 1047 of the holder 1140 via an adhesive.

For example, the sensor base 1270 may include a body 1270A and a protrusion 1216 protruding from an upper surface of the body 1270A. For example, the body 1270A may have a shape corresponding to a first substrate 1801 of the circuit board 1800. For example, the body 1270A may have a polyhedral shape, such as a hexahedral shape. For example, the protrusion 1216 may be disposed on a corner region of the upper surface of the body 1270A. For example, the protrusion 1216 may include four protrusions 1216A to 1216D disposed on four corner regions of the upper surface of the body 1270A. In addition, for example, the holder 1140 may include four recesses 1047 corresponding to the four protrusions 1216A to 1216D. In another embodiment, the housing 1210 may include at least one protrusion disposed on at least one of the four corner regions of the upper surface of the body 1270A, and the holder 1140 may include at least one recess 1048 corresponding to the at least one protrusion of the housing 1210.

The sensor base 1270 or the body 1270A may include side portions 1051A to 1051D corresponding to, opposite, or overlapping the side portions 1041A to 1041D of the holder 1140.

The camera device 1200 may include a gyro sensor (not shown) disposed on the circuit board 1800. For example, the gyro sensor may be disposed on the first substrate 1801 of the circuit board 1800. For example, the gyro sensor may be disposed on, coupled to, or fixed to a lower surface of the first substrate 1801. For example, the gyro sensor outputs rotational angular velocity information due to motion of the camera device 1200. For example, the gyro sensor may be implemented by a 2-axis or 3-axis gyro sensor, or an angular velocity sensor. For example, the gyro sensor may be conductively connected to the first substrate 1801.

In another embodiment, the sensor base 1270 may include a receiving portion configured to allow the gyro sensor to be disposed therein or to avoid spatial interference with the gyro sensor. For example, the receiving portion may be a through-hole formed through the sensor base 1270 in the optical-axis direction or a recess depressed from the upper surface of the sensor base 1270 or the upper surface of the body 1270A. In this case, the receiving portion may include an opening that opens to an outer surface of the sensor base 1270.

The sensor base 1270 may include a receiving portion 1055 in which the controller 1830 is disposed or received. The receiving portion 1055 may be a recess depressed from the upper surface of the sensor base 1270 or the upper surface of the body 1270A. In another embodiment, the receiving portion 1055 may be a through-hole formed through the sensor base 1270 or body the 1270A in the optical-axis direction.

The sensor base 1270 may include seating portions 1274A and 1274B on which the coil 1230 is disposed. The seating portions 1274A and 1274B may be disposed or formed on the upper surface of the sensor base 1270. For example, the seating portions 1274A and 1274B may be recesses depressed from the upper surface of the sensor base 1270.

For example, the sensor base 1270 may include a first seating portion 1274A on which a first coil unit 1230A is disposed and a second seating portion 1274B on which a second coil unit 1230B is disposed.

For example, the first seating portion 1274A may be formed so as to be adjacent to or to abut a second side portion 1051B of the sensor base 1270. For example, the first seating portion 1274A may be a recess formed in the upper surface of the sensor base 1270 adjacent to the second side portion 1051B of the sensor base 1270. For example, the first seating portion 1274A may include an opening that opens to an outer surface of the second side portion 1051B of the sensor base 1270. In another embodiment, the first seating portion 1274A may be spaced apart from the outer surface of the second side portion 1051B of the sensor base 1270, and may not include an opening that opens to the outer surface of the second side portion 1051B.

For example, the second seating portion 1274B may be formed so as to be adjacent to or to abut a third side portion 1051C of the sensor base 1270. For example, the second seating portion 1274B may be a recess formed in the upper surface of the sensor base 1270 adjacent to the third side portion 1051C of the sensor base 1270. For example, the second seating portion 1274B may include an opening that opens to an outer surface of the third side portion 1051C of the sensor base 1270. In another embodiment, the second seating portion 1274B may be spaced apart from the outer surface of the third side portion 1051C of the sensor base 1270, and may not include an opening that opens to the outer surface of the third side portion 1051C.

In another embodiment, each of the seating portions 1274A and 1274B may be in the form of a through-hole. For example, at least one of the first and second seating portions 1274A and 1274B may be a hole or through-hole formed through the sensor base 1270 in the optical-axis direction. In this case, a part of the sensor base 1270 may not be interposed between the coil 1230 and the magnet 1310, which may increase electromagnetic force between the magnet 1310 and the coil 1230. In addition, a part of the sensor base 1270 may not be interposed between the position sensor 1240 and the magnet 1310, which may increase the output of the position sensor 1240 and may improve the sensitivity of the position sensor 1240.

Referring to FIG. 22B, the sensor base 1270 may include a receiving portion 1028A configured to receive the magnetic material 1032. The receiving portion 1028A may be disposed or formed in a lower portion or a lower surface of the sensor base 1270. For example, the receiving portion 1028A may be a recess depressed from the lower portion or the lower surface of the sensor base 1270. For example, the receiving portion 1028A may be disposed or formed in the lower surface of the body 1270A. For example, the receiving portion 1028A may have a shape corresponding to the magnetic material 1032.

In an embodiment in which the positions of the magnetic material 1032 and the magnet 1031 are reversed, the magnet 1031 may be disposed in the receiving portion 1028A of the sensor base 1270, and the magnetic material 1032 may be disposed in a receiving portion 1049A of the housing 1210.

The sensor base 1270 may include a recess 1029 in which at least a part of the moving plate 1060 (e.g., a boss 1065) is disposed or received. The recess 1029 may be formed in the lower surface of the sensor base 1270. For example, the recess 1029 may be depressed from the lower surface of the sensor base 1270. The number of the recesses 29 may be the same as the number of the bosses 1065 of the moving plate 1060.

For example, the recess 1029 may include two recesses 1029A and 1029B spaced apart from each other. For example, the two recesses 1029A and 1029B may be disposed spaced apart from each other in the X-axis direction. For example, the receiving portion 1028A of the sensor base 1270 may be disposed between the two recesses 1029A and 1029B of the sensor base 1270.

The recess 1029 may contact the boss 1065 of the moving plate 1060 at at least one point. For example, the recess 1029 may include a bottom surface and at least one side surface connected to the bottom surface. The at least one side surface may be an inclined surface. For example, the recess 1029 may include a bottom surface and a plurality of inclined surfaces. The inclined surfaces of the recess 1029 may have the same shape. In another embodiment, at least one of the inclined surfaces of the recess 1029 may have a different shape from the others.

Referring to FIG. 22A, the protrusion 1216 of the sensor base 1270 may have a recess 1212A in which at least a part of the first substrate 1801 of the circuit board 1800 is inserted or disposed. For example, a corner of the first substrate 1801 may be inserted into or coupled to the recess 1212A of the protrusion 1216 of the sensor base 1270. For example, the recess 1212A may be formed in the side surface of the protrusion 1216 opposite the corner of the circuit board 1800. In addition, at least one corner of the circuit board 1800 may have a recess 1083 configured to be inserted into or be coupled to the recess 1212A of the protrusion 1216. The recess 1212A of the protrusion 1216 of the sensor base 1270 may serve as a coupling guide for coupling between the first substrate 1801 and the sensor base 1270, and may serve to inhibit the first substrate 1801 from being rotated and/or separated from the sensor base 1270.

The circuit board 1800 may be disposed on, coupled to, or fixed to the sensor base 1270. For example, the circuit board 1800 may be coupled to the sensor base 1270 via an adhesive or a fixing member.

The circuit board 1800 may be disposed on, coupled to, or fixed to the body 1270A of the sensor base 1270. The circuit board 1800 may include at least one of a rigid printed circuit board (rigid PCB), a flexible printed circuit board (flexible PCB), and a rigid-flexible printed circuit board (rigid-flexible PCB). For example, the circuit board 1800 can include a rigid printed circuit board and a flexible printed circuit board. The circuit board 1800 may alternatively be referred to as a "substrate unit," a "substrate," or a "printed circuit board."

For example, the circuit board 1800 may include a first substrate 1801 (or a "first region") disposed on, coupled to, or fixed to sensor base 1270. For example, the first substrate 1801 may be disposed on, coupled to, or fixed to the body 1270A of the sensor base 1270. For example, a lower side of the first substrate 1801 may be coupled to the upper surface of the sensor base 1270 or the upper surface of the body 1270A. For example, the lower surface of the first substrate 1801 may be coupled to the upper surface of the sensor base 1270 or the upper surface of the body 1270A via an adhesive.

The circuit board 1800 may include a second substrate 1802 (or a "second region") connected to first substrate 1801 and disposed on, coupled to, or fixed to the holder 1140. For example, the second substrate 1802 may be disposed on, coupled to, or fixed to the first side portion 1041A of the holder 1140.

In FIG. 22A, the circuit board 1800 includes one second substrate, but in another embodiment, the circuit board 1800 may include a plurality of second substrates disposed on at least one of the side portions of the holder 1140.

For example, the second substrate 1802 may be connected to a first side surface of the first substrate 1801. For example, the second substrate 1802 may be bent from the first side surface of the first substrate 1801 toward the first side portion 1041A of the holder 1140. For example, the second substrate 1802 may extend upward from the first substrate 1801.

The circuit board 1800 may include a third substrate 1803 on which a connector 1805 is disposed or provided and a fourth substrate 1804 connecting the first substrate 1802 and the third substrate 1803 to each other.

For example, the first substrate 1801 may be a rigid printed circuit board. For example, the second substrate 1802 may be a flexible printed circuit board. For example, the third substrate 1803 may be a rigid printed circuit board. For example, the fourth substrate 1804 may be a flexible printed circuit board.

For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 1810 may be disposed on the first substrate 1801. The image sensor 1810 may be disposed so as to correspond to, to be opposite, or to overlap the lens module 1400 and/or the filter 1610 in the optical-axis direction.

The image sensor 1810 may include an image-capturing area configured to detect light. Here, the image-capturing area may alternatively be referred to as an effective area, a light receiving area, or an active area. For example, the image-capturing area may include a plurality of pixels from which an image is formed. The image sensor 1810 may be conductively connected to the first substrate 1801. The image-capturing area may correspond to, may be opposite, or may overlap the lens module 1400 and/or the filter 1610 in the optical-axis direction.

The camera device 1200 may include a circuit element 1815 disposed on the first substrate 1801. For example, the circuit element 1815 may include at least one of a passive element (e.g., a capacitor or a resistor), an active element (e.g., a sensor, a memory, or a driver IC), or a circuit pattern. For example, in order to avoid spatial interference with the image sensor 1810, the circuit element 1815 may be disposed between the image sensor 1810 and an edge (e.g., a side) of the first substrate 1801.

The camera device 1200 may include a controller 1830 disposed on the circuit board 1800. For example, the controller 1830 may be a driver IC. For example, the controller 1830 may be disposed on the first substrate 1801. For example, the controller 1830 may be disposed under the first substrate 1801. For example, the controller 1830 may be disposed on, coupled to, or fixed to the lower surface of the first substrate 1801. For example, the controller 1830 may be conductively connected to the first substrate 1801.

For example, the controller 1830 may be conductively coupled to the coil 1120, and may supply a drive signal to the first coil 1120. The controller 1830 may be conductively connected to the coil units 1230A and 1230B, may supply a first drive signal to the first coil unit 1230A, and may supply a second drive signal to the second coil unit 1230B.

The controller 1830 may be conductively connected to the position sensor 1170. In addition, the controller 1830 may be conductively connected to the position sensor 1240.

For example, the controller 1830 may receive an output signal from the position sensor 1170, and may control a drive signal (e.g., drive current) that is supplied to the coil 1120 using the output signal from the position sensor 1170.

For example, the controller 1830 may receive an output signal from the position sensor 1240, and may control a drive signal (e.g., drive current) that is supplied to the coil 1230 using the output signal from the position sensor 1240. For example, the controller 1830 may receive an output signal from the first sensor 1240A, and may control a first drive signal (e.g., first drive current) that is supplied to the first coil unit 1230A using the output signal from the first sensor 1240A. In addition, the controller 1830 may receive an output signal from the second sensor 1240B, and may control a second drive signal (e.g., second drive current) that is supplied to the second coil unit 1230B using the output signal from the second sensor 1240B.

The coils 1120 and 1230 may be disposed on, coupled to, or fixed to the circuit board 1800 (e.g., the second substrate 1802). For example, the coil 1120 may be conductively connected to the circuit board 1800 (e.g., the second substrate 1802) via a conductive adhesive or a solder. For example, the coil 1230 may be conductively connected to the circuit board 1800 (e.g., the first substrate 1801) via a conductive adhesive or a solder.

The first coil unit 1230A and the second coil unit 1230B may be disposed on or coupled to the first substrate 1801, and may be conductively connected to the first substrate 1801. Referring to FIG. 22B, for example, the first coil unit 1230A and the second coil unit 1230B may be disposed on, coupled to, or fixed to the lower surface of the first substrate 1801. For example, the first coil unit 1230A and the second coil unit 1230B may be disposed between the first substrate 1801 and the sensor base 1270.

For example, the first and second coil units 230A and 230B may be disposed adjacent to neighboring two of the four side surfaces of the first substrate 1801.

For example, the first coil unit 1230A may be disposed adjacent to a second side surface of the first substrate 1801 corresponding to the second side portion 1041B of the holder 1140, and the second coil unit 1230B may be disposed adjacent to a third side surface of the first substrate 1801 corresponding to the third side portion 1041C of the holder 1140. For example, at least a part of the first coil unit 1230A may be disposed between the two protrusions 1216C and 1216D of the sensor base 1270, and at least a part of the second coil unit 1230B may be disposed between the two protrusions 1216A and 1216D of the sensor base 1270.

The coil 1120 may move the AF moving unit (e.g., the bobbin) in the optical-axis direction by interaction with the magnet 1130. The coil 1120 may be disposed on the holder 1140.

The coil 1120 may be disposed so as to correspond to, to be opposite, or to overlap the magnet 1130 in a direction perpendicular to the optical axis. For example, the coil 1120 may be disposed on the holder 1140 so as to correspond to, to be opposite, or to overlap the magnet 1130 in the second direction (e.g., the X-axis direction) or in a direction from the first side portion 1041A to the second side portion 1041B of the holder 1140. For example, the coil 1120 may be disposed on the first side portion 1041A of the holder 1140. The coil 1120 may be disposed in the seating portion 1142A of the holder 1140.

For example, the coil 1120 may include a hollow or a hole. For example, the coil 1120 may have a ring shape or a closed curved shape. For example, the coil 1120 may have a ring shape wound around a straight line perpendicular to the optical axis OA and perpendicular to the outer surface of the first side portion 1041A of the holder 1140 as an axis. For example, the coil 1120 may have a ring shape configured such that the length thereof in a transverse direction (or the third direction) is greater than the length thereof in a longitudinal direction (or the optical-axis direction).

A drive signal may be applied to the coil 1120 in order to generate electromagnetic force by electromagnetic interaction with the magnet 1130. For example, a drive signal from the circuit board 1800 or the controller 1830 may be applied to the coil 1120. The drive signal supplied to the coil 1120 may be direct current, and may be in the form of voltage or current. Alternatively, in another embodiment, for example, the drive signal provided to the coil 1120 may include at least one of a direct current signal and an alternating current signal.

The coil 1120, to which the drive signal has been provided, may electromagnetically interact with the magnet 1130 disposed on the bobbin 1110, and the AF moving unit may be moved in the first direction by electromagnetic force due to electromagnetic interaction between the coil 1120 and the magnet 1130. The magnitude and/or the direction of the drive signal (e.g., drive current) may be adjusted by the controller 1830, whereby movement of the AF moving unit in the first direction may be controlled, and therefore the autofocus function may be performed.

For AF feedback driving, the camera device 1200 may include a position sensor 1170. The position sensor 1170 may detect the position or displacement of the bobbin 1110 in the optical-axis direction. For example, the position sensor 1170 may detect the magnet 1130 disposed on the bobbin 1110. In another embodiment, a sensing magnet separate from the magnet 1130 and opposite the position sensor 1170 may be disposed on the bobbin, and the position sensor 1170 may detect the sensing magnet or a magnetic field of the sensing magnet to detect the displacement of the bobbin.

For example, the position sensor 1170 may be disposed on the holder 1140. For example, the position sensor 1170 may be disposed on the first side portion 1041A of the holder 1140. For example, the position sensor 1170 may be disposed in the seating portion 1142A of the holder 1140. For example, the position sensor 1170 may be disposed in a hollow of the coil 1120. In another embodiment, the position sensor 1170 may be disposed outside the hollow of the coil 1120.

For example, the position sensor 1170 may be coupled to the circuit board 1800. For example, the position sensor 1170 may be coupled to the circuit board 1800 via a conductive adhesive or a solder. For example, the position sensor 1170 may be conductively connected to the second substrate 1802. For example, the position sensor 1170 may be conductively connected to the second substrate 1802 via a conductive adhesive or a solder.

For example, the position sensor 1170 may be disposed on, coupled to, or fixed to a first surface of the second substrate 1802. For example, the position sensor 1170 may correspond to, may be opposite, or may overlap the magnet 1130 in a direction perpendicular to the optical axis or in the second direction.

The position sensor 1170 may detect the displacement of the bobbin 1110 in the optical-axis direction.

For example, the position sensor 1170 may detect a magnetic field of the magnet 1130 mounted on the bobbin 1110 or the intensity of the magnetic field based on movement of the bobbin 1110, and may output an output signal.

For example, the position sensor 1170 may be a Hall sensor. In this case, the position sensor 1170 may include two input terminals to which a drive signal is applied and two output terminals from which an output signal is output. The circuit board 1800 may be conductively connected to the two input terminals and two output terminals of the position sensor 1170. The circuit board 1800 or the controller 1830 may supply a drive signal to the two input terminals of the position sensor 1170, and an output signal from the two output terminals of the position sensor 1170 may be transmitted to the circuit board 1800 or the controller 1830.

In another embodiment, the position sensor 1170 may be implemented in the form of a driver IC including a Hall sensor. For example, when the position sensor 1170 is a driver IC including a Hall sensor, the position sensor 1170 may transmit and receive data to and from the outside through data communication using a protocol, such as I2C communication.

For example, when the position sensor 1170 is a driver IC including a Hall sensor, the position sensor 1170 may include first and second terminals to which power or a drive signal is input, a third terminal for a clock signal, and a fourth terminal for a data signal, and fifth and sixth terminals configured to supply a drive signal to the coil 1120. The first to sixth terminals of the position sensor 1170 may be conductively connected to the circuit board 1800.

The coil 1230 may tilt the OIS motion unit about the first axis (e.g., the X-axis) or the second axis (e.g., the Y-axis), or may rotate the OIS motion unit by a predetermined angle, due to interaction with the magnet 1310 disposed on the housing 1210, which is a stationary unit.

The coil 1230 may include a first coil unit 1230A corresponding to, opposite, or overlapping the first magnet unit 1310A in the optical-axis direction and a second coil unit 1230B corresponding to, opposite, or overlapping the second magnet unit 1310B in the optical-axis direction. For example, the coil 1230 may not overlap the magnet 1310 in a direction perpendicular to the optical axis.

For example, the coil 1230 may be disposed lower than the coil 1120. For example, the first coil unit 1230A may be disposed in the first seating portion 1274A of the sensor base 1270, and the second coil unit 1230B may be disposed in the second seating portion 1274B of the sensor base 1270.

For example, each of the first and second coil units 1230A and 1230B may include a hollow or a hole. For example, each of the first and second coil units 1230A and 1230B may have a ring shape or a closed curved shape. For example, each of the first coil unit 1230A and the second coil unit 1230B may have a ring shape wound around a straight line parallel to the optical axis OA and perpendicular to the upper surface of the sensor base 1270 or the upper surface of the body 1270A as an axis.

For example, the first coil unit 1230A may have a ring shape configured such that the length thereof in the transverse direction (or the third direction) is greater than the length thereof in the longitudinal direction (or the second direction). For example, the second coil unit 1230B may have a ring shape configured such that the length thereof in the longitudinal direction (or the second direction) is greater than the length thereof in the transverse direction (or the third direction).

For OIS feedback driving, the camera device 1200 may include a position sensor 1240. The position sensor 1240 may detect displacement or angular displacement of the OIS motion unit 1100 due to tilting or rotation of the OIS motion unit.

For example, the position sensor 1240 may include a first sensor 1240A and a second sensor 1240B. For example, at least a part of the first sensor 1240A may correspond to, may be opposite, or may overlap the first magnet unit 1310A in the optical-axis direction. For example, the center of the first sensor 1240A may overlap the first magnet unit 1310A in the optical-axis direction. For example, the first sensor 1240A may detect the first magnet unit 1310A (or a magnetic field of the first magnet unit 1310A). For example, the first sensor 1240A may detect the tilted angle of the OIS motion unit 1100 about the second axis (the Y-axis).

At least a part of the second sensor 1240B may correspond to, may be opposite, or may overlap the second magnet unit 1310B in the optical-axis direction. For example, the center of the second sensor 1240B may overlap the second magnet unit 1310B in the optical-axis direction. For example, the second sensor 1240B may detect the second magnet unit 1310B (or a magnetic field of the second magnet unit 1310B). For example, the second sensor 1240B may detect the tilted angle of the OIS motion unit 1100 about the first axis (the X-axis).

For example, the first and second sensors 1240A and 1240B may be disposed on, coupled to, or fixed to the first substrate 1801 of the circuit board 1800. For example, the first and second sensors 1240A and 1240B may be conductively connected to the first substrate 1801.

For example, the first sensor 1240A may be disposed in the hollow (or the hole) of the first coil unit 1230A, and the second sensor 1240B may be disposed in the hollow (or the hole) of the second coil unit 1230B. In another embodiment, the first sensor 1240A may be disposed outside the hollow (or the hole) of the first coil unit 1230A, and the second sensor 1240B may be disposed outside the hollow (or the hole) of the second coil unit 1230B.

For example, each of the first sensor 1240A and the second sensor 1240B may be a Hall sensor including first and second input terminals and first and second output terminals. For example, the first and second input terminals and the first and second output terminals of the first sensor 1240A may be conductively connected to the first substrate 1801, and the first and second input terminals and the first and second output terminals of the second sensor 1240B may be conductively connected to the first substrate 1801.

For example, the first substrate 1801 or the controller 1830 may supply or apply a first drive signal to the first and second input terminals of the first sensor 1240A. The first sensor 1240A may output a first output signal, and the first output signal may be transmitted to the first substrate 1801 or the controller 1830. The first output signal may be output to the first and second output terminals of the first sensor 1240A.

For example, the first substrate 1801 or the controller 1830 may supply or apply a second drive signal to the first and second input terminals of the second sensor 1240B. The second sensor 1240B may output a second output signal, and the second output signal may be transmitted to the first substrate 1801 or the controller 1830. The second output signal may be output to the first and second output terminals of the second sensor 1240B.

In another embodiment, each of the first sensor 1240A and the second sensor 1240B may be a driver IC including a Hall sensor. A description of an embodiment in which the position sensor 1170 is a driver IC including a Hall sensor may be applied or analogically applied to an embodiment in which each of the first and second sensors 1240A and 1240B is a driver IC including a Hall sensor.

The camera device 1200 may include a magnetic material 1082 disposed opposite the coil 1120 and the magnet 1130. For example, the magnetic material 1082 may be disposed on the holder 1140 or on the second substrate 1802 of the circuit board 1800. For example, the magnetic material 1082 may be disposed so as to correspond to, to be opposite, or to overlap the magnet 1130 in the second direction. In addition, for example, the magnetic material 1082 may be disposed so as to correspond to, to be opposite, or to overlap the coil 1120 in the second direction. For example, the coil 1120 may be disposed on the first surface of the second substrate 1802 that faces the magnet 1130, and the magnetic material 1082 may be disposed on a second surface of the second substrate 1802 that is opposite the first surface of the second substrate 1802. The magnetic material 1082 may be coupled, attached, or fixed to the second substrate 1802 via an adhesive.

Referring to FIGs. 25A and 25B, the housing 1210 may include a cavity configured to receive the OIS motion unit 1100. For example, the housing 1210 may have a shape corresponding to the OIS motion unit 1100, e.g., the holder 1140 or the sensor base 1270, such as, but not limited to, a polygonal shape (e.g., a quadrangular shape or an octagonal shape) or a circular shape (or an oval shape), and may have a variety of shapes. The housing 1210 may alternatively be referred to as a "base."

The housing 1210 may include a plurality of side portions 1071A to 1071D corresponding to the side portions 1041A to 1041D of the holder 1140 or the side portions 1051A to 1051D of the sensor base 1270. The housing 1210 may include a corner located between two adjacent side portions.

In addition, the housing 1210 may include a lower portion 1042 (or a lower plate) located under the side portions 1071A to 1071D. The lower portion 1042 may be connected to a lower side of each of the side portions 1071A to 1071D. For example, the lower portion 1042 may alternatively be referred to as a "bottom portion," a "bottom surface," or a "body." For example, the side portions 1071A to 1071D may protrude upward from the lower portion 1042.

The housing 1210 has a first side portion 1071A corresponding to, opposite, or overlapping the first side portion 1041A of the holder 1140, a second side portion 1071B corresponding to, opposite, or overlapping the second side portion 1041B of the holder 1140, a third side portion 1071C corresponding to, opposite, or overlapping the third side portion 1041C of the holder 1140, and a fourth side portion 1071D corresponding to, opposite, or overlapping the fourth side portion 1041D of the holder 1140.

The first side portion 1071A (or a first side surface or a first outer surface) of the housing 1210 may be located opposite the second side portion 1071B (or a second side surface or a second outer surface) of the housing 1210, and the third side portion 1071C (or a third side surface or a third outer surface) of the housing 1210 may be located opposite the fourth side portion 1071D (or a fourth side surface or a fourth outer surface) of the housing 1210.

For example, each of the first to fourth side portions 1071A to 1071D of the housing 1210 may be disposed parallel to a corresponding one of the side plates 1302 of the cover member 1300.

The housing 1210 may include a step 1411 disposed on a lower portion of at least one of the side portions 1071A to 1071D. For example, the step 1411 may protrude from an outer surface of each of the side portions 1071A to 1071D of the housing 1210 in a direction perpendicular to the optical axis. For example, the step 1411 may be opposite or may overlap the side plate 1302 of the cover member 1300 in the optical-axis direction. For example, the step 1411 may be coupled to the side plate 1302 of the cover member 1300 via an adhesive.

The housing 1210 may include seating portions 1141A and 1141B on which the magnet 1310 is disposed. For example, each of the seating portions 1141A and 1141B may be a recess formed in the lower portion 1042 of the housing 1210. In another embodiment, each of the seating portions 1141A and 1141B may be a through-hole formed through the lower portion 1042 of the housing 1210.

The housing 1210 may include a first seating portion 1141A on which the first magnet unit 1310A is disposed and a second seating portion 1141B on which the second magnet unit 1310B is disposed. For example, the first seating portion 1141A may be disposed or formed on a first region of the lower portion 1042 of the housing 1210 adjacent to the second side portion 1071B of the housing 1210. For example, the second seating portion 1141B may be disposed or formed on a second region of the lower portion 1042 of the housing 1210 adjacent to the third side portion 1071C of the housing 1210.

The magnet 1310 may include a first magnet unit 1310A and a second magnet unit 1310B disposed on the lower portion 1042 of the housing 1210. For example, the magnet 1310 may be disposed under the coil 1230.

For example, the first magnet unit 1310A may be disposed so as to correspond to, to be opposite, or to overlap the first coil unit 1230A in the optical-axis direction. The second magnet unit 1310B may be disposed so as to correspond to, to be opposite, or to overlap the second coil unit 1230B in the optical-axis direction.

For example, the first magnet unit 1310A and the second magnet unit 1310B may be disposed so as to be misaligned with each other in the second direction or the third direction. For example, when viewed from above or when viewed in the optical-axis direction, the first magnet unit 1310A and the second magnet unit 1310B may be disposed on the housing 1210 so as not to overlap each other in the second direction or the third direction. For example, the first magnet unit 1310A and the second magnet unit 1310B may be disposed on the lower portion 1042 of the housing 1210 so as not to overlap each other in the second direction or the third direction.

In another embodiment, the magnet 1310 may be disposed on the holder 1140, and the coil 1230 may be disposed on the housing 1210. For example, in FIG. 18, the magnet 1310 and the coil 1230 may be disposed such that the positions thereof are reversed. In this case, the camera device 1200 may include a separate energizing portion configured to conductively connect the second coil 1230 and the circuit board 1800 to each other, such as a circuit board, a circuit member, or a conductive member.

Each of the first magnet unit 1310A and the second magnet unit 1310B may be a two-pole magnet including one N pole and one S pole. For example, each of the first magnet unit 1310A and the second magnet unit 1310B may be a magnet with an N pole and an S pole separated or disposed in the optical-axis direction. For example, the N pole (or the S pole) of each of the first magnet unit 1310A and the second magnet unit 1310B may be located higher than the S pole (or the N pole) thereof.

For example, a first surface of the magnet 1310 that faces or is opposite the coil 1230 in the optical-axis direction may have an S pole (or an N pole). A second surface of the magnet 1310, which is opposite the first surface of the magnet 1310, may have an N pole (or an S pole).

In another embodiment, each of the first magnet unit 1310A and the second magnet unit 1310B may be a magnet with an N pole and an S pole separated or disposed in a direction perpendicular to the optical-axis direction. In another embodiment, each of the first magnet unit 1310A and the second magnet unit 1310B may be a magnet including two N poles and two S poles. Electromagnetic force may be generated between the first and second magnet units 1310A and 1310B and the first and second coil units 1230A and 1230B, the OIS motion unit may be X-axis tilted or Y-axis tilted by the generated electromagnetic force.

The housing 1210 may include a receiving portion 1049A configured to receive the magnet 1031. The receiving portion 1049A may be disposed or formed in the lower portion 1042 of the housing 1210. The receiving portion 1049A may be disposed or formed in an upper surface of the lower portion 1042 of the housing 1210. For example, the receiving portion 1049A may be a recess depressed from the upper surface of the lower portion 1042 of the housing 1210. The receiving portion 1049A may have a shape corresponding to the magnet 1031, such as a quadrangular shape or a circular shape. For example, the receiving portion 1049A of the housing 1210 may correspond to, may be opposite, or may overlap the receiving portion 1028A of the sensor base 1270 in the optical-axis direction.

Referring to FIG. 25B, the housing 1210 may include a seating portion 1069 configured to allow at least a part of the moving plate 1060 to be disposed thereon or to receive at least a part of the moving plate 1060. For example, the seating portion 1069 may be an upper surface of the housing 1210 or a recess depressed from the upper surface of the lower portion 1042.

For example, the seating portion 1069 may have a shape that corresponds to or coincides with the shape of the moving plate 1060. For example, the seating portion 1069 may include a bottom surface 1069A having a step formed from the upper surface of the lower portion 1042 of the housing 1210 in the optical-axis direction and a side surface 1069B connecting the bottom surface 1069A and the upper surface of the lower portion 1042 to each other. For example, the bottom surface 1069A of the seating portion 1069 may be located lower than the upper surface of the lower portion 1042 of the housing 1210.

Referring to FIGs. 19A and 19B, since the housing 1210 is provided at the upper surface of the lower portion 1042 thereof with a seating portion 1069 into which at least a part of the moving plate 1060 is inserted or on which at least a part of the moving plate 1060 is disposed, the lower portion 1042 of the housing 1210 may include a partition wall 1272 (or a guide portion) disposed around the moving plate 1060. The moving plate 60 may be spaced apart from the partition wall 1272 of the housing 1210, and the partition wall 1272 may be disposed so as to surround the moving plate 1060. The partition wall 1272 of the housing 1210 may prevent the moving plate 1060 from being separated or dislodged from the housing 1210.

The housing 1210 may include a protrusion 1049 (or a boss) protruding from the lower portion 1042. For example, the protrusion 1049 may project from the upper surface of the lower portion 1042 of the housing 1210. For example, the protrusion 1049 may protrude from the bottom surface 1069A of the seating portion 1069 of the housing 1210. For example, the protruding length of the protrusion 1049 of the housing 1210 may be greater than the depth of the seating portion 1069 of the housing 1210. For example, the protruding length of the protrusion 1049 may be the distance (or the shortest distance) from the bottom surface 1069A of the seating portion 1069 to a lower surface (or the lowermost end) of the protrusion 1049. In addition, the depth of the seating portion 1069 may be the distance (or the shortest distance) from the upper surface of the lower portion 1042 of the housing 1210 to the bottom surface 1069A of the seating portion 1069. In another embodiment, for example, the protruding length of the protrusion 1049 may be less than or equal to the depth of the resting portion 1069. For example, the protrusion 1049 may have a shape that corresponds to or coincides with an opening 1060A of the moving plate 1060.

For example, the protrusion 1049 of the housing 1210 may correspond to, may be opposite, or may overlap the openings 1060A of the moving plate 1060 in the optical-axis direction. For example, at least a part of the protrusion 1049 of the housing 1210 may be disposed in the opening 1060A of the moving plate 1060.

For example, the receiving portion 1049A may be disposed or formed in the protrusion 1049 of the housing 1210. For example, the receiving portion 1049A may be a recess depressed from an upper surface of the protrusion 1049 of the housing 1210.

For example, the protrusion 1049 may be disposed between the recesses 1055A and 1055B of the housing 1210. For example, the protrusion 1049 may be disposed between bosses 1066A and 1066B of the moving plate 1060. For example, the protrusion 1049 (or the magnet 1031) may overlap the bosses 1066A and 1066B of the moving plate 1060 in a direction perpendicular to the optical axis, e.g., the third direction.

For example, at least a part of the first magnet unit 1310A may correspond to, may be opposite, or may overlap the moving plate 1060 in a direction parallel to the first axis. In addition, at least a part of the second magnet unit 1310B may correspond to, may be opposite, or may overlap the moving plate 1060 in a direction parallel to the second axis.

The housing 1210 may include a recess 1055 in which at least a part of the boss 1066 of the moving plate 1060 is disposed or received. The recess 1055 of the housing 1210 may be formed in the upper surface of the lower portion 1042 of the housing 1210. For example, the recess 1055 may be depressed from the upper surface of the lower portion 1042 of the housing 1210. For example, the recess 1055 may be formed in the bottom surface 1069A of the seating portion 1069 of the housing 1210. For example, the recess 1055 may be depressed from the bottom surface 1069A of the seating portion 1069 of the housing 1210. The number of the recesses 55 of the housing 1210 may be equal to the number of the bosses 1066 of the moving plate 1060.

For example, the recess 1055 may include two recesses 1055A and 1055B spaced apart from each other. For example, the two recesses 1055A and 1055B may be disposed spaced apart from each other in the Y-axis direction. For example, the direction in which the recesses 1055A and 1055B of the housing 1210 are spaced apart from each other and the direction in which the two recesses 1029A and 1029B of the sensor base 1270 are spaced apart from each other may intersect or may be perpendicular to each other. For example, the receiving portion 1049A may be disposed between the two recesses 1055A and 1055B of the housing 1210.

The recess 1055 of the housing 1210 may contact the boss 1066 of the moving plate 1060 at at least one point. For example, the recess 1055 may include a bottom surface and at least one side surface connected to the bottom surface. The at least one side surface of the recess 1055 may be an inclined surface. For example, the recess 1055 may include a bottom surface and a plurality of inclined surfaces. The inclined surfaces of the recess 1055 may have the same shape. In another embodiment, at least one of the inclined surfaces of the recess 1055 may have a different shape from the others.

The housing 1210 may include a protrusion 1215 protruding in a direction perpendicular to the optical axis. For example, the protrusion 1215 may protrude from the side portion of the housing 1210.

For example, the protrusion 1215 may protrude from an outer surface of the fourth side portion 1071D of the housing 1210. For example, the protrusion 1215 may be formed by at least a part of the fourth side portion 1071D protruding in a direction parallel to a straight line that passes through the optical axis and is perpendicular to the optical axis. For example, the protrusion 1215 may include a recess 1016A (or a cavity) in which at least a part of the fourth substrate 1804 is disposed or received. For example, the recess 1016A of the protrusion 1215 may include an opening that opens upward.

Referring to FIG. 25A, the recess 1016A of the protrusion 1215 may be provided with coupling recesses 1215A and 1215B for insertion, coupling, or fixing of the movement inhibition portion 1080. For example, the coupling recesses 1215A and 1215B may be formed in two facing inner surfaces of the recess 1016A of the protrusion 1215. For example, the coupling recesses 1215A and 1215B may extend in the optical-axis direction. For example, for easy insertion or coupling of the movement inhibition portion 1080 from above, each of the coupling recesses 1215A and 1215B may include an opening that opens to an upper surface of the protrusion 1215.

The maximum length of the protrusion 1215 in the optical-axis direction may be less than the maximum length of the housing 1210 in the optical-axis direction. In this configuration, space for the circuit board 1800 to extend outward may be easily secured, and a compact camera device may be implemented.

The camera device 1200 may include a movement inhibition portion 1080 coupled to at least a part of the housing 1210. The movement inhibition portion 1080 may inhibit movement or motion of at least a part of the fourth substrate 1804 to inhibit deformation of the shape of at least a part of the fourth substrate 1804.

Referring to FIGs. 22C, 23, and 26, the fourth substrate 1804 of the circuit board 1800 may include a first portion 1804A (or a "first region") connected to the first substrate 1801, a second portion 1804B connected to the first portion 1804A and bent from the first portion 1804A, and a third portion 1804C connected to the second portion 1804B and bent from the second portion 1804B. In another embodiment, at least one of the first portion 1804A and the second portion 1804B may be omitted.

For example, the first portion 1804B may extend in a direction parallel to the first substrate 1801. For example, the second portion 1804B may be bent from the first portion 1804B and may extend from the first portion 1804B in the upward direction. For example, the third portion 1804C may extend from the second portion 1804B in a direction opposite the first portion 1804A.

For example, the fourth substrate 1804 may include a first bent portion 1804D connecting the first portion 1804A and the second portion 1804B to each other. In addition, the fourth substrate 1804 may include a second bent portion 1804E connecting the second portion 1804B and the third portion 1804C to each other. The first bent portion 1804D and the second bent portion 1804E may be angled, and for example, the first portion 1804A and the second portion 1804B may be perpendicular to each other. In another embodiment, the first bent portion 1804D and the second bent portion 1804E may be rounded. In another embodiment, the interior angle between the first portion 1804A and the second portion 1804B may be an acute angle or an obtuse angle.

The first bent portion 1804D and the second bent portion 1804E may prevent an increase in the length of the camera device 1200 in a direction perpendicular to the optical-axis direction. In addition, since the first bent portion 1804D and the second bent portion 1804E are located between the upper surface of the camera device 1200 (e.g., the upper surface of the cover member 1300) and the lower surface of the camera device 1200 (e.g., the lower surface of the housing 1210), an increase in the length of the camera device 1200 in the optical-axis direction may be prevented, whereby it is possible to implement miniaturization of the camera device.

For example, the third portion 1804C may be in the form of a plate or plane perpendicular to the optical axis. For example, the third portion 1804C may include a meandering shape or a serpentine shape. For example, the third portion 1804C may include at least one bent or curved region. For example, the bent or curved region of the third portion 1804C may be bent in the second direction or the third direction, which is perpendicular to the optical axis. Alternatively, the bent or curved region of the third portion 1804C may extend in a direction perpendicular to the optical axis. For example, when viewed from above, the third portion 1804C may include a region having a U shape or a V shape.

For example, the third portion 1804C may be spaced apart from the housing 1210. For example, the third portion 1804C may be spaced apart from the protrusion 1215 of the housing 1210. In another embodiment, for example, at least a part of the third portion 1804C may be in contact with the protrusion 1215 of the housing 1210.

At least a part of the second portion 1804B of the fourth substrate 1804 may be disposed in the protrusion 1215 of the housing 1210. At least a part of the second portion 1804B of the fourth substrate 1804 may be disposed in the recess 1016A of the protrusion 1215 of the housing 1210. For example, at least a part of the first portion 1804A of the fourth substrate 1804 may be disposed in the recess 1016A of the protrusion 1215. The third portion 1804C of the fourth substrate 1804 may be located outside the protrusion 1215 of the housing 1210. For example, the third portion 1804C of the fourth substrate 1804 may be located higher than the protrusion 1215 of the housing 1210. A lower surface of the third portion 1804C of the fourth substrate 1804 may be located higher than the upper surface of the protrusion 1215 of the housing 1210.

Referring to FIG. 22A, the sensor base 1270 may include a recess 1273 formed in the part at which the fourth substrate 1804 and the first substrate 1801 are joined or connected to each other, e.g., at the position corresponding to the first portion 1804A of the fourth substrate 1804. The recess 1273 may be disposed adjacent to or abutting an outer surface of the fourth side portion 1071D of the sensor base 1270 on which the fourth substrate 1804 is disposed. The recess 1273 may serve to prevent the first portion 1804A of the fourth substrate 1804 from being damaged by friction with the sensor base 1270.

The connector 1805 may be coupled or connected to another external connector of the camera device 1200 or to an external device. The connector 1805 connected to the other external connector may correspond to a stationary unit that does not move when OIS is performed. Since the third portion 1804C of the fourth substrate 1804 includes at least one bent or curved region, it is possible to flexibly support the camera device 1200 or the OIS motion unit and to cushion external impact. That is, the third portion 1804C of the fourth substrate 1804 may serve as a spring configured to cushion impact. In addition, since the third portion 1804C of the fourth substrate 1804 may serve to flexibly support the OIS motion unit 1100, it is possible to reduce drive force or drive power required to perform OIS.

The camera device 1200 may include a reinforcement member 1070 disposed on, coupled to, or attached to at least a part of the fourth substrate 1804. The reinforcement member 1070 may be disposed on, coupled to, or attached to at least one of the first portion 1804A and the second portion 1804B of the fourth substrate 1804. For example, the reinforcement member 1070 may be disposed on, coupled to, or attached to at least a part of the first portion 1804A of the fourth substrate 1804 and at least a part of the second portion 1804B of the fourth substrate 1804.

Referring to FIG. 26, for example, the reinforcement member 1070 may be disposed on, coupled to, or attached to a lower surface of the first portion 1804A of the fourth substrate 1804 and a lower surface of the second portion 1804B of the fourth substrate 1804. For example, the reinforcement member 1070 may include a first region 1070A disposed on, coupled to, or attached to the first portion 1804A and a second region 1070B disposed on, coupled to, or attached to the second portion 1804B. The second region 1070B may be bent upward from the first region 1070A. For example, a bent portion may be formed between the first region 1070A and the second region 1070B.

For example, the area of the second region 1070B may be greater than the area of the first region 1070A. In another embodiment, both may be equal, or the area of the former 70B may be less than the area of the latter 70A.

For example, the reinforcement member 1070 may be spaced apart from the third portion 1804C of the fourth substrate 1804. For example, the second region 1070B of the reinforcement member 1070 may be spaced apart from the third portion 1804C of the fourth substrate 1804. In another embodiment, at least a part of the second region 1070B of the reinforcement member 1070 may be in contact with the third portion 1804C of the fourth substrate 1804.

In another embodiment, the reinforcement member 1070 may be disposed on, coupled to, or attached to an upper surface of the first portion 1804A of the fourth substrate 1804 and an upper surface of the second portion 1804B of the fourth substrate 1804. For example, in another embodiment, the reinforcement member 1070 may include a first region disposed on the upper surface of the first portion 1804A of the fourth substrate 1804 and a second region disposed on the upper surface of the second portion 1804B of the fourth substrate 1804.

In another embodiment, the reinforcement member 1070 may be disposed on, coupled to, or attached to at least a part of the second portion 1804B of the fourth substrate 1804 and at least a part of the third portion 1804C of the fourth substrate 1804. For example, in another embodiment, the reinforcement member 1070 may be disposed on, coupled to, or attached to the second portion 1804B and the third portion 1804C of the fourth substrate 1804. For example, the reinforcement member 1070 may include a first region disposed on, coupled to, or attached to the second portion 1804B of the fourth substrate 1804 and a second region disposed on, coupled to, or attached to the third portion 1804C, and a bent portion may be formed between the first region and the second region. The first region of the reinforcement member 1070 may be disposed on the lower surface (or the upper surface) of the second portion 1804B, and the second region of the reinforcement member 1070 may be disposed on the lower surface (or the upper surface) of the third portion 1804C.

The reinforcement member 1070 may prevent the fourth substrate 1804 from being damaged, deformed, or broken by impact or external force. In addition, the reinforcement member 1070 may serve to inhibit deformation and restoration of the shape of the fourth substrate 1804 as the fourth substrate 1804 is forced by tilting of the OIS motion unit 1100. For example, the reinforcement member 1070 may include at least one of a metal material and an injection molded material.

For example, the reinforcement member 1070 may be disposed in the recess 1016A of the protrusion 1215 of the housing 1210. For example, at least a part of the reinforcement member 1070 may be in contact with the recess 1016A of the protrusion 1215 of the housing 1210. For example, the reinforcement member 1070 may not be coupled to the housing 1210 (e.g., the protrusion 1215). In another embodiment, for example, the reinforcement member 1070 may be coupled to the housing 1210 (e.g., the protrusion 1215) via an adhesive.

Referring to FIGs. 16, 25A, and 25B, the movement inhibition portion 1080 may be coupled to the protrusion 1215 of the housing 1210. For example, the movement inhibition portion 1080 may be coupled to the coupling recesses 1215A and 1215B of the protrusion 1215 of the housing 1210.

Referring to FIG. 18, at least a part of the second portion 1804B of the fourth substrate 1804 may be disposed between the movement inhibition portion 1080 and an inner surface of the protrusion 1215 of the housing 1210. For example, at least a part of the reinforcement member 1070 may be disposed between the movement inhibition portion 1080 and the inner surface of the protrusion 1215 of the housing 1210.

The movement inhibition portion 1080 may be spaced apart from the circuit board 1800 in the second direction (the X-axis direction) or the third direction (the Y-axis direction). For example, the movement inhibition portion 1080 may be disposed spaced apart from the circuit board 1800 in the optical-axis direction or in a direction perpendicular to the optical-axis direction. That is, the movement inhibition portion 1080 may serve to maintain the shape of the bent portions 804D and 804E of the fourth substrate 1804, which is a flexible substrate. For example, the movement inhibition portion 1080 may be formed by injection-molding a non-magnetic material or a resin. In another embodiment, the movement inhibition portion 1080 may be in contact with at least a part of the fourth substrate 1804 of the circuit board 1800.

Movement or motion of at least a part of the second portion 1804B of the fourth substrate 1804 disposed in the recess 1016A of the protrusion 1215 may be restricted by the movement inhibition portion 1080, and the second portion 1804B may be inhibited or prevented from moving out of the recess 1016A of the protrusion 1215. This may inhibit or prevent the OIS motion unit from being affected by restoring force of the fourth substrate 1804 when OIS is performed, thereby enabling OIS to be accurately performed and improving reliability of OIS operation. The movement inhibition portion 1080 may alternatively be referred to as a "clamp."

The cover member 1300 may form a receiving space with the housing 1210, and the OIS motion unit may be disposed in the receiving space. For example, the cover member 1300 may be in the form of a box having an open lower portion. For example, the cover member 1300 may include an upper plate 1301 and a side plate 1302 connected to the upper plate 1301.

A lower end of the side plate 1302 of the cover member 1300 may be coupled to the housing 1210. The shape of the upper plate 1301 of the cover member 1300 may be polygonal (e.g., quadrangular or octagonal) or circular. The upper plate 1301 of the cover member 1300 may include an opening 1303 configured to expose the lens (not shown) to external light. The opening 1303 may be a through-hole formed through the upper plate 1301 of the cover member 1300 in the optical-axis direction. For example, the cover member 1300 may include a plurality of side plates. The material of the cover member 1300 may be a non-magnetic material. In another embodiment, the cover member 1300 may be made of a magnetic material. For example, the material of the cover member 1300 may be an injection-molded material, such as a resin, or a metal material.

Referring to FIGs. 16 and 17A, the cover member 1300 may include an opening 1304 disposed or formed in the side plate 1302 to avoid spatial interference with the protrusion 1215 of the housing 1210. For example, the protrusion 1215 of the housing 1210 may extend through the opening 1304 of the cover member 1300 and may protrude from the side plate 1302 of the cover member 1300.

The cover member 1300 may include a protrusion 1305 disposed above the opening 1304 and protruding from the side plate 1302. For example, the protrusion 1305 may be in the shape of a plate. For example, the protrusion 1305 of the cover member 1300 may be disposed on the protrusion 1215 of the housing 1210. For example, the protrusion 1305 may be disposed on an upper portion of the recess 1016A of the protrusion 1215 of the housing 1210. For example, the protrusion 1305 may be disposed on an upper side of the movement inhibition portion 1080. For example, the protrusion 1305 may overlap the movement inhibition portion 1080 in the optical-axis direction. In addition, for example, the protrusion 1305 may overlap the first portion 1804A of the fourth substrate 1804 in the optical-axis direction. The protrusion 1305 may inhibit or prevent separation of the movement inhibition portion 1080, and may protect the movement inhibition portion 1080 and the fourth substrate 1804 from impact.

The cover member 1300 may include a boss (not shown) projecting from the upper plate 1301. In this case, the boss of the cover member 1300 may project from an inner surface of the upper plate 1301 of the cover member 1300 toward the bobbin 1110 or the rolling member 1021. For example, the boss of the cover member 1300 may be opposite or may overlap the receiving portion 1116 of the bobbin 1110 in the optical-axis direction. At least a part of the boss of the cover member 1300 may be inserted or disposed in the receiving portion 1116 of the bobbin 1110. The boss of the cover member 1300 may be disposed on the rolling member 1021. For example, the cover member 1300 may include a first boss (not shown) corresponding to, opposite, or overlapping the first rolling member 1021A or the first receiving portion 1116A of the bobbin 1110. For example, the cover member 1300 may include a second boss (not shown) corresponding to, opposite, or overlapping the second rolling member 1021B or the second receiving portion 1116B of the bobbin 1110. For example, the boss of the cover member 1300 may include a recess depressed from the upper surface of the upper plate 1301 of the cover member 330. In another embodiment, the boss of the cover member 1300 may include no recess. As the cover member 1300 is provided with the boss, the embodiment may prevent the rolling member 1021 from being separated from the receiving portion 1116 of the bobbin 1110. In addition, the boss of the cover member 1300 may serve as a stopper configured to prevent further movement of the bobbin 1110 within a limited range in the upward direction.

Next, the support unit will be described.

The support unit may be disposed between the sensor base 1270 and the housing 1210, and may support the sensor base 1270 with respect to the housing 1210. The support unit may include a moving plate 1060 disposed between the moving unit (e.g., the sensor base 1270) and the stationary unit (e.g., the housing 1210).

The moving plate 1060 may alternatively be referred to as a "driving plate," a "mover," a "mover plate," a "drive plate," a "plate," a "rotating plate," a "tilting plate," a "moving plate," or a "support plate."

The moving plate 1060 may be tiltable about the first axis or the second axis or rotatable by a predetermined angle. For example, the moving plate 1060 may be disposed between the lower portion (or the lower surface) of the sensor base 1270 and the lower portion 1042 of the housing 1210. For example, at least a part of the moving plate 1060 may be disposed in the seating portion 1069 of the housing 1210. Since the moving plate 1060 is disposed in the seating portion 1069 of the housing 1210, the length or height of the camera device 1200 in the optical-axis direction may be reduced.

Referring to FIGs. 19B, 24A, and 27, the moving plate 1060 may be in the form of a plate. For example, the length of the moving plate 1060 in a horizontal direction perpendicular to the optical axis (e.g., in the transverse direction or the longitudinal direction) may be greater than the length of the moving plate 1060 in the optical-axis direction.

Referring to FIGs. 24A and 24B, the moving plate 1060 may include a first boss 1065 coupled to or in contact with the sensor base 1270 and a second boss 1066 coupled to or in contact with the housing 1210. The first boss 1065 may be disposed on a first surface 1006A (e.g., an upper surface) of the moving plate 1060, and the second boss 1066 may be disposed on a second surface 1006B (or a lower surface) of the moving plate 1060, which is opposite the first surface 1006A. For example, the first boss 1065 may project from the first surface 1006A (e.g., the upper surface) of the moving plate 1060, and the second boss 1066 may project from the second surface 1006B (e.g., the lower surface) of the moving plate 1060.

The first boss 1065 may alternatively be referred to as an "upper boss" (or a "front boss") or a "first protrusion," and the second boss 1066 may alternatively be referred to as a "lower boss" (or a "rear boss") or a "second protrusion." The number of each of the first bosses 1065 and second bosses 1066 may be one, two, or three or more.

At least a part of the first boss 1065 may be disposed in the recess 1029 of the sensor base 1270. The first boss 1065 may include at least two bosses 1065A and 1065B. For example, the at least two bosses 1065A and 1065B may be disposed spaced apart from each other in the second direction. Each of the two bosses 1065A and 1065B may be inserted into and disposed in a corresponding one of the first and second recesses 1029A and 1029B of the sensor base 1270.

At least a part of the second boss 1066 may be disposed in the recess 1055 of the housing 1210. The second boss 1066 may include at least two bosses 1066A and 1066B. For example, the two bosses 1066A and 1066B may be disposed spaced apart from each other in the third direction. Each of the two bosses 1066A and 1066B may be inserted into and disposed in a corresponding one of the first and second recesses 1055A and 1055B of the housing 1210.

In another embodiment, the two bosses 1065A and 1065B may be disposed spaced apart from each other in the third direction, the first and second recesses 1029A and 1029B of the sensor base 1270 may be disposed spaced apart from each other in the third direction, the two bosses 1066A and 1066B may be disposed spaced apart from each other in the second direction, and the first and second recesses 1055A and 1055B of the housing 1210 may be disposed spaced apart from each other in the second direction.

For example, each of the first boss 1065 and the second boss 1066 may have, without being limited to, a curved shape, a hemispherical shape, a dome shape, or a polyhedral shape. For example, the shape of the first boss 1065 when viewed from front or above and the shape of the second boss 1066 when viewed from rear or below may be circular, oval, or polygonal.

The moving plate 1060 may include an opening 1060A corresponding to, opposite, or overlapping the magnet 1031 and/or the magnetic material 1032. For example, the opening 1060A may correspond to, may be opposite, or may overlap the protrusion 1049 of the housing 1210. The weight of the moving plate 1060 may be reduced by the opening 1060A, which may result in a lighter camera device 1200.

For example, the opening 1060A of the moving plate 1060 may be disposed at a position corresponding to the protrusion 1049 of the housing 1210 in order to avoid spatial interference with the protrusion 1049 of the housing 1210. In addition, the opening 1060A of the moving plate 1060 may be formed to avoid spatial interference with the magnet 1031 and the protrusion 1049 of the housing 1210.

For example, the opening 1060A of the moving plate 1060 may be a through-hole. For example, the opening 1060A may be formed through the moving plate 1060 in the first direction (the Z-axis direction) or the optical-axis direction. For example, at least a part of the opening 1060A of the moving plate 1060 may include a shape corresponding to the protrusion 1049 of the housing 1210. For example, the opening 1060A may include a circular shape, an oval shape, and a polygonal shape, such as a quadrangular shape.

For example, the transverse length of the opening 1060A of the moving plate 1060 may be greater than the transverse length of the protrusion 1049 of the housing 1210. In another embodiment, the transverse length of the opening 1060A may be equal to the transverse length of the protrusion 1049 of the housing 1210. The longitudinal length of the opening 1060A may be greater than the longitudinal length of the protrusion 1049 of the housing 1210. In another embodiment, the longitudinal length of the opening 1060A may be equal to the longitudinal length of the protrusion 1049 of the housing 1210.

At least a part of the protrusion 1049 of the housing 1210 may be disposed in the opening 1060A of the moving plate 1060. For example, the protrusion 1049 of the housing 1210 may overlap the opening 1060A of the moving plate 1060 in the optical-axis direction. In addition, for example, the protrusion 1049 of the housing 1210 may overlap the moving plate 1060 in a direction perpendicular to the optical-axis direction. This may reduce the length or height of the camera device 1200 in the optical-axis direction.

For example, at least a part of the opening 1060A may be disposed between the two bosses 1065A and 1065B of the first boss 1065 of the moving plate 1060. In addition, at least a part of the opening 1060A may be disposed between the bosses 1066A and 1066B of the second boss 1066 of the moving plate 1060.

For example, the moving plate 1060 may be made of an injection-molded material. For example, the moving plate 1060 may be made of a plastic, resin, or ceramic material. In another embodiment, the moving plate 1060 may comprise a metal, such as SUS. In addition, the moving plate 1060 may be made of a non-magnetic material. In another embodiment, the moving plate 1060 may be made of a magnetic material.

The bosses 1065A and 1065B of the first boss 1065 and the bosses 1066A and 1066B of the second boss 1066 may be disposed side by side in the direction in which the bosses 1065A and 1065B of the first boss 1065 and the bosses 1066A and 1066B of the second boss 1066 intersect or are perpendicular to each other. The OIS motion unit may be rotated, pivoted, or tilted relative to one of the second and third directions by the first boss 1065 of the moving plate 1060. The OIS motion unit may be rotated, pivoted, or tilted relative to the other of the second and third directions by the second boss 1066 of the moving plate 1060.

In another embodiment, at least one of the first boss 1065 and the second boss 1066 of the moving plate 1060 may be omitted, and a rolling member or a ball member may be disposed in place of the omitted boss.

For example, the moving plate 1060 may include a first recess formed in an upper surface of the moving plate 1060 in place of the first boss 1065 and a second recess formed in a lower surface of the moving plate 1060 in place of the second boss 1066, and the support unit may include a first rolling member (or a first ball member) disposed between the recess 1029 of the sensor base 1270 and the first recess of the moving plate 1060 and a second rolling member (or a second ball member) disposed between the second recess of the moving plate 1060 and the recess 1055 of the housing 1210. For example, the first recess of the moving plate 1060 may include two first recesses, the second recess of the moving plate 1060 may include two second recesses, the first rolling member may include two balls, and the second rolling member may include two balls. A description of the shape of the recess 1029 of the sensor base 1270 or the recess 1055 of the housing 1210 applied or analogically applied to the shape of the first and second recesses of the moving plate 1060.

A lubricant may be disposed on the first boss 1066 of the moving plate 1060 and in the recess 1029 of the sensor base 1270 or the second boss 1066 of the moving plate 1060 and in the recess 1055 of the housing 1210 in order to reduce frictional force and to protect the moving plate 1060.

The first boss 1065 of the moving plate 1060 may slide in the recess 1029 of the sensor base 1270, and the second boss 1066 may slide in the recess 1055 of the housing 1210. As a result, it is possible to reduce frictional force between the moving plate 1060 and the sensor base 1270 and/or frictional force between the moving plate 1060 and the housing 1210 and to reduce current consumption or power consumption necessary for OIS operation.

Referring to FIGs. 19D and 27, the rolling member 1021 may not overlap the moving plate 1060 in the optical-axis direction. For example, as shown in FIG. 19C, the rolling member 1021 may not overlap the moving plate 1060 in a direction perpendicular to the optical axis.

For example, the direction in which the first rolling member 1021A and the second rolling member 1021B are spaced apart from each other may be perpendicular to or may intersect the direction in which the boss 1065A and the boss 1065B of the moving plate 1060 are spaced apart from each other. In another embodiment, the former and the latter may be parallel to each other.

For example, the direction in which the first rolling member 1021A and the second rolling member 1021B are spaced apart from each other may be parallel to or may intersect the direction in which the boss 1066A and the boss 1066B of the moving plate 1060 are spaced apart from each other. In another embodiment, the former and the latter may be perpendicular to each other.

For example, when viewed from above, the distance between the boss 1065A and the boss 1065B of the moving plate 1060 may be less than the distance between the first rolling member 1021A and the second rolling member 1021B. In another embodiment, the distance between the boss 1065A and the boss 1065B of the moving plate 1060 may be equal to or greater than the distance between the first rolling member 1021A and the second rolling member 1021B.

For example, when viewed from above, the distance between the boss 1066A and the boss 1066B of the moving plate 1060 may be less than the distance between the first rolling member 1021A and the second rolling member 1021B. In another embodiment, the distance between the boss 1066A and the boss 1066B of the moving plate 1060 may be equal to or greater than the distance between the first rolling member 1021A and the second rolling member 1021B.

The support unit may include a magnetic material 1032 disposed on the OIS motion unit (e.g., the sensor base 1270) and a magnet 1031 disposed on the stationary unit (e.g., the housing 1210). In another embodiment, the magnetic material 1032 may be disposed on the stationary unit (e.g., the housing 1210), and the magnet 1031 may be disposed on the OIS motion unit (e.g., the sensor base 1270). The magnet 1031 may alternatively be referred to as a "magnetic material," a "yoke," or a "holding magnet."

For example, the magnet 1031 may be disposed in or coupled to the recess 1049A of the protrusion 1049 of the housing 1210. At least a part of the magnet 1031 may be disposed in the opening 1060A of the moving plate 1060. For example, the magnet 1031 may be opposite or may overlap the opening 1060A of the moving plate 1060 in the optical-axis direction. For example, the magnet 1031 may not overlap the moving plate 1060 in the optical-axis direction. In addition, for example, at least a part of the magnet 1031 may overlap the moving plate 1060 in a direction perpendicular to the optical axis.

The magnet 1031 may correspond to, may be opposite, or may overlap the magnetic material 1032 in the optical-axis direction. The magnet 1031 may be a two-pole magnet including an N pole and an S pole. For example, the magnet 1031 may be a two-pole magnet with an N pole and an S pole separated or disposed in the optical-axis direction. In another embodiment, the magnet 1031 may be a two-pole magnet with an N pole and an S pole separated or disposed in a direction perpendicular to the optical-axis direction. In another embodiment, the magnet 1031 may be a four-pole magnet including two N poles and two S poles.

The magnetic material 1032 may be disposed at an upper side of the magnet 1031. The magnetic material 1032 may be disposed in the recess 1028A of the sensor base 1270. For example, the magnetic material 1032 may be coupled to the recess 1028A of the sensor base 1270.

The magnetic material 1032 may overlap the opening 1060A of the moving plate 1060 in the optical-axis direction. The magnetic material 1032 may not overlap the moving plate 1060 in the optical-axis direction. The magnetic material 1032 may not overlap the moving plate 1060 in a direction perpendicular to the optical axis. In another embodiment, the magnetic material 1032 may overlap the moving plate 1060 in a direction perpendicular to the optical axis.

When viewed from above, the area of the opening 1060A of the moving plate 1060 may be greater than the area of the upper surface (or the lower surface) of the magnet 1031. In addition, when viewed from above, the area of the opening 1060A of the moving plate 1060 may be greater than the area of the upper surface (or the lower surface) of the magnetic material 1032.

For example, attractive force may act between the magnetic material 1032 and the magnet 1031 in the optical-axis direction (or the first direction). The magnetic material 1032 may be made of a material that is magnetic. For example, the magnetic material 1032 may be a metal material that is magnetic. Alternatively, the magnetic material 1032 may be made of a magnetic metal material. Alternatively, for example, the magnetic material 1032 may be a magnet. The magnetic material 1032 may alternatively be referred to as a "yoke."

The attractive force between the magnetic material 1032 and the magnet 1031 may cause the sensor base 1270 and the housing 1210 to press the moving plate 1060, and the first boss 1065 and the second boss 1066 of the moving plate 1060 may be brought into tight contact with the sensor base 1270 and/or the housing 1210. The moving plate 1060 may stably support the OIS motion unit with respect to the stationary unit due to the attractive force between the magnetic material 1032 and the magnet 1031, whereby stable OIS operation may be performed.

In addition, since at least a part of the magnet 1031 is disposed in the opening 1060A of the moving plate 1060, the distance between the magnet 1031 and the magnetic material 1032 may be reduced, which may increase the attractive force between the magnet 1031 and the magnetic material 1032, and the OIS motion unit may be stably supported with respect to the stationary unit.

In addition, since the magnet 1031 is disposed on a central region of the lower portion 1042 of the housing 1210 and the magnetic material 1032 is disposed on the center of the lower surface of the sensor base 1270, the attractive force between the magnet 1031 and the magnetic material 1032 may be concentrated on the center of the sensor base 1270 and the center of the housing 1210, which may efficiently and reliably support the OIS motion unit.

In another embodiment, the protrusion 1049 of the housing 1210 may be omitted, the magnet 1031 may be disposed on the upper surface of the lower portion 1042 of the housing 1210, the sensor base 1270 may include a protrusion protruding from the lower surface of the sensor base 1270 so as to correspond to, to be opposite, or to overlap the opening 1060A of the moving plate 1060, and the magnetic material 1032 may be disposed on the protrusion of the sensor base 1270. In this case, the seating portion 1069 of the housing 1210 may be omitted, a seating portion corresponding to or identical to the seating portion 1069 of the housing 1210 may be formed on the lower surface of the sensor base 1270, the moving plate 1060 may be disposed in the seating portion of the sensor base 1270, the protrusion may protrude from the bottom surface of the seating portion of the sensor base 1270, a recess in which the magnetic material 1032 is disposed may be formed in the protrusion of the sensor base 1270, and a recess in which the magnet 1031 is disposed may be formed in the lower portion 1042 of the housing 1210. In another embodiment, at least a part of the protrusion of the sensor base 1270 may be disposed in the opening 1060A of the moving plate 1060, and may overlap the moving plate 1060 in a direction perpendicular to the optical axis. Also, in another embodiment, the magnet 1031 may be disposed on the protrusion of the sensor base 1270 (or in the recess of the protrusion), and the magnetic material 1032 may be disposed on the lower portion 1042 of the housing 1210 (or in the recess of the lower portion 1042).

In another embodiment, the moving plate 1060 may be omitted, and the support unit may include a rolling member, such as a ball member, disposed between the sensor base 1270 and the housing 1210. In this case, the rolling member may include two first ball members disposed in a direction parallel to the first axis and two second ball members disposed in a direction parallel to the second axis, and the OIS motion unit may be tilted about the first ball members as an axis or may be rotated by a predetermined angle, and may be tilted about the second ball members as an axis or may be rotated by a predetermined angle, whereby a hand-tremor compensation operation may be performed.

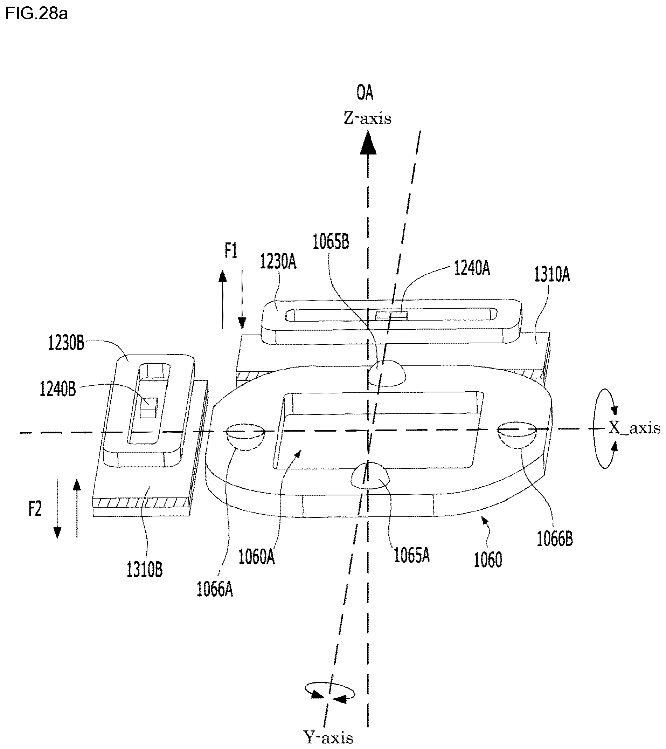

Referring to FIGs. 27 and 28A, in a direction in which the bosses 1065A and 1065B of the moving plate 1060 face each other, the first magnet unit 1310A may overlap the bosses 1065A and 1065B. In addition, in a direction in which the bosses 1066A and 1066B of the moving plate 1060 face each other, the second magnet unit 1310B may overlap the bosses 1066A and 1066B.

Referring to FIG. 19B, the moving plate 1060 may overlap the magnet 1310 in a direction perpendicular to the optical axis. For example, the first magnet unit 1310A may overlap the moving plate 1060 in the second direction, and the second magnet unit 1310B may overlap the moving plate 1060 in the third direction.

For example, the magnet 1310 may be disposed under the image sensor 1810. For example, the magnet 1310 may be disposed under the filter 1610. In addition, the magnet 1310 may be disposed under the magnetic material 1032. For example, the magnet 1310 may be located lower than the holder 1140. For example, the magnet 1310 may be disposed under the sensor base 1270. For example, an upper surface of the magnet 1310 may be located lower than the lower surface of the sensor base 1270. The upper surface of the magnet 1310 may be located lower than the lower surface of the holder 1140. The upper surface of the magnet 1310 may be located lower than a lower surface of the magnetic material 1032. For example, the magnet 1310 may be located lower than the rolling member 1021.

For example, the upper surface of the magnet 1310, e.g., the upper surfaces of the magnet units 1310A and 1310B, may be located lower than the upper surface of the magnet 1031. In another embodiment, the upper surface of the magnet 1310 may be located higher than the upper surface of the magnet 1031, or may have the same height as the upper surface of the magnet 1031.

For example, the upper surface of the magnet 1310, e.g., the upper surfaces of the magnet units 1310A and 1310B, may be located lower than the lower surface of the magnet 1031. In another embodiment, the upper surface of the magnet 1310 may be located higher than the lower surface of the magnet 1031, or may have the same height as the lower surface of the magnet 1031.

Referring to FIGs. 27 and 28A, the first length L1 of the first magnet unit 1310A in the second direction (the X-axis direction) may be less than the second length L2 of the first magnet unit 1310A in the third direction (the Y-axis direction).

For example, the first length L1 may be less than the length M2 of the moving plate 1060 in the second direction. For example, the first length L1 may be greater than the length M1 between an outer circumferential surface and an inner circumferential surface of the moving plate 1060 in the second direction. For example, M1 may be the shortest distance between the outer surface of the moving plate 1060 and the opening 1060A of the moving plate 1060 in the second direction. In another embodiment, L1 may be equal to or less than M1.

For example, the first length L1 may be less than the length M5 of the opening 1060A of the moving plate 1060 in the second direction. In addition, for example, the first length L1 may be less than the length of the protrusion 1049 of the housing 1210 in the second direction. In another embodiment, the first length L1 may be greater than or equal to the length of the opening 1060A of the moving plate 1060 in the second direction.

For example, the second length L2 may be less than the length M4 of the moving plate 1060 in the third direction. In another embodiment, the second length L2 may be greater than or equal to the length of the moving plate 1060 in the third direction.

For example, the second length L2 may be greater than the length M6 of the opening 1060A of the moving plate 1060 in the third direction. For example, the second length L2 may be greater than the length of the protrusion 1049 of the housing 1210 in the third direction. In another embodiment, the second length L2 may be less than or equal to the length M6 of the opening 1060A of the moving plate 1060 in the third direction.

Referring to FIGs. 27 and 28A, the third length L3 of the second magnet unit 1310B in the third direction (the Y-axis direction) may be less than the fourth length L4 of the second magnet unit 1310B in the second direction (the X-axis direction).

For example, the third length L3 may be less than the length M4 of the moving plate 1060 in the third direction. For example, the third length L3 may be greater than the length M3 between the outer circumferential surface and the inner circumferential surface of the moving plate 1060 in the third direction. For example, M3 may be the shortest distance between the outer surface of the moving plate 1060 and the opening 1060A of the moving plate 1060 in the third direction. In another embodiment, L3 may be equal to or less than M3.

For example, the third length L3 may be less than the length M6 of the opening 1060A of the moving plate 1060 in the third direction. In addition, for example, the third length L3 may be less than the length of the protrusion 1049 of the housing 1210 in the third direction. In another embodiment, the third length L3 may be greater than or equal to the length of the opening 1060A of the moving plate 1060 in the third direction.

For example, the fourth length L4 may be less than the length M2 of the moving plate 1060 in the second direction. In another embodiment, the fourth length L4 may be greater than or equal to the length of the moving plate 1060 in the second direction.

For example, the fourth length L4 may be greater than the length M5 of the opening 1060A of the moving plate 1060 in the second direction. For example, the fourth length L4 may be greater than the length of the protrusion 1049 of the housing 1210 in the second direction. In another embodiment, the fourth length L4 may be less than or equal to the length of the opening 1060A of the moving plate 1060 in the second direction.

For example, the third length L3 may be equal to the first length L1. In another embodiment, L3 may be less than or greater than L1. For example, the second length L2 may be equal to the fourth length L4. In another embodiment, L2 may be less than or greater than L4.

For example, the upper surface of the magnet 1310 may be located lower than the upper surface of the protrusion 1049 of the housing 1210. This is to ensure that there is sufficient space to avoid spatial interference between the magnet 1310 and the lower surface of the sensor base 1270.

In another embodiment, the upper surface of the magnet 1310 may be located higher than the upper surface of the protrusion 1049 of the housing 1210. In another embodiment, the upper surface of the magnet 1310 and the upper surface of the protrusion 1049 of the housing 1210 may have the same height.

For example, the upper surface of the magnet 1310 may be located lower than the highest point of the boss 1065 of the moving plate 1060.

When viewed from above or when viewed in the optical-axis direction, the bosses 1065A and 1065B, the magnet 1031, and the first magnet unit 1310A may overlap each other in the second direction. When viewed from above or when viewed in the optical-axis direction, the bosses 1066A and 1066B, the magnet 1031, and the second magnet unit 1310B may overlap each other in the third direction.

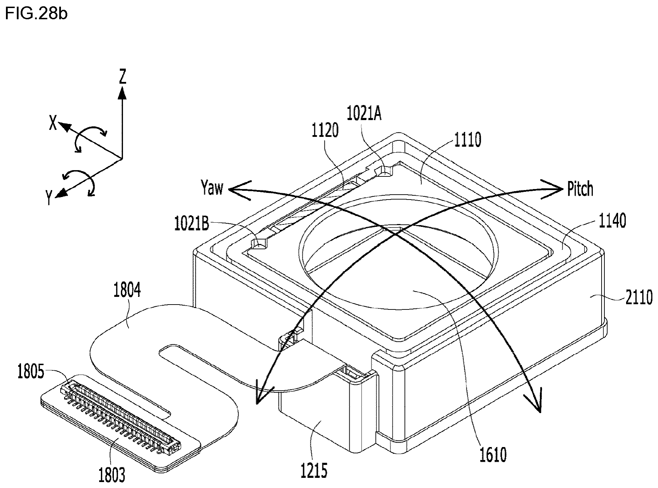

FIG. 28A is a view illustrating electromagnetic forces F1 and F2 due to interaction between the magnet units 1310A and 1310B and the coil units 1230A and 1230B and the motion of the moving plate 1060, and FIG. 28B shows the motion of the OIS motion unit 1100 due to the electromagnetic forces of FIG. 28A. FIG. 28A shows electromagnetic force when each of the first and second magnet units 1310A and 1310B is a two-pole magnet having an N pole and an S pole.

The motion of the OIS motion unit by an OIS operation unit will be described with reference to FIGs. 28A and 28B. The OIS operation unit may include a coil 1230 and a magnet 1310. In addition, the OIS operation unit may include a position sensor 1240.

First electromagnetic force F1 may be generated by interaction between the first magnet unit 1310A and the first coil unit 1230A. For example, the first electromagnetic force F1 may be exerted in the optical-axis direction, such as the upward direction or the downward direction.

The OIS motion unit may be tilted about the second axis (e.g., the Y-axis) (or the second boss 1066) by the first electromagnetic force F1. For example, the OIS motion unit may be second-axis tilted by the first electromagnetic force F1. Here, second-axis (Y-axis) tilting means that the OIS motion unit is tilted about the second axis (the Y-axis) or the OIS motion unit is rotated leftward and rightward about the second axis (the Y-axis) by a predetermined angle.

For example, the moving plate 1060 may be tilted about the second axis (e.g., the Y-axis) (or the bosses 1066A and 1066B of the second boss 1066) by the first electromagnetic force F1. For example, the moving plate 1060 may be second-axis tilted by the first electromagnetic force F1.

Referring to FIG. 19B, a gap or space may be present between the moving plate 1060 and the OIS motion unit (e.g., the sensor base 1270) by the first boss 1065 of the moving plate 1060 in order for the OIS motion unit to be tilted about the second axis (or the second boss 1066 of the moving plate 1060). For example, a gap or space in which the moving plate 1060 is movable may be present between the upper surface 1006A of the moving plate 1060 and the OIS motion unit (e.g., the sensor base 1270). For example, the upper surface 1006A of the moving plate 1060 may be spaced apart from the OIS motion unit (e.g., the sensor base 1270) or the lower surface of the sensor base 1270.

Second electromagnetic force F2 may be generated by interaction between the second magnet unit 1310B and the second coil unit 1230B. For example, the second electromagnetic force F2 may be exerted in the upward direction or the downward direction.

The OIS motion unit may be tilted about the first axis (e.g., the X-axis) (or the ball member 1062) by the second electromagnetic force F2. For example, the OIS motion unit may be first-axis tilted by the second electromagnetic force F2. Here, first-axis (X-axis) tilting means that the OIS motion unit is tilted about the first axis (the X-axis) or the OIS motion unit is rotated leftward and rightward about the first axis (the X-axis) by a predetermined angle.

For example, the moving plate 1060 may be tilted about the first axis (e.g., the X-axis) (or the ball member 1062) by the second electromagnetic force F2. For example, the moving plate 1060 may be first-axis tilted by the second electromagnetic force F2.

Referring to FIGs. 19A and 28A, a gap or space may be present between the moving plate 1060 and the moving unit by the first boss 1065 of the moving plate 1060 in order for the OIS motion unit to be tilted about the first axis.

For example, a gap or space may be present between the upper surface 1006A of the moving plate 1060 and the lower surface of the moving unit (e.g., the sensor base 1270). For example, the upper surface 1006A of the moving plate 1060 may be spaced apart from the upper surface of the sensor base 1270.

For example, the moving plate 1060 may be brought into contact with the moving unit (e.g., the sensor base 1270) or the stationary unit (e.g., the housing 1210) by first-axis or second-axis tilting. At this time, the moving unit or the stationary unit may serve as a stopper configured to inhibit tilting of the OIS motion unit.

In another embodiment, the first electromagnetic force due to the interaction between the first magnet unit and the first coil unit and the second electromagnetic force due to the interaction between the second magnet unit and the second coil unit may act in a direction different from the optical axis (e.g., a direction perpendicular to the optical axis, e.g., the X-axis direction or the Y-axis direction).

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation or shake compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS operation unit may tilt the OIS motion unit about the first axis or the second axis or may rotate the OIS motion unit within a predetermined angular range. In the embodiment, since the OIS motion unit includes a lens module 1400 and an image sensor 1810, the tilting direction (or the rotating direction) and the tilting angle (or the rotating angle) of the lens module 1400 (e.g., a lens or a lens barrel) (or the bobbin 1110) may be the same or nearly the same as the tilting direction (or the rotating direction) and the tilting angle (or the rotating angle) of the image sensor 1810 when OIS is performed.

In the embodiment, the lens module 1400 (or the bobbin 1110) and the image sensor 1810 may be simultaneously tilted or rotated together when OIS is performed, 100% image resolution without image distortion may be obtained, and hand-tremor compensation or shake compensation at wide angles may be possible.

Also, in the embodiment, since the OIS motion unit including the lens module 1400 (or the bobbin 1110) and the image sensor 1810 is tilted or rotated, broadband shake compensation may be possible. Also, in the embodiment, since distortion-free image compensation is mechanically possible, load during image processing may be low, whereby current consumption may be reduced, when compared to Comparative Example 1 and Comparative Example 2.

Also, in the embodiment, since the moving plate 1060 is used to tilt the OIS motion unit, the OIS motion unit may be stably, precisely, and accurately tilted, when compared to an example using only a ball member or a shaft member, thereby improving the reliability of OIS operation.

Also, in the embodiment, power consumption required to perform OIS may be reduced by the bent portions 1804D and 1804E and the third portion 1804C of the fourth substrate 1804, which is a flexible substrate, of the circuit board 1800.

Also, in the embodiment, since the moving plate 1060 is disposed in the seating portion 1069 of the housing 1210 and the protrusion 1049 of the housing 1210 overlaps the opening 1060A of the moving plate 1060, the height or length of the camera device 1200 in the optical-axis direction may be reduced.

Also, in the embodiment, since at least a part of the magnet 1031 is disposed in the opening 1060A of the moving plate 1060, the distance between the magnet 1031 and the magnetic material 1032 may be reduced, which may increase attraction force or retention force necessary to support the OIS motion unit, whereby stable OIS operation may be performed.

Also, in the embodiment, since the first magnet unit 1310A and the second magnet unit 1310B, which are driving magnets for hand-tremor compensation, are disposed on the lower portion 1042 of the housing 1210 rather than on the side portions 1071A to 1071D of the housing 1210, the thickness of the side portions 1071A to 1071D of the housing 1210 (or the length thereof in a direction perpendicular to the optical axis) may be reduced, thereby enabling the camera apparatus to be designed for mounting a large-aperture lens.

For example, each of the transverse length and the longitudinal length of the camera device 1200 according to the embodiment may be 12 mm to 23 mm, and the height of the camera device 1200 may be 4 mm to 12 mm. For example, the transverse length and the longitudinal length of the camera device 1200 may be the transverse length and the longitudinal length of the cover member 1300, and the height of the camera device 1200 may be the distance from the lower surface of the housing 1210 to the upper surface of the upper plate of the cover member 1300. The lens mounted in the camera device 1200 may have an aperture of 9 mm to 19 mm. In another embodiment, the lens mounted in the camera device 1200 may have an aperture of 9 mm to 15 mm. If the lens has an aperture greater than 19 mm, the size of the coil 1120 and the magnet 1130 may be constrained to the extent that the coil 1120 and the magnet 1130 cannot be disposed or are not sufficient to perform AF.

Furthermore, if the driving magnet for hand-tremor compensation is disposed on the side portion of the housing 1210, the length of the camera device 1200 in the optical-axis direction may be constrained due to the length of the driving magnet in the optical-axis direction. In the embodiment, however, the driving magnet 1310 is disposed on the lower portion 1042 of the housing 1210, whereby it is possible to design the camera device 1200 such that the length of the camera device 1200 in the optical-axis direction is reduced without being constrained by the length of the driving magnet in the optical-axis direction. Also, in the embodiment, the driving magnet 1310 is disposed on the seating portions 1141A and 1141B of the housing 1210, whereby it is possible to further reduce the length of the camera device 1200 in the optical-axis direction.

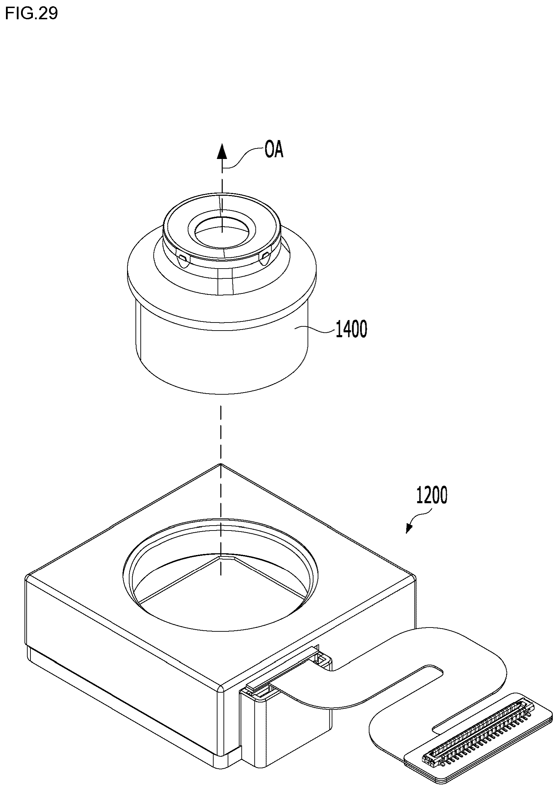

FIG. 29 is a perspective view of the camera device 1200 including the lens module 1400.

Referring to FIG. 29, the lens module 1400 may be coupled to the bobbin 100, and may be moved with the bobbin 1110 in the optical-axis direction. For example, the lens module 1400 may include at least one of a lens and a lens barrel.

In the embodiment, the lens module 1400 and image sensor 1810 may be simultaneously X-axis tilted or Y-axis tilted in the same direction and by the same angle during hand-tremor compensation or shake compensation.

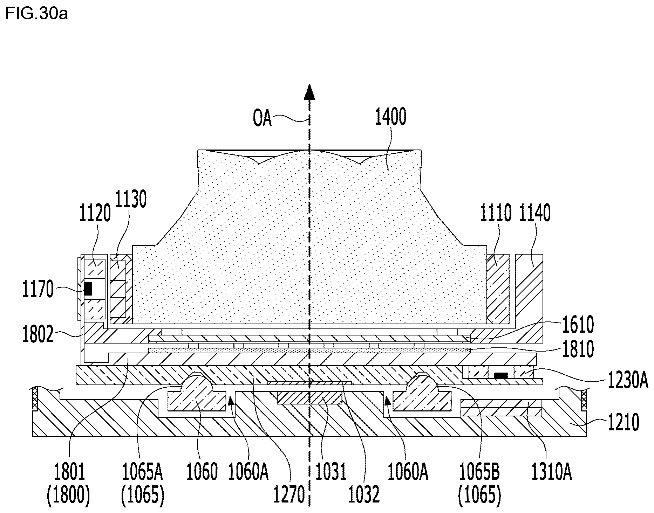

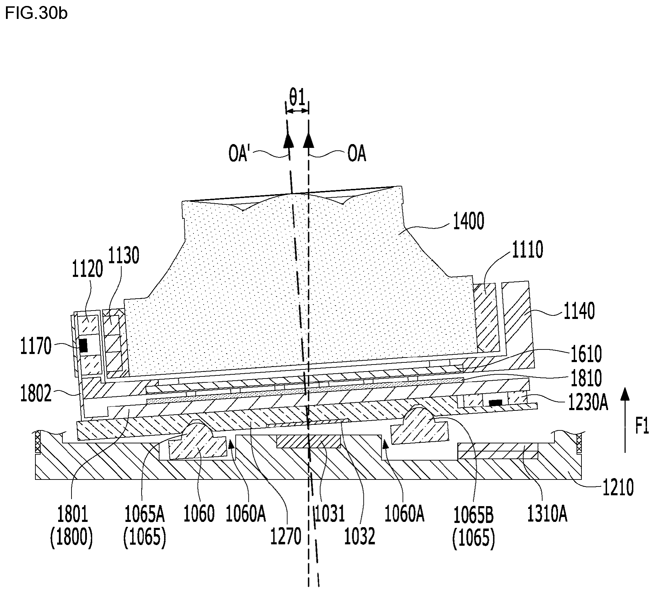

FIG. 30A shows a first position of the OIS motion unit 1100, and FIG. 30B shows a second position of the OIS motion unit 1100.

Referring to FIGs. 28A, 30A, and 30B, the OIS motion unit 1100 may be tilted by a predetermined angle θ1 by force F1 due to interaction between the first magnet unit 1310A and the first coil unit 1230A. That is, when the OIS motion unit 1100 is moved from the first position to the second position, both the image sensor 1810 and the lens module 1400 may be tilted simultaneously by the predetermined angle θ1. In addition, when the OIS motion unit 1100 is moved from the first position to the second position, the moving plate 1060 may be tilted by the predetermined angle θ1 together with the image sensor 1810 and the lens module 1400.

As a result, in the embodiment, it is possible to obtain 100% image resolution without image distortion and to perform hand-tremor compensation or shake compensation at wide angles. A description of FIGs. 30A and 30B may be applied or analogically applied to X-axis tilting of the OIS motion unit 1100.

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

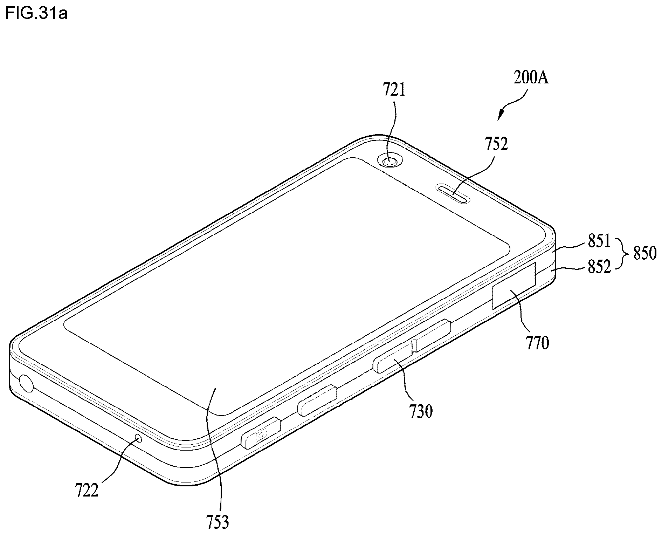

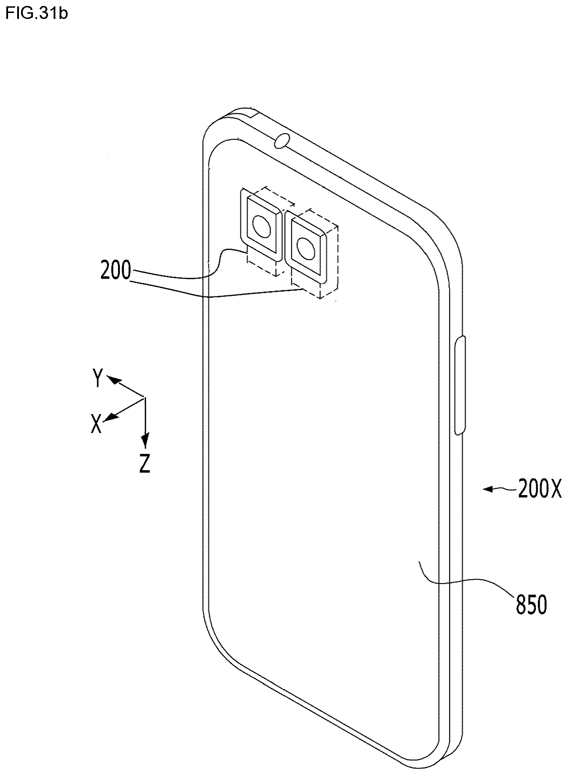

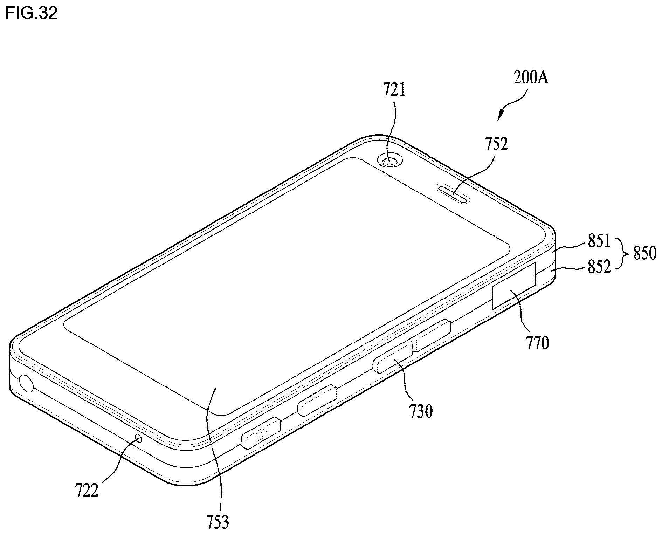

FIG. 31A is a perspective view of an optical instrument 200A according to an embodiment, FIG. 31B is a perspective view of an optical instrument 200X according to another embodiment, and FIG. 32 is a block diagram of the optical instrument 200A shown in FIGs. 31A and 31B.

For example, the embodiment of FIG. 31A may include a front camera in which a lens module 400 or 1400 of a camera module 200 or 1200 is disposed so as to face the front of a body 850, and the embodiment of FIG. 31B may include a rear camera in which a lens module 400 or 1400 of a camera module 200 or 1200 is disposed to face the rear of a body 850 of the optical instrument 200X. FIG. 31B shows an example in which two rear cameras are disposed, but in another embodiment, one or more rear cameras may be disposed. In another embodiment, the camera module 200 or 1200 may be used in both the front camera and the rear camera.

Referring to FIGs. 31A, 31B, and 32, the optical instrument 200A (or a "portable terminal") may include a body 850, a wireless communication unit 710, an A/V input unit 720, a sensing unit 740, an input/output unit 750, a memory 760, an interface unit 770, a controller 780, and a power supply unit 790.

The body 850 may have a bar shape, without being limited thereto, and may be any of various types such as, for example, a slide type, a folder type, a swing type, or a swivel type, in which two or more sub-bodies are coupled so as to be movable relative to each other.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals, and may include a camera 721 and a microphone 722.

The camera 721 may include the camera device 200 or 1200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensor serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. For example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal reception mode, a call mode, a recording mode, a voice recognition mode, or a broadcast reception mode, or may output audio data stored in the memory 760.

The touchscreen panel 753 may convert variation in capacitance, caused by a user's touch on a specific region of a touchscreen, into electrical input signals.

The memory 760 may store programs for processing and control of the controller 780, and may temporarily store input/output data (e.g., a phone book, messages, audio, still images, pictures, and moving images). For example, the memory 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data in the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

The embodiments are applicable to camera device and optical device which are capable of obtaining 100% image resolution without image distortion and performing hand-tremor compensation or shake compensation at wide angles.

## Claims

1. A camera device comprising:
a stationary unit;
a moving plate disposed on the stationary unit;
a first moving unit disposed on the moving plate, the first moving unit comprising an image sensor;
a second moving unit disposed in the first moving unit, the second moving unit being movable in an optical-axis direction;
a ball member disposed between the first moving unit and the second moving unit, the ball member being configured to support the second moving unit; and
a first driving unit configured to tilt the first moving unit and the second moving unit about a first axis perpendicular to the optical-axis direction or a second axis perpendicular to the optical-axis direction and the first axis.

2. The camera device according to claim 1, wherein the first moving unit comprises a holder,
the second moving unit comprises a bobbin disposed in the holder, and
the ball member is disposed between the holder and the bobbin.

3. The camera device according to claim 1, wherein
the holder comprises a first recess in which at least a part of the ball member is disposed, and
the bobbin comprises a second recess in which at least another part of the ball member is disposed.

4. The camera device according to claim 2, comprising a second driving unit comprising a magnet disposed on the bobbin and a coil configured to move the bobbin in the optical-axis direction by interaction with the magnet.

5. The camera device according to claim 4, wherein the ball member comprises a first ball member and a second ball member, and
the magnet is disposed between the first ball member and the second ball member.

6. The camera device according to claim 2, wherein
the first moving unit comprises:
a sensor base disposed under the holder; and
a circuit board disposed on the sensor base, and
the image sensor is disposed on the circuit board.

7. The camera device according to claim 6, comprising:
a first rolling member disposed between the sensor base and the moving plate; and
a second rolling member disposed between the stationary unit and the moving plate.

8. The camera device according to claim 6, comprising:
a magnet disposed on the sensor base; and
a magnetic material disposed on the stationary unit, the magnetic material being opposite the magnet in the optical-axis direction.

9. The camera device according to claim 8, wherein the moving plate comprises a through-hole, and
at least a part of the magnet is disposed in the through-hole of the moving plate.

10. The camera device according to claim 9, wherein the sensor base comprises a protrusion at least partially disposed in the through-hole of the moving plate, and
the magnet is disposed in the protrusion of the sensor base.
